(19) **Europäisches Patentamt European Patent Office Office européen des brevets**

(11) **EP 4 750 212 A1**

(12) **EUROPEAN PATENT APPLICATION**
published in accordance with Art. 153(4) EPC

(43) Date of publication:
27.05.2026 Bulletin 2026/22

(21) Application number: 24843535.6

(22) Date of filing: 18.07.2024

(51) International Patent Classification (IPC):
H04W 74/0816 (2024.01)    H04W 76/15 (2018.01)
H04W 84/12 (2009.01)    H04L 5/00 (2006.01)
H04W 76/11 (2018.01)    H04W 72/52 (2023.01)
H04W 74/04 (2009.01)

(52) Cooperative Patent Classification (CPC):
H04L 5/00; H04W 72/52; H04W 74/04;
H04W 74/0816; H04W 76/11; H04W 76/15;
H04W 84/12

(86) International application number:
PCT/KR2024/010400

(87) International publication number:
WO 2025/018821 (23.01.2025 Gazette 2025/04)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 18.07.2023 KR 20230093455
25.07.2023 KR 20230096726
19.10.2023 KR 20230140574

(71) Applicant: **Wilus Institute of Standards and Technology Inc.**
**Gyeonggi-do 13595 (KR)**

(72) Inventors:
• **KIM, Sanghyun**
**Seongnam-si Gyeonggi-do 13595 (KR)**
• **SON, Juhyung**
**Seongnam-si Gyeonggi-do 13595 (KR)**
• **KWAK, Jinsam**
**Seongnam-si Gyeonggi-do 13595 (KR)**

(74) Representative: **Schmitt-Nilson Schraud Waibel Wohlfrom**
**Patentanwälte Partnerschaft mbB**
**Pelkovenstraße 143**
**80992 München (DE)**

(54) **METHOD FOR TRANSMITTING AND RECEIVING DATA IN WIRELESS COMMUNICATION SYSTEM, AND WIRELESS COMMUNICATION TERMINAL USING SAME**

(57) Disclosed are a method and a device for operating a wireless communication terminal. Specifically, the wireless communication terminal according to the present invention may receive a first physical layer protocol data unit (PPDU) through a main channel (primary link) and perform clear channel assessment (CCA) in the main channel on the basis of the received PPDU. Thereafter, the terminal may perform a channel access procedure in a specific sub-channel among a plurality of sub-channels (non-primary channels) on the basis of a result of the CCA. In this case, if it is determined that a state of the main channel is busy as the result of the CCA and the first PPDU is transmitted from an overlapping basic service set (OBSS), the channel access procedure may be performed through the specific sub-channel.

FIG. 3

Processed by Luminess, 75001 PARIS (FR)

**Description**

**Technical Field**

The present disclosure relates to a channel access procedure in an overlapping operating channel.

**Background Art**

In recent years, with supply expansion of mobile apparatuses, a wireless LAN technology that can provide a rapid wireless s Internet service to the mobile apparatuses has been significantly spotlighted. The wireless LAN technology allows mobile apparatuses including a smart phone, a smart pad, a laptop computer, a portable multimedia player, an embedded apparatus, and the like to wirelessly access the Internet in home or a company or a specific service providing area based on a wireless communication technology in a short range.

Institute of Electrical and Electronics Engineers (IEEE) 802.11 has commercialized or developed various technological standards since an initial wireless LAN technology is supported using frequencies of 2.4 GHz. First, the IEEE 802.11b supports a communication speed of a maximum of 11 Mbps while using frequencies of a 2.4 GHz band. IEEE 802.11a which is commercialized after the IEEE 802.11b uses frequencies of not the 2.4 GHz band but a 5 GHz band to reduce an influence by interference as compared with the frequencies of the 2.4 GHz band which are significantly congested and improves the communication speed up to a maximum of 54 Mbps by using an OFDM technology. However, the IEEE 802.11a has a disadvantage in that a communication distance is shorter than the IEEE 802.11b. In addition, IEEE 802.11g uses the frequencies of the 2.4 GHz band similarly to the IEEE 802.11b to implement the communication speed of a maximum of 54 Mbps and satisfies backward compatibility to significantly come into the spotlight and further, is superior to the IEEE 802.11a in terms of the communication distance.

Moreover, as a technology standard established to overcome a limitation of the communication speed which is pointed out as a weak point in a wireless LAN, IEEE 802.11n has been provided. The IEEE 802.11n aims at increasing the speed and reliability of a network and extending an operating distance of a wireless network. In more detail, the IEEE 802.11n supports a high throughput (HT) in which a data processing speed is a maximum of 540 Mbps or more and further, is based on a multiple inputs and multiple outputs (MIMO) technology in which multiple antennas are used at both sides of a transmitting unit and a receiving unit in order to minimize a transmission error and optimize a data speed. Further, the standard can use a coding scheme that transmits multiple copies which overlap with each other in order to increase data reliability.

As the supply of the wireless LAN is activated and further, applications using the wireless LAN are diversified, the need for new wireless LAN systems for supporting a higher throughput (very high throughput (VHT)) than the data processing speed supported by the IEEE 802.11n has come into the spotlight. Among them, IEEE 802.11ac supports a wide bandwidth (80 to 160 MHz) in the 5 GHz frequencies. The IEEE 802.11ac standard is defined only in the 5 GHz band, but initial 11ac chipsets will support even operations in the 2.4 GHz band for the backward compatibility with the existing 2.4 GHz band products. Theoretically, according to the standard, wireless LAN speeds of multiple stations are enabled up to a minimum of 1 Gbps and a maximum single link speed is enabled up to a minimum of 500 Mbps. This is achieved by extending concepts of a wireless interface accepted by 802.11n, such as a wider wireless frequency bandwidth (a maximum of 160 MHz), more MIMO spatial streams (a maximum of 8), multi-user MIMO, and high-density modulation (a maximum of 256 QAM). Further, as a scheme that transmits data by using a 60 GHz band instead of the existing 2.4 GHz/5 GHz, IEEE 802.1 1ad has been provided. The IEEE 802.11ad is a transmission standard that provides a speed of a maximum of 7 Gbps by using a beamforming technology and is suitable for high bit rate moving picture streaming such as massive data or non-compression HD video. However, since it is difficult for the 60 GHz frequency band to pass through an obstacle, it is disadvantageous in that the 60 GHz frequency band can be used only among devices in a short-distance space.

As a wireless LAN standard after 802.11ac and 802.11ad, the IEEE 802.11ax (high efficiency WLAN, HEW) standard for providing a high-efficiency and high-performance wireless LAN communication technology in a high-density environment, in which APs and terminals are concentrated, is in the development completion stage. In an 802.11ax-based wireless LAN environment, communication with high frequency efficiency should be provided indoors/outdoors in the presence of high-density stations and access points (APs), and various technologies have been developed to implement the same.

In order to support new multimedia applications, such as high-definition video and real-time games, the development of a new wireless LAN standard has begun to increase a maximum transmission rate. In IEEE 802.11be (extremely high throughput, EHT), which is a 7th generation wireless LAN standard, development of standards is underway aiming at supporting a transmission rate of up to 30Gbps via a wider bandwidth, an increased spatial stream, multi-AP cooperation, and the like in a 2.4/5/6 GHz band

Recently, discussions have begun on ultra-high reliability (UHR) wireless LAN communication technology as a wireless LAN standard following 802.11be, in order to overcome the reliability issue that has been pointed out as a limit of wireless LANs. The UHR wireless LAN standard is under development with the goal of supporting low latency and low jitter in wireless LAN traffic with a high probability (e.g., 99.9999% or higher).

## Disclosure of Invention

### Technical Problem

An aspect of the present disclosure is to provide a method for improving channel accessibility to an overlapping channel.

In addition, another aspect of the present disclosure is to provide a method for performing a channel access procedure through a non-primary channel other than a primary channel when the primary channel is in a busy state.

The technical tasks to be achieved by the present specification are not limited to the above-described technical tasks, and other technical tasks which are not mentioned herein will be clearly understood by those skilled in the art to which the present disclosure belongs from the following description.

### Solution to Problem

In a non-access point (AP) multi-link device (MLD) including a plurality of stations according to the present disclosure, a processor receives a first physical layer protocol data unit (PPDU) through a primary channel (primary link), performs clear channel assessment (CCA) in the primary channel, based on the first PPDU, and performs a channel access procedure in a specific non-primary channel among a plurality of non-primary channels, based on a result of the CCA, and when a state of the primary channel is determined to be busy as the result of the CCA and the first PPDU is transmitted from an overlapping basic service set (OBSS), the channel access procedure is performed through the specific non-primary channel.

In the present disclosure, the processor receives a second PPDU through the specific non-primary channel after the channel access procedure, the preamble of the first PPDU includes a length field related to a length of the first PPDU, and when the channel access procedure is performed through the specific non-primary channel, a length of the second PPDU is equal to or shorter than the length of the first PPDU.

In the present disclosure, the preamble of the first PPDU includes a TXOP field related to a length of a first transmission opportunity (TXOP) based on the first PPDU, and a length of a second TXOP obtained by the channel access procedure through the specific non-primary channel is equal to or shorter than the length of the first TXOP.

In the present disclosure, when a state of the primary channel is busy as the result of the CCA, the wireless communication terminal performs an operation for the channel access procedure in the specific non-primary channel for a predetermined period of time.

In the present disclosure, a first operating channel of the primary channel and a second operating channel of the specific non-primary channel partially or entirely overlap.

In the present disclosure, the processor transmits a specific frame to a receiving device after the channel access procedure, and the specific frame is transmitted first after the channel access procedure, and has a preconfigured format.

In the present disclosure, the processor receives a second PPDU through the specific non-primary channel after the channel access procedure, and when the second PPDU occupies both the primary channel and the specific non-primary channel, a resource unit allocation subfield included in the second PPDU is differently determined depending on whether a channel through which a transmitting device transmitting the second PPDU has performed channel access is the primary channel or the specific non-primary channel.

In the present disclosure, when the channel access of the transmitting device is performed through the primary channel, a position of a resource unit allocated by the resource unit allocation subfield is identified based on the primary channel, rather than the specific non-primary channel.

The present disclosure provides a method including: receiving a first physical layer protocol data unit (PPDU) through a primary channel (primary link); performing clear channel assessment (CCA) in the primary channel, based on the first PPDU; and performing a channel access procedure in a specific non-primary channel among a plurality of non-primary channels, based on a result of the CCA, wherein when a state of the primary channel is determined to be busy as the result of the CCA and the first PPDU is transmitted from an overlapping basic service set (OBSS), the channel access procedure is performed through the specific non-primary channel.

### Advantageous Effects of Invention

An embodiment of the present disclosure has an effect of efficiently performing channel access in an environment in which operating channels overlap.

According to the present disclosure, an MLD may perform channel access through a plurality of BSSs operating in an overlapping operating channel, thereby obtaining a channel access right through a primary channel of another BSS even though a primary channel of a specific BSS among the plurality of BSSs is occupied by another device.

According to an embodiment of the present disclosure, when a primary channel is in a busy state, a channel access procedure may be performed through a non-primary channel.

The effects obtainable in the present invention are not limited to the above-mentioned effects, and other effects that are not mentioned may be clearly understood by those skilled in the art to which the present invention belongs, from descriptions below.

## Brief Description of Drawings

FIG. 1 illustrates a wireless LAN system according to an embodiment of the present invention.

FIG. 2 illustrates a wireless LAN system according to another embodiment of the present invention.

FIG. 3 illustrates a configuration of a station according to an embodiment of the present invention.

FIG. 4 illustrates a configuration of an access point according to an embodiment of the present invention.

FIG. 5 schematically illustrates a process in which a STA and an AP set a link.

FIG. 6 illustrates a carrier sense multiple access (CSMA)/collision avoidance (CA) method used in wireless LAN communication.

FIG. 7 illustrates physical layer protocol data unit (PPDU) formats of various standard generations according to an embodiment of the present disclosure.

FIG. 8 illustrates an EHT/UHR PPDU format according to an embodiment of the present disclosure.

FIG. 9 illustrates a transmission/TXOP protection method using an RTS frame and a CTS frame according to an embodiment of the present disclosure.

FIG. 10 illustrates a transmission/TXOP protection method using an MU-RTS frame and a CTS frame according to an embodiment of the present disclosure.

FIG. 11 illustrates a mapping table of a user priority and an access category.

FIG. 12 illustrates an example of a channel access procedure through a non-primary channel when a primary channel is busy.

FIG. 13 illustrates an embodiment of a restriction on the transmission length of a PPDU transmitted after channel access is performed through a non-primary channel.

FIG. 14 illustrates an embodiment of a method for restricting the length of a TXOP obtained through channel access through a non-primary channel.

FIG. 15 illustrates a method in which an AP that obtains a TXOP through a primary channel and a non-primary channel manages a primary operating channel according to an embodiment of the present disclosure.

FIG. 16 illustrates the configuration of an AP MLD including a primary AP and an auxiliary AP having an overlapping operating channel and a method for configuring an operating channel according to an embodiment of the present disclosure.

FIG. 17 illustrates an example of a procedure in which an AP MLD obtains a TXOP by using a primary BSS and an auxiliary BSS according to an embodiment of the present disclosure.

FIG. 18 illustrates an example of the format of an RNR element transmitted by an AP MLD to indicate an auxiliary AP according to an embodiment of the present disclosure.

FIG. 19 illustrates a method in which a channel switch of an auxiliary BSS is indicated/performed together when a channel switch of a primary BSS is performed according to an embodiment of the present disclosure.

FIG. 20 illustrates the configuration of an AP MLD including a primary AP and an auxiliary AP having contiguous operating channels and a method for configuring an operating channel according to an embodiment of the present disclosure.

FIG. 21 illustrates a channel access method of an MLD that operates a STA on two links with contiguous operating channels according to an embodiment of the present disclosure.

FIG. 22 illustrates an embodiment of a Resource Unit Allocation subfield indicated through a preamble of a PPDU, a method for performing resource unit allocation to each STA by using a Resource Unit Allocation subfield, and a method for indicating a content channel.

FIG. 23 illustrates an ambiguity in interpreting an allocated RU for a STA that receives a preamble through a non-primary channel.

FIG. 24 illustrates a method for an AP having performed channel access through a non-primary channel to indicate the BW and RU allocation information of a PPDU according to an embodiment of the present disclosure.

FIG. 25 illustrates an embodiment of a transmission/TXOP protection method using an MU-RTS frame and a CTS frame.

FIG. 26 illustrates the format of a trigger frame.

FIG. 27 illustrates an example of the format of a Common Info field of a trigger frame.

FIG. 28 illustrates an example of the format of a User Info field of a trigger frame.

FIG. 29 is a flowchart illustrating an example of a channel access procedure performed by a terminal according to an embodiment of the present disclosure.

## Mode for Carrying out the Invention

Terms used in the specification adopt general terms which are currently widely used by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

Throughout this specification and the claims that follow, when it is described that an element is "coupled" to another element, the element may be "directly coupled" to the other element or "electrically coupled" to the other element through a third element. Further, unless explicitly described to the contrary, the word "comprise" and variations such as "comprises" or "comprising", will be understood to imply the inclusion of stated elements but not the exclusion of any other elements. Moreover, limitations such as "or more" or "or less" based on a specific threshold may be appropriately substituted with "more than" or "less than", respectively.

Hereinafter, in the present invention, a field and a subfield may be interchangeably used.

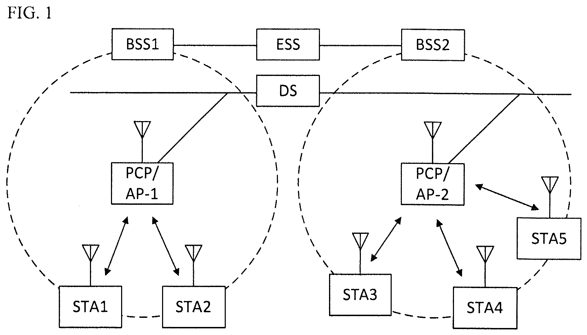

FIG. 1 illustrates a wireless LAN system according to an embodiment of the present invention.

FIG. 1 is a diagram illustrating a wireless LAN system according to an embodiment of the present invention. The wireless LAN system includes one or more basic service sets (BSS) and the BSS represents a set of apparatuses which are successfully synchronized with each other to communicate with each other. In general, the BSS may be classified into an infrastructure BSS and an independent BSS (IBSS) and FIG. 1 illustrates the infrastructure BSS between them.

As illustrated in FIG. 1, the infrastructure BSS (BSS1 and BSS2) includes one or more stations STA1, STA2, STA3, STA4, and STA5, access points AP-1 and AP-2 which are stations providing a distribution service, and a distribution system (DS) connecting the multiple access points AP-1 and AP-2.

The station (STA) is a predetermined device including medium access control (MAC) following a regulation of an IEEE 802.11 standard and a physical layer interface for a wireless medium, and includes both a non-access point (non-AP) station and an access point (AP) in a broad sense. Further, in the present specification, a term 'terminal' may be used to refer to a non-AP STA, or an AP, or to both terms. A station for wireless communication includes a processor and a communication unit and according to the embodiment, may further include a user interface unit and a display unit. The processor may generate a frame to be transmitted through a wireless network or process a frame received through the wireless network and besides, perform various processing for controlling the station. In addition, the communication unit is functionally connected with the processor and transmits and receives frames through the wireless network for the station. According to the present invention, a terminal may be used as a term which includes user equipment (UE).

The access point (AP) is an entity that provides access to the distribution system (DS) via wireless medium for the station associated therewith. In the infrastructure BSS, communication among non-AP stations is, in principle, performed via the AP, but when a direct link is configured, direct communication is enabled even among the non-AP stations. Meanwhile, in the present invention, the AP is used as a concept including a personal BSS coordination point (PCP) and may include concepts including a centralized controller, a base station (BS), a node-B, a base transceiver system (BTS), and a site controller in a broad sense. In the present invention, an AP may also be referred to as a base wireless communication terminal. The base wireless communication terminal may be used as a term which includes an AP, a base station, an eNB (i.e. eNodeB) and a transmission point (TP) in a broad sense. In addition, the base wireless communication terminal may include various types of wireless communication terminals that allocate medium resources and perform scheduling in communication with a plurality of wireless communication terminals.

A plurality of infrastructure BSSs may be connected with each other through the distribution system (DS). In this case, a plurality of BSSs connected through the distribution system is referred to as an extended service set (ESS).

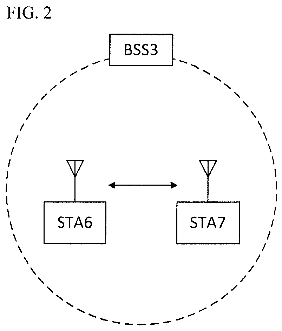

FIG. 2 illustrates an independent BSS which is a wireless LAN system according to another embodiment of the present invention. In the embodiment of FIG. 2, duplicative description of parts, which are the same as or correspond to the embodiment of FIG. 1, will be omitted.

Since a BSS3 illustrated in FIG. 2 is the independent BSS and does not include the AP, all stations STA6 and STA7 are not connected with the AP. The independent BSS is not permitted to access the distribution system and forms a self-contained network. In the independent BSS, the respective stations STA6 and STA7 may be directly connected with each other.

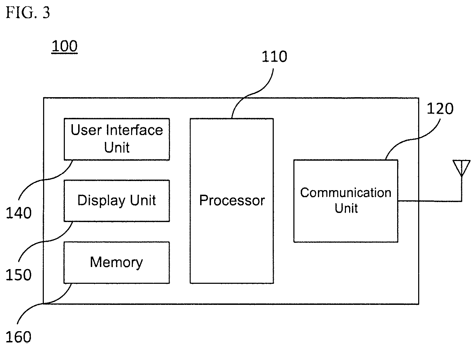

FIG. 3 is a block diagram illustrating a configuration of a station 100 according to an embodiment of the present invention. As illustrated in FIG. 3, the station 100 according to the embodiment of the present invention may include a processor 110, a communication unit 120, a user interface unit 140, a display unit 150, and a memory 160.

First, the communication unit 120 transmits and receives a wireless signal such as a wireless LAN packet, or the like and may be embedded in the station 100 or provided as an exterior. According to the embodiment, the communication unit 120 may include at least one communication module using different frequency bands. For example, the communication unit 120 may include communication modules having different frequency bands such as 2.4 GHz, 5 GHz, 6GHz and 60 GHz. According to an embodiment, the station 100 may include a communication module using a frequency band of 7.125 GHz or more and a communication module using a frequency band of 7.125 GHz or less. The respective communication modules may perform wireless communication with the AP or an external station according to a wireless LAN standard of a frequency band supported by the corresponding communication module. The communication unit 120 may operate only one communication module at a time or simultaneously operate multiple communication modules together according to the performance and requirements of the station 100. When the station 100 includes a plurality of communication modules, each communication module may be implemented by independent elements or a plurality of modules may be integrated into one chip. In an embodiment of the present invention, the communication unit 120 may represent a radio frequency (RF) communication module for processing an RF signal.

Next, the user interface unit 140 includes various types of input/output means provided in the station 100. That is, the user interface unit 140 may receive a user input by using various input means and the processor 110 may control the station 100 based on the received user input. Further, the user interface unit 140 may perform output based on a command of the processor 110 by using various output means.

Next, the display unit 150 outputs an image on a display screen. The display unit 150 may output various display objects such as contents executed by the processor 110 or a user interface based on a control command of the processor 110, and the like. Further, the memory 160 stores a control program used in the station 100 and various resulting data. The control program may include an access program required for the station 100 to access the AP or the external station.

The processor 110 of the present invention may execute various commands or programs and process data in the station 100. Further, the processor 110 may control the respective units of the station 100 and control data transmission/reception among the units. According to the embodiment of the present invention, the processor 110 may execute the program for accessing the AP stored in the memory 160 and receive a communication configuration message transmitted by the AP. Further, the processor 110 may read information on a priority condition of the station 100 included in the communication configuration message and request the access to the AP based on the information on the priority condition of the station 100. The processor 110 of the present invention may represent a main control unit of the station 100 and according to the embodiment, the processor 110 may represent a control unit for individually controlling some component of the station 100, for example, the communication unit 120, and the like. That is, the processor 110 may be a modem or a modulator/demodulator for modulating and demodulating wireless signals transmitted to and received from the communication unit 120. The processor 110 controls various operations of wireless signal transmission/reception of the station 100 according to the embodiment of the present invention. A detailed embodiment thereof will be described below.

The station 100 illustrated in FIG. 3 is a block diagram according to an embodiment of the present invention, where separate blocks are illustrated as logically distinguished elements of the device. Accordingly, the elements of the device may be mounted in a single chip or multiple chips depending on design of the device. For example, the processor 110 and the communication unit 120 may be implemented while being integrated into a single chip or implemented as a separate chip. Further, in the embodiment of the present invention, some components of the station 100, for example, the user interface unit 140 and the display unit 150 may be optionally provided in the station 100.

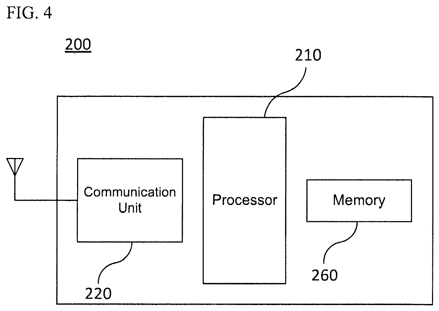

FIG. 4 is a block diagram illustrating a configuration of an AP 200 according to an embodiment of the present invention. As illustrated in FIG. 4, the AP 200 according to the embodiment of the present invention may include a processor 210, a communication unit 220, and a memory 260. In FIG. 4, among the components of the AP 200, duplicative description of parts which are the same as or correspond to the components of the station 100 of FIG. 2 will be omitted.

Referring to FIG. 4, the AP 200 according to the present invention includes the communication unit 220 for operating the BSS in at least one frequency band. As described in the embodiment of FIG. 3, the communication unit 220 of the AP 200 may also include a plurality of communication modules using different frequency bands. That is, the AP 200 according to the embodiment of the present invention may include two or more communication modules among different frequency bands, for example, 2.4 GHz, 5 GHz, 6GHz and 60 GHz together. Preferably, the AP 200 may include a communication module using a frequency band of 7.125GHz or more and a communication module using a frequency band of 7.125 GHz or less. The respective communication modules may perform wireless communication with the station according to a wireless LAN standard of a frequency band supported by the corresponding communication module. The communication unit 220 may operate only one communication module at a time or simultaneously operate multiple communication modules together according to the performance and requirements of the AP 200. In an embodiment of the present invention, the communication unit 220 may represent a radio frequency (RF) communication module for processing an RF signal.

Next, the memory 260 stores a control program used in the AP 200 and various resulting data. The control program may include an access program for managing the access of the station. Further, the processor 210 may control the respective units of the AP 200 and control data transmission/reception among the units. According to the embodiment of the present invention, the processor 210 may execute the program for accessing the station stored in the memory 260 and transmit communication configuration messages for one or more stations. In this case, the communication configuration messages may include information about access priority conditions of the respective stations. Further, the processor 210 performs an access configuration according to an access request of the station. According to an embodiment, the processor 210 may be a modem or a modulator/demodulator for modulating and demodulating wireless signals transmitted to and received from the communication unit 220. The processor 210 controls various operations such as wireless signal transmission/reception of the AP 200 according to the embodiment of the present invention. A detailed embodiment thereof will be described below.

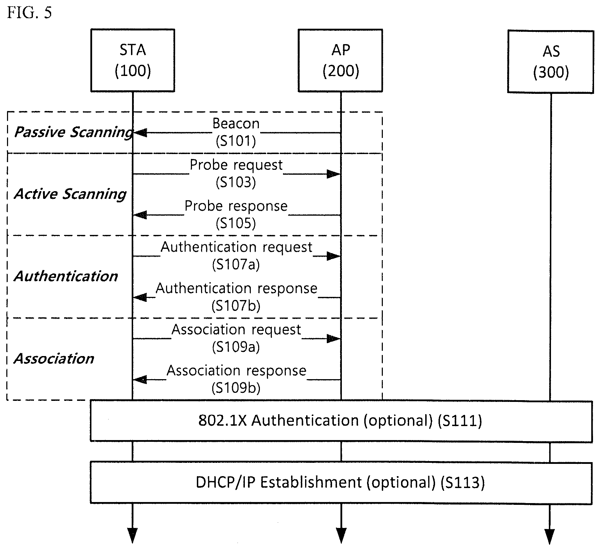

FIG. 5 is a diagram schematically illustrating a process in which a STA sets a link with an AP.

Referring to FIG. 5, the link between the STA 100 and the AP 200 is set through three steps of scanning, authentication, and association in a broad way. First, the scanning step is a step in which the STA 100 obtains access information of BSS operated by the AP 200. A method for performing the scanning includes a passive scanning method in which the AP 200 obtains information by using a beacon message (S101) which is periodically transmitted and an active scanning method in which the STA 100 transmits a probe request to the AP (S103) and obtains access information by receiving a probe response from the AP (S105).

The STA 100 that successfully receives wireless access information in the scanning step performs the authentication step by transmitting an authentication request (S107a) and receiving an authentication response from the AP 200 (S107b). After the authentication step is performed, the STA 100 performs the association step by transmitting an association request (S109a) and receiving an association response from the AP 200 (S109b). In this specification, an association basically means a wireless association, but the present invention is not limited thereto, and the association may include both the wireless association and a wired association in a broad sense.

Meanwhile, an 802.1X based authentication step (S111) and an IP address obtaining step (S113) through DHCP may be additionally performed. In FIG. 5, the authentication server 300 is a server that processes 802.1X based authentication with the STA 100 and may be present in physical association with the AP 200 or present as a separate server.

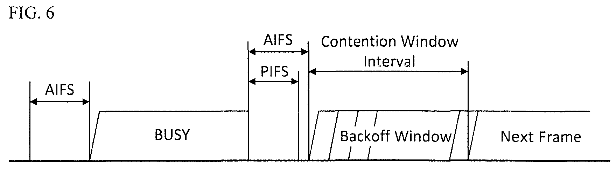

FIG. 6 is a diagram illustrating a carrier sense multiple access (CSMA)/collision avoidance (CA) method used in wireless LAN communication.

A terminal that performs a wireless LAN communication checks whether a channel is busy by performing carrier sensing before transmitting data. When a wireless signal having a predetermined strength or more is sensed, it is determined that the corresponding channel is busy and the terminal delays the access to the corresponding channel. Such a process is referred to as clear channel assessment (CCA) and a level to decide whether the corresponding signal is sensed is referred to as a CCA threshold. When a wireless signal having the CCA threshold or more, which is received by the terminal, indicates the corresponding terminal as a receiver, the terminal processes the received wireless signal. Meanwhile, when a wireless signal is not sensed in the corresponding channel or a wireless signal having a strength smaller than the CCA threshold is sensed, it is determined that the channel is idle.

When it is determined that the channel is idle, each terminal having data to be transmitted performs a backoff procedure after an inter frame space (IFS) time depending on a situation of each terminal, for instance, an arbitration IFS (AIFS), a PCF IFS (PIFS), or the like elapses. According to the embodiment, the AIFS may be used as a component which substitutes for the existing DCF IFS (DIFS). Each terminal stands by while decreasing slot time(s) as long as a random number determined by the corresponding terminal during an interval of an idle state of the channel and a terminal that completely exhausts the slot time(s) attempts to access the corresponding channel. As such, an interval in which each terminal performs the backoff procedure is referred to as a contention window interval. In this case, the random number may be referred to as a backoff counter. That is, an initial value of the backoff counter is configured by an integer corresponding to a random number acquired by the terminal. When the terminal detects that the channel is idle during a slot time, the terminal may reduce the backoff counter by 1. In addition, when the backoff counter reaches 0, the terminal may be allowed to perform channel access in the corresponding channel. Accordingly, when the channel is idle for a slot time of the backoff counter or an AIFS time, transmission of the terminal may be allowed.

When a specific terminal successfully accesses the channel, the corresponding terminal may transmit data through the channel. However, when the terminal which attempts the access collides with another terminal, the terminals which collide with each other are assigned with new random numbers, respectively to perform the backoff procedure again. According to an embodiment, a random number newly assigned to each terminal may be decided within a range (2*CW) which is twice larger than a range (a contention window, CW) of a random number which the corresponding terminal is previously assigned. Meanwhile, each terminal attempts the access by performing the backoff procedure again in a next contention window interval and in this case, each terminal performs the backoff procedure from slot time(s) which remained in the previous contention window interval. By such a method, the respective terminals that perform the wireless LAN communication may avoid a mutual collision for a specific channel.

<Examples of various PPDU formats>

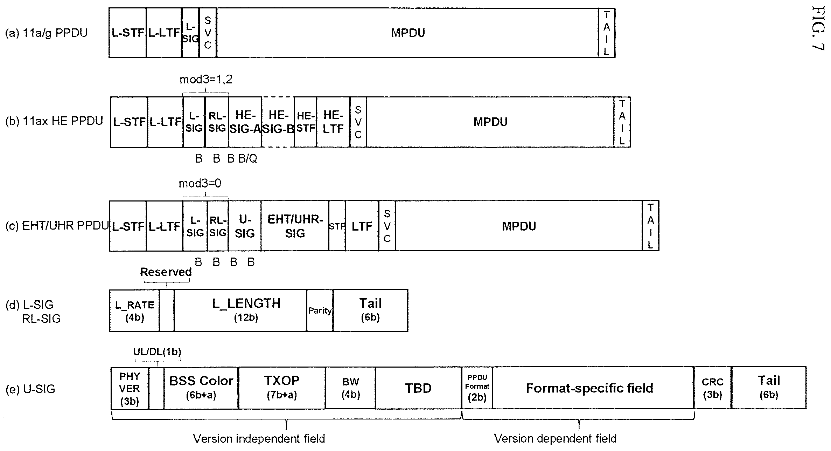

FIG. 7 illustrates physical layer protocol data unit (PPDU) formats of various standard generations according to an embodiment of the present disclosure.

More specifically, FIG. 7A illustrates an embodiment of a legacy PPDU format based on 802.11a/g, FIG. 7B illustrates an embodiment of an HE PPDU format based on 802.11ax, and FIG. 7C illustrates an embodiment of a non-legacy PPDU (i.e., EHT PPDU) format based on 802.11be. Furthermore, FIG. 7D illustrates a detailed field configuration of an L-SIG and an RL-SIG commonly used in the PPDU formats.

Referring to FIG. 7(a), a preamble of the legacy PPDU includes a legacy short training field (L-STF), a legacy long training field (L-LTF), and a legacy signal field (L-SIG). In an embodiment of the present invention, the L-STF, the L-LTF, and the L-SIG may be referred to as a legacy preamble.

Referring to FIG. 7(b), a preamble of the HE PPDU additionally includes, in the legacy preamble, a repeated legacy short training field (RL-SIG), a high efficiency signal A field (HE-SIG-A), a high efficiency signal B field (HE-SIG-B), a high efficiency short training field (HE-STF), and a high efficiency long training field (HE-LTF). In an embodiment of the present invention, the RL-SIG, HE-SIG-A, the HE-SIG-B, the HE-STF and the HE-LTF may be referred to as an HE preamble. A specific configuration of the HE preamble may be modified according to an HE PPDU format. For example, HE-SIG-B may be used only in an HE MU PPDU format.

Referring to FIG. 7(c), a preamble of the EHT PPDU additionally includes, in the legacy preamble, a repeated legacy short training field (RL-SIG), a universal signal field (U-SIG), and an extremely high throughput signal A field (EHT-SIG-A), an extremely high throughput signal B field (EHT-SIG-B), an extremely high throughput short training field (EHT-STF), and an extremely high throughput long training field (EHT-LTF). In an embodiment of the present invention, the RL-SIG, EHT-SIG-A, the EHT-SIG-B, the EHT-STF and the EHT-LTF may be referred to as an EHT preamble. A specific configuration of a non-legacy preamble may be modified according to an EHT PPDU format. For example, EHT-SIG-A and EHT-SIG-B may be used only in a part of the EHT PPDU format.

As such, the PPDU used in the UHR standard may have a format similar to that of the PPDU used in the EHT standard. This is because the EHT PPDU format defined in 802.11be includes a U-SIG field that has been agreed to be commonly used by a plurality of wireless LAN generations. In this case, the value of the PHY Version Identifier field of the U-SIG field included in the EHT PPDU may be 0, and the value of the PHY Version identifier field of the U-SIG field included in the UHR PPDU may be 1, which is a value other than 0. The EHT PPDU includes an extremely high throughput short training field (EHT-STF) in the STF field, and includes an extremely high throughput long training field (EHT-LTF) in the LTF field. The UHR PPDU includes a UHR-STF (Ultra High Reliability Short Training field) in the STF field, and includes a UHR-LTF (Ultra High Reliability Long Training field) in the LTF field.

64-FFT OFDM is applied in an L-SIG field included in the preamble of the PPDU, and the L-SIG field includes a total of 64 subcarriers. Among 64 subcarriers, 48 subcarriers excluding a guard subcarrier, a DC subcarrier, and a pilot subcarrier are used for transmission of L-SIG data. BPSK and a modulation and coding scheme (MCS) of rate=1/2 are applied in L-SIG, and therefore the L-SIG may include a total of 24 bits of information. FIG. 7(d) illustrates a 24-bit information configuration of L-SIG.

Referring to FIG. 7(d), the L-SIG includes an L_RATE field and an L_LENGTH field. The L_RATE field includes 4 bits and indicates an MCS used for data transmission. Specifically, the L_RATE field indicates one value among transmission rates of 6/9/12/18/24/36/48/54Mbps obtained by combining a modulation scheme of BPSK/QPSK/16-QAM/64-QAM, etc. and an inefficiency of 1/2, 2/3, 3/4, etc. A total length of a corresponding PPDU may be indicated by combining information of the L_RATE field and information of the L_LENGTH field. In a non-legacy PPDU format, the L_RATE field is configured to a minimum rate of 6Mbps.

A unit of the L_LENGTH field is a byte and a total of 12 bits are allocated to signal up to 4095, and a length of the PPDU may be indicated in combination with the L_RATE field. A legacy terminal and a non-legacy terminal may interpret the L_LENGTH field in different ways.

Firstly, a method of interpreting the length of the PPDU by the legacy terminal and the non-legacy terminal by using the L_LENGTH field is described below. When a value of the L_RATE field is configured to indicate 6 Mbps, 3 bytes during 4 us which is one symbol duration of 64 FET (i.e., 24 bits) may be transmitted. Therefore, the 64 FET standard symbol number after an L-SIG is acquired by adding 3 bytes corresponding to a SVC field and a Tail field to the L_LENGTH field value and then dividing the same by 3 bytes which is a transmission amount of one symbol. When multiplying the acquired symbol number by 4 us which is one symbol duration and then adding 20 us which is consumed to transmit the L-STF, the L-LTF, and the L-SIG, the length of a corresponding PPDU, i.e., a receipt time (RXTIME) is acquired, which is expressed by Equation 1 below.

【Equation 1】

$$RXTIME(us) = \left(\left\lceil \frac{L\_LENGTH+3}{3} \right\rceil\right) \times 4 + 20$$

In this case, [x] denotes the smallest natural number greater than or equal to x. Since the maximum value of the L_LENGTH field is 4095, the length of the PPDU can be set up to 5.464ms. The non-legacy terminal transmitting the PPDU should set the L_LENGTH field as shown in Equation 2 below.

【Equation 2】

$$L\_LENGTH(byte) = \left(\left\lceil \frac{TXTIME-20}{4} \right\rceil\right) \times 3 - 3$$

Herein, TXTIME is the total transmission time constituting the corresponding PPDU, and is expressed by Equation 3 below. In this case, TX represents the transmission time of X.

$$TXTIME(us) = T_{L-STF} + T_{L-LTF} + T_{L-SIG} + T_{RL-SIG} + T_{U-SIG} + (T_{EHT-SIG-A}) + (T_{EHT-SIG-B}) + T_{EHT-STF} + N_{EHT-LTF} \cdot T_{EHT-LTF} + T_{DATA}$$ [Equation 3]

Referring to the above Equations, the length of the PPDU is calculated based on the ceiling value of L_LENGTH/3. Therefore, for any k value, three different values of L_LENGTH = {3k+1, 3k+2, 3(k+1)} indicate the same PPDU length.

Referring to FIG. 7(e), the U-SIG (Universal SIG) field persists in EHT/UHR PPDUs and subsequent generation wireless LAN PPDUs, serving to distinguish which generation PPDU it belongs to, including EHT/UHR. Additionally, the U-SIG field may facilitate spatial reuse for EHT/UHR and subsequent generation wireless LANs. The U-SIG may be a 64FFT-based OFDM 2 symbol, and may transmit a total of 52 bits of information. Of these, 43 bits, excluding the CRC/Tail 9 bits, are broadly divided into a version independent (VI) field and a version dependent (VD) field.

The VI bit may continue to maintain the current bit configuration in the future, so that even if a PPDU of a subsequent generation is defined, the current EHT/UHR terminals may obtain information about the PPDU through VI fields of the PPDU. To this end, a VI field includes PHY version, UL/DL, BSS color, TXOP, and reserved fields. The PHY version ID field is 3 bits and serves to sequentially distinguish EHT/UHR and subsequent generation wireless LAN standards by versions. The PHY version ID field of the EHT (11be) PPDU has a value of 000b, and the PHY version ID field of the UHR PPDU has a value other than 000b. The UL/DL field distinguishes whether the relevant PPDU is an uplink/downlink PPDU. The BSS color refers to a BSS-specific identifier defined in 11ax, and has a value of 6 bits or more. A TXOP refers to a transmit opportunity duration that has been transferred in a MAC header, and by being added to a PHY header, the length of the TXOP, in which the PPDU is included, may be inferred without the need to decode an MPDU, and has a value of 7 bits or more.

The VD field in EHT may indicate signaling information useful only for the 11be version PPDU, and may include a field that is commonly used in any PPDU format such as a PPDU format and BW, and a field that is differently defined for each PPDU format. The PPDU format is an identifier for distinguishing between EHT single user (SU), EHT multiple user (MU), EHT trigger-based (TB), EHT extended range (ER) PPDUs, and the like.

The BW field may signal 5 basic PPDU BW options of 20, 40, 80, 160 (80+80), and 320 (160+160) MHz (BW expressible in the form of $20 \times 2^n$ may be referred to as a basic BW), and various other PPDU bandwidths configured through preamble puncturing. In addition, after signaled as 320 MHz, the PPDU BWs may be signaled in the form in which some 80 MHz punctured. In addition, the punctured and modified channel formed may be signaled directly in a BW field, or may be signaled by using both the BW field and a field (for example, a field in the EHT-SIG field) that appears after the BW field. If the BW field is 3 bits, a total of 8 BW signaling options are possible, and thus in the puncturing mode, up to 3 BW signaling options may be signaled. If the BW field is 4 bits, a total of 16 BW signaling options are possible, and thus in the puncturing mode, up to 11 BW signaling options may be signaled.

The VD field of UHR is a field for indicating signaling information useful only for the UHR PPDU. However, the information indicated by each field included in the VD field of a UHR PPDU may be the same as information indicated by a field that plays the same role as the VD field of EHT (11be), or may be an extended form thereof. For example, a field indicating a puncturing pattern included in the VD field of the UHR PPDU may indicate more diverse types of patterns than a field indicating a puncturing pattern included in the VD field of the EHT PPDU. Alternatively, the field indicating the puncturing pattern included in the VD field of the UHR PPDU may be interpreted in combination with the BW field. This makes it possible to indicate more diverse types of puncturing patterns.

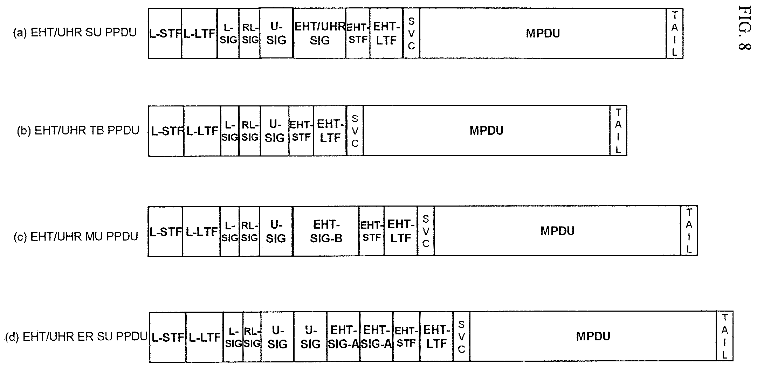

FIG. 8 illustrates an EHT/UHR PPDU format according to an embodiment of the present disclosure.

The EHT/UHR PPDU format may be indicated by the PPDU Format field of the U-SIG field of a PPDU. FIG. 8A illustrates an EHT/UHR SU PPDU according to an embodiment of the present disclosure. The EHT/UHR SU PPDU may be a PPDU used for single-user transmission between an AP and a single station, and may include an EHT-SIG-A field for additional signaling after U-SIG.

FIG. 8B illustrates an EHT/UHR trigger-based PPDU according to an embodiment of the present disclosure. The EHT/UHR trigger-based PPDU is an uplink PPDU used for transmission in response to a trigger frame, and may not have a separate EHT/UHR-SIG-A field after U-SIG.

FIG. 8C illustrates an EHT/UHR MU PPDU according to an embodiment of the present disclosure. The EHT/UHR MU PPDU is a PPDU used for transmission to one or more terminals. An EHT/UHR MU PPDU format may include HE-SIG-B after a U-SIG field.

FIG. 8D illustrates an EHT/UHR ER SU PPDU according to an embodiment of the present disclosure. The EHT/UHR ER SU PPDU is used for single-user transmission to a station in the extended range. An EHT/UHR ER SU PPDU format may have a U-SIG repeated in the time axis.

The EHT/UHR MU PPDU described with reference to FIG. 8C may be used by an AP to perform downlink transmission to a plurality of stations. In this case, the EHT/UHR MU PPDU may include scheduling information for multiple stations to simultaneously receive the PPDU. In this case, the EHT/UHR MU PPDU may transfer AID information of a receiver or transmitter of the PPDU through a user-specific field of the EHT/UHR-SIG-B. A station that has received an EHT/UHR MU PPDU may perform a spatial reuse operation, based on the AID information acquired from the PPDU's preamble. More specifically, the resource unit allocation (RA) field of the EHT/UHR-SIG-B may include information about a resource unit (RU) division form in a specific bandwidth (e.g., 20 MHz) in the frequency domain. In addition, information about a station designated for each divided resource unit may be transferred through a user-specific field of the EHT/UHR-SIG-B. The user-specific field may include one or more user fields corresponding to each divided resource unit.

An AID of a receiver or a transmitter may be inserted in a user field corresponding to a resource unit in which data transmission is performed, among the multiple divided resource units. A pre-designated null STA ID may be inserted into a user field corresponding to the remaining resource units in which data transmission is not performed.

Two or more PPDUs described with reference to FIG. 8 may be indicated by the same PPDU format. For example, the value of the U-SIG PPDU format subfield indicating an EHT/UHR SU PPDU and the value of the U-SIG PPDU format subfield indicating an EHT/UHR MU PPDU may equal.

Some of the fields included in the PPDU format described above, or some information of the fields, may be omitted. This may be referred to as a compression mode or a compressed mode.

<Method for channel access of Wi-Fi terminal >

Wi-Fi terminals (AP, non-AP STA, etc.) perform communication by using an unlicensed band, and thus, before performing frame transmission, identify whether a channel on which the terminals intend to use for transmission is being used by another device. Carrier sense multiple access (CSMA) is a channel access method in which a terminal intending to transmit a packet performs carrier sense to determine whether a channel is being used by another device, and performs transmission only when the channel is determined to be not being used by the other device (idle). A terminal using CSMA, when a medium (channel) is identified as being used at least another device (is determined to be busy), may perform an operation that avoids attempting transmission, and therefore, a transmission started first may be protected from other device.

However, when multiple terminals that have discovered that a medium has been occupied by another device attempt to transmit packets simultaneously when the medium occupation by the other device is confirmed to have ended (the medium becomes idle), thereby experiencing a transmission collision. That is, when a specific terminal attempts to transmit a packet and concurrently multiple other terminals also attempt to transmit packets, a terminal that should receive the packet transmitted by the specific terminal may fail to properly receive and decode the packet to be received, due to interference caused by the transmission performed by the multiple other terminals.

As described above, CSMA with collision avoidance (CSMA/CA) is a channel access mechanism that prevents multiple terminals, having detected the medium becoming idle, from attempting packet transmission simultaneously. Terminals that access a medium (channel) by using CSMA/CA attempt transmission after waiting for a random time, when the state of the medium observed by the terminals becomes idle. The random time may be aslottime (which may be 9 us in general) multiplied by a random number (random backoff counter) generated by each terminal attempting transmission. That is, unlike in the case of using only CSMA, the terminals that access the medium by using CSMA/CA attempt transmission at different times because the terminals wait for different random times before attempting transmission. In this case, when a specific terminal having waited for the shortest random time after the medium becomes idle attempts the first transmission, other terminals may stop the channel access procedure after discovering that the medium has been occupied (become busy) by the specific terminal. In this case, the specific terminal may perform an operation of decrement the backoff counter maintained by the specific terminal by 1 at each aslottime while the medium remains idle, and may attempt transmission when the backoff counter reaches 0 or, alternatively, when the aslottime has passed after the backoff counter has reached 0. In this case, the specific terminal that has performed the transmission may generate a new random number (a new backoff counter) after the transmission is completed, and then may attempt transmission when the new random number again reaches 0 or after the new random number reaches 0.

The above-mentioned CSMA/CA and random backoff procedures are commonly applied to basic functions used when Wi-Fi terminals attempt channel access, i.e., a distributed coordination function (DCF) and an enhanced distributed channel access (EDCAF). The procedures are well-known and widely used unlicensed band channel access methods, and thus a more detailed description thereof will be omitted.

The DCF and the EDCAF used by a Wi-Fi terminal's MAC evaluate the channel status by considering not only the channel state (idle or busy) that has been directly identified by each terminal by performing a physical carrier sense (CS) but also the result of a virtual CS (virtual CS). More specifically, even if the result of physical (physical) CS performed for a channel is idle, the Wi-Fi terminal considers the channel state to be busy if a virtual CS result is busy. In this case, the virtual CS is a channel evaluation method for determining a channel to be busy when the network allocation vector (NAV) is not 0. The NAV may be a value maintained for future traffic that is predicted to occupy a medium. More specifically, when the Wi-Fi MAC has received an RTS/CTS frame, the MAC may configure an NAV (NAV count) based on duration information of the received frame, for example, the value of a duration field, and may maintain the NAV as a value other than 0 during the time in which the medium is expected to be occupied after RTS/CTS frame exchange. That is, a value maintained by the NAV is reduced as time passes. If a specific MAC has an NAV value of 0, it may be interpreted that the medium is no longer occupied by the future traffic that the specific MAC had discovered. If the NAV is 0, the MAC may determine the virtual CS result to be idle. In this case, the Wi-Fi MAC may configure the NAV, not only based on the RTS/CTS frame, but also based on a duration value acquired from another received MAC frame.

The channel evaluation method (determine the state of the medium) that considers both the physical CS and virtual CS results, briefly described above, is also one of well-known Wi-Fi MAC functions, and thus a detailed explanation thereof will be omitted.

<EDCA and TXOP>

EDCA provides a mechanism to manage traffic by differentiating the traffic into four types of access categories (ACs) according to the characteristics of the traffic. In this case, the four types of ACs may be AC_VO (AC Voice), AC_VI (AC Video), AC_BE (AC Best effort), and AC_BK (AC Background), and the ACs may have different contention windows (CWs), transmit opportunity (TXOP), and AIFSN parameters. In short, EDCA is a mechanism for differentiating CWs, TXOP, and AIFSN parameters for four types of ACs and adjusting the transmission priority of traffic transmitted by using each AC. To this end, EDCA may map traffic (MSDU) that the MAC should service to one of the four ACs according to a traffic category (TC) or a traffic stream (TS). The traffic mapped to one of four ACs by EDCA is managed separately in four queues for respective ACs. In this case, the four queues may be logically separated queues, rather than physically separated queues.

AC_VO may be an AC to be used for traffic which, like such as voice traffic, is not large in the absolute amount of traffic but is vulnerable to transmission delay, and has relatively small CW and AIFSN parameter values in order to increase the probability of being preferentially served compared to the traffic of other ACs. The TXOP parameter of AC_VO is limited to a value relatively smaller than the TXOP parameters of other ACs, and thus, only a short transmission time is ensured compared to other ACs.

AC_VI is an AC that can be used for traffic, such as video, which is more tolerant to transmission delays than voice traffic but still requires low-latency transmission and in which a large volume of traffic is required to be processed. AC_VI has CW and AIFSN parameter values that are larger than those of AC_VO but smaller than those of other ACs, and instead, the TXOP is approximately twice as long as that of AC_VI.

AC_BE is an AC that may be used for traffic tolerant to transmission delay, and most general traffic excluding voice data and streaming video data, may be classified as AC_BE. AC__BE uses CW and AIFSN parameters having values larger than those of AC_VO and AC_VI. In addition, AC_BE does not have a separate TXOP. Therefore, traffic corresponding to AC_BE cannot be used in a TXOP transmission sequence in which a PPDU is transmitted, an ACK is received in response thereto, and then a PPDU is transmitted again after SIFS.

AC_BK is an AC that may be used for traffic which is tolerant to transmission delay, like AC_BE, but has a lower priority than BE traffic. AC_BK uses the same CW parameter value as AC_BE, and uses a larger AIFSN parameter value than AC_BE. In addition, traffic corresponding to AC_BK, like AC_BE, does not have a separate TXOP and thus may not be used in a TXOP transmission sequence.

The four types of EDCA ACs are mapped to the user-priority (UP) of 802.1D, and the EDCA AC is determined according to the UP value of traffic received through a wire or the TID of an MSDU indicated from the upper layer. In this case, when the TID of the MSDU indicates a value of 0 to 7, the value indicated by the TID may be mapped one-to-one to the UP.

Furthermore, the four types of EDCA ACs have respective default CW (CWmin, CWmax), AIFSN, and TXOP parameters defined in the standard, and the parameter values of each AC may be changed by the AP, allowing different values to be used for each BSS.

By using the EDCA mechanism, Wi-Fi traffic may be stored in one of the four queues corresponding to the four ACs, and may be transmitted to a destination device only when the AC including the traffic wins the channel access competition against other ACs. In this case, each AC performs competition by using the access parameters (CW[AC], AIFSN[AC]) allocated to the AC in the channel access competition between the ACs, and the channel access competition operation performed by each AC is the same as that of DCF. In this case, if a specific AC has no traffic to be transmitted to the queue, the specific AC may not participate in the competition.

However, as described above, the CW and AIFSN parameter values used by the ACs are different, and thus the AC_VO having the smallest CW and AIFSN parameters has a high probability of winning in channel access competition with other ACs, and therefore, the traffic of AC_VO is likely to be preferentially served over the traffic of other ACs.

Furthermore, the EDCA mechanism defines internal competition rules, such as allowing a high-priority AC to win when an (internal) collision occurs between the ACs and increasing the CW of other ACs that caused the collision, and rules for constructing a PPDU including traffic of other ACs other than the AC which has won the competition (the primary AC). However, since the rules are not closely related to the proposal of the present disclosure, a detailed description thereof will be omitted.

EDCA provides, in addition to the function of operating a differentiated AC according to the type of traffic (frame, packet, etc.) for QoS enhancement as described above, an EDCA transmission opportunity (EDCA TXOP) function. An EDCA TXOP refers to a time during which, when an EDCA function (EDCAF) of a specific AC has acquired a channel access opportunity, i.e., has become a TXOP holder, a medium can be controlled without being disturbed by other devices during the TXOP duration. In this case, the EDCA TXOP may be limited by a TXOP limit advertised by an AP. The TXOP holder should ensure that the TXOP holder's transmission and transmission of a response frame in response to the TXOP holder's transmission are completed within the TXOP limit.

The TXOP holder may transmit multiple frames (multiple PPDU) during the EDCA TXOP duration. When the transmission of each frame is performed within the obtained TXOP duration, the TXOP holder may continuously transmit multiple frames without performing a separate channel access procedure, for example, a backoff procedure, between transmissions of the frames. In this case, when the multiple frames are MPDUs or aggregated MAC protocol data units (A-MPDUs) that do not request immediate ACK, the transmission of the multiple frames may be performed at a short interframe space (SIFS) or reduced interframe space (RIFS) interval. In this case, when there is an MPDU or A-MPDU requesting an immediate ACK among the multiple frames, the TXOP holder may transmit the frame requesting the immediate ACK, receive the ACK, and then transmit the next frame after SIFS.

In this case, when traffic (packet, frame, etc.) of another AC other than the specific AC which is the TXOP holder satisfies a specific condition, the traffic may be also transmitted within the TXOP acquired by the TXOP holder (the specific AC). The transmission of the traffic of the AC other than the TXOP holder within the TXOP may be an operation by TXOP sharing between the ACs, and details regarding the specific condition are unrelated to the present disclosure, and thus will be omitted.

As described above, a TXOP holder may perform continuous frame transmission without performing a separate channel access procedure within the TXOP. This may be an operation that may be achieved when other terminals understand and protect the TXOP duration acquired by the TXOP holder. That is, to acquire a medium control right regarding the EDCA TXOP duration, the TXOP holder may need a procedure to notify other terminals of the acquired TXOP duration so that the other terminals can discover the TXOP duration.

To this end, a terminal (AC) that has become a TXOP holder, or that has completed a channel access procedure and has started transmission, may attempt to transmit an RTS frame to allow another terminal to discover the TXOP duration. In this case, the RTS frame refers to a frame in which the Type subfield (fourth bit B3 and third bit B2) of the Frame Control field of an MAC frame header is set to 01b (Type = control frame), and the Subtype subfield (eighth bit B7, seventh bit B6, sixth bit B5, and fifth bit B4) of the Frame Control field is set to 1011b. The other terminal that has received the RTS frame from the TXOP holder may configure a NAV, based on information regarding a duration included in the RTS frame, for example, a value of a duration field. The configured NAV may be maintained at a value other than 0 during a time corresponding to the TXOP of the TXOP holder. However, a terminal indicated as a destination device of the RTS frame must respond to a CTS frame, instead of configuring the NAV, based on the information of the RTS frame. In this case, the destination device of the RTS frame transmitted to start the TXOP is a TXOP responder, and must transmit a CTS frame (after the RTS frame is received and after SIFS) in response to the RTS. In this case, the duration field of the responding CTS frame is set to a value calculated by: a value indicated by the duration field of the received RTS frame - CTS frame transmission time - SIFS. Terminals having received the CTS frame may configure a NAV, based on information (e.g., the value of the duration field) related to the duration included in the CTS frame.

Therefore, the NAV of a terminal that has received an RTS frame from the TXOP holder and the NAV of a terminal that has received a CTS frame from the TXOP responder are configured to be 0 after the TXOP obtained by the TXOP holder ends. Through this, the Wi-Fi MAC mechanism may protect the TXOP holder and the TXOP responder so that the TXOP holder and the TXOP responder can exchange multiple frames without being disturbed during the TXOP.

However, in a case where the TXOP holder transmits the RTS frame as a non-HT duplicate PPDU over the primary 80 MHz bandwidth, but the CTS frame (non-HT duplicate PPDU) responded by the TXOP responder is responded only in the primary 40 MHz bandwidth, the TXOP holder may use only a bandwidth of the primary 40 MHz or less than the primary 40 MHz, for example, the primary 20 MHz, for frame exchange during the acquired TXOP. The CH_BANDWIDTH (a type of TXVECTOR parameter) of the PPDU transmitted by the TXOP holder should be configured to be a value equal to or smaller than the CH_BANDWIDTH_IN-NON__HT (a type of RXVECTOR parameter) of the received CTS frame. In this case, the RTS frame may be an RTS frame that allows a CTS frame to be responded in a BW smaller than a BW in which the RTS frame is transmitted. The RTS frame may be an RTS frame transmitted with DYN_BANDWIDTH_IN_NON_HT (a type of TXVECTOR parameter) dynamically configured. If DYN_BANDWIDTH_IN_NON_HT is statically configured and an RTS frame is transmitted from the TXOP holder, the TXOP responder may be required to respond with a CTS frame by using the same BW as a BW in which the RTS frame has been received.

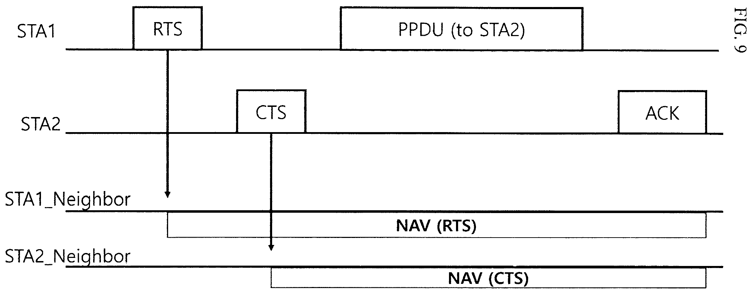

FIG. 9 illustrates a transmission/TXOP protection method using an RTS frame and a CTS frame according to an embodiment of the present disclosure.

Before transmitting a PPDU, a first station (STA1) transmits an RTS frame to a second station (STA2) which is a destination device of the PPDU, and the second station (STA2) may respond with a CTS frame after discovering that the received RTS frame is an RTS frame indicating the second station as a destination device and after SIFS.

STA1_Neighbor, which is a neighboring station (Neighbor STA) of the first station (STA1), receives the RTS frame transmitted by the first station (STA1), and then configures an NAV, based on a value indicated by the duration field of the RTS frame. STA2_Neighbor, which is a neighboring station of the second station (STA2), receives the CTS frame transmitted by the second station (STA2), and then configures an NAV, based on information indicated by the duration field of the CTS frame. STA1_Neighbor and STA2_Neighbor, after receiving the RTS/CTS frame, determine that a virtual CS is not busy while the configured NAV (counter) is maintained at a value other than 0, and perform an operation such as not reducing a backoff counter. As a result, a neighbor terminal having received the RTS/CTS frame does not attempt transmission during a duration in which the NAV is maintained at a value other than 0. Therefore, the first station (STA1) and the second station (STA2) may not be disturbed by neighboring terminals during the exchange of a PPDU and an Ack frame.

Even if the first station (STA1) and STA2_Neighbor are in a hidden relationship in which signals from each other's transmissions are not detected, STA2_Neighbor can perform an operation considering that a channel (WM, wireless medium) is in use while the first station (STA1) transmits a PPDU.

A Wi-Fi terminal (non-AP STA) may transmit a UL PPDU to an AP through DCF and EDCAF without directly obtaining a TXOP or performing channel access. More specifically, the non-AP STA may transmit a UL PPDU by using an RU allocated to the non-AP STA after receiving a trigger frame transmitted by the AP. In this case, the UL PPDU is a trigger-based (TB) PPDU.

A STA that responds with a UL PPDU after receiving a trigger frame is able to perform transmission through DCF and EDCAF without directly obtaining a channel access opportunity, and may thus obtain a large number of transmission opportunities compared to a STA that does not transmit a UL PPDU based on a trigger frame, and accordingly the STA that transmits the UL PPDU through the trigger frame may cause a fairness issue in terms of channel access. To resolve the fairness issue, 11ax defines a constraint that an HE non-AP STA performs EDCAF by using a multi-user (MU)-EDCA parameter when successfully transmitting at least one MPDU through a UL PPDU transmitted after receiving a trigger frame, and thus a STA that transmits a UL PPDU through a trigger frame needs to perform channel access by using the MU-EDCA parameter other than an EDCA parameter. The MU-EDCA parameter includes a parameter related to the size of a contention window for each of AC_VO, AC_VI, AC_BE, and AC_BK and an MU EDCA timer, and a contention window included in MU-EDCA may be configured to be larger than a parameter of EDCA. A STA that has transmitted a TB PPDU through a trigger frame and has successfully transmitted at least one MPDU performs channel access by using an MU EDCA parameter other than an EDCA parameter when performing channel access within a time interval corresponding to an MU EDCA timer, thereby succeeding in channel access with a lower probability than a STA using an EDCA parameter. As described above, channel accessibility of a STA that transmits a UL PPDU (TB PPDU) based on a trigger frame may be reduced, thereby solving/alleviating a fairness issue in channel accessibility between the STA that transmits the UL PPDU without performing direct channel access and a STA that does not transmitted a UL PPDU based on a trigger frame.

< TXOP protection using MU-RTS trigger frame>

In 11ax (6th-generation Wi-Fi, Wi-Fi 6, HEW, or high efficiency WLAN), an MU-RTS trigger/CTS frame exchange procedure is defined to add a function enabling an AP to start a TXOP and to protect a TXOP frame exchange procedure by using an MU-RTS trigger frame (hereinafter, "MU-RTS" or "MU-RTS frame"). The MU-RTS frame is a type of trigger frame, and a station that receives an MU-RTS frame and of which AID12 (LSB 12 bits of an association ID) is indicated by a User field included in the MU-RTS frame simultaneously responds with a CTS frame. When an AP protects a TXOP by using an MU-RTS frame, since a plurality of stations responds with a CTS frame, the TXOP may be protected from neighbor devices of the plurality of stations as destination devices of a downlink multi-user PPDU (DL MU PPDU). Further, the MU-RTS frame may be used to protect a UL MU PPDU. More specifically, before requesting a trigger-based (TB) PPDU from a plurality of stations through a trigger frame, the AP may transmit an MU-RTS frame to cause the plurality of stations, which is to respond with a TB PPDU, to respond with a CTS frame. The CTS frame with which the plurality of stations responds may induce a neighbor station of each station to configure an NAV for protecting a TB PPDU and an Ack frame (Ack or block Ack) to be transmitted after the TB PPDU, and thus even legacy stations unable to recognize (interpret or decode) the trigger frame and the TB PPDU may not perform channel access during a packet exchange sequence interval (or TXOP) initiated through the trigger frame.

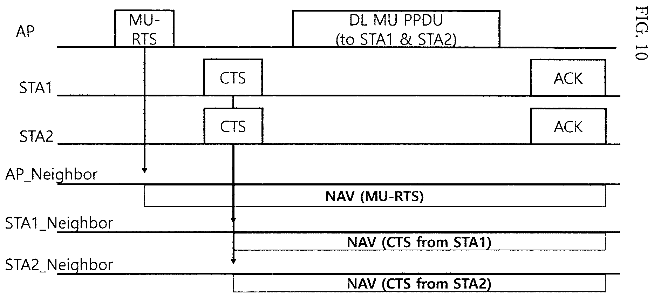

FIG. 10 illustrates a transmission/TXOP protection method using an MU-RTS frame and a CTS frame according to an embodiment of the present disclosure.

In the embodiment of FIG. 10, before transmitting an MU PPDU, an AP transmits an MU-RTS frame to a first station (STA1) and a second station (STA2) that are destination devices of the MU PPDU, and the first station (STA1) and the second station (STA2) receive the MU-RTS frame, and respond with a CTS frame to the MU-RTS frame after SIFS.

STA1_Neighbor, which is a neighbor station of the first station (STA1), receives the CTS frame transmitted by the first station (STA1), and then configures an NAV, based on information indicated by a Duration field of the CTS frame. STA2_Neighbor, which is a neighbor station of the second station (STA2), receives the CTS frame transmitted by the second station (STA2), and then configures an NAV, based on information indicated by a Duration field of the CTS frame. After receiving the CTS frame, STA1_Neighbor and STA2_Neighbor determine that a virtual carrier sense (CS) is busy while the configured NAV (counter) is maintained at a value other than 0, and perform an operation of not reducing a backoff counter. Therefore, the neighbor terminals having received the CTS frame do not attempt transmission during a duration in which the NAV is maintained at a value other than 0. Accordingly, the AP may transmit the MU PPDU and the first station (STA1) and the second station (STA2) may transmit an ACK frame, without being interrupted by the neighbor terminals.

The foregoing trigger frame is a frame type defined in 11ax, in which Type (fourth bit (B3) and third bit (B2)) and Subtype (eighth bit (B7), seventh bit (B6), sixth bit (B5), and fifth bit (B4)) subfields of a Frame Control field are configured to 01b and 0010b, respectively. The trigger frame is a control-type frame in which the Type subfield of the Frame Control field is 01b, and the Subtype value of 0010 indicates a trigger frame type. In 11ax, a trigger frame is defined such that an AP may request response frames from a plurality of stations at once, and an MU-RTS frame is used for an AP to request CTS frames from a plurality of stations (non-AP STAs). Other trigger types excluding the MU-RTS frame include a basic trigger frame for requesting a UL MU PPDU, a beamforming report poll (BRP) trigger frame for requesting a beamforming report, an MU-BAR trigger frame (for requesting a block Ack), a buffer status report poll (BSRP) trigger frame for requesting a buffer status report, a GCR MU-BAR trigger frame, a bandwidth query report poll (BQRP) trigger frame, and an NDP feedback report poll trigger frame. The other trigger types excluding the MU-RTS frame are not related to the contents of the present disclosure, and thus a detailed description thereof is omitted.

<Multi-link device (MLD)>

In extremely high throughput (EHT) of Wi-Fi 7, an MLD is defined. An MLD refers to a logical entity including one or more STAs, one or more APs (AP STAs) may be affiliated with an AP MLD, and one or more non-AP STAs may be affiliated with a non-AP (STA) MLD.

Each AP affiliated with the AP MLD may operate an independent basic service set (BSS), and operating bandwidths (operating BWs) and operating channels of BSSs operated by the APs may be different from each other. When the AP MLD and the non-AP MLD are associated, a setup may be performed between a plurality of APs affiliated with a single AP MLD and a plurality of non-AP STAs affiliated with a single non-AP MLD. Here, since each AP affiliated with the AP MLD operates a BSS in a separate link (operating channel), the non-AP MLD associated with each of the plurality of APs affiliated with the single AP MLD is considered to have performed a multi-link setup. That is, the AP MLD and the non-AP MLD defined in Wi-Fi 7 may perform a multi-link setup in which connections are established via a plurality of links.

Up to 15 STAs (AP STAs or non-AP STAs) may be affiliated with each MLD. That is, 15 APs may be affiliated with an AP MLD, and the 15 APs operate independent BSSs, respectively. Each AP affiliated with the AP MLD provides a service equivalent to that of a conventional Wi-Fi AP. That is, each AP affiliated with the AP MLD may function as an independent AP to perform a service for non-AP STAs (e.g., legacy non-AP STAs) that are not affiliated with the MLD. Each AP affiliated with the AP MLD operates in each independent link, and the link means only an operating channel in which each AP operates and does not mean a link to distinguish 2.4/5/6 GHz. That is, a first AP affiliated with the AP MLD may operate in a first link, and a second AP may operate in a second link. Here, both the first link in which the first AP operates and the second link in which the second AP operates may be positioned in a 6-GHz band.

The AP MLD and the non-AP MLD may complete a setup in a plurality of links through a multi-link setup procedure performed in a specific link. The multi-link setup procedure refers to an exchange of multi-link probe request/response frames or multi-link association request/response frames to establish a connection via one or more links. In the present disclosure, a procedure for performing a multi-link setup between the AP MLD and the non-AP MLD is not important, and thus a detailed description thereof will be omitted.

When the two MLDs are connected through a plurality of links, the two MLDs may separately manage traffic to be transmitted/received through each link, which may be achieved by applying a TID-to-link mapping negotiation performed between the two MLDs or a TID-to-link mapping state indicated by the AP MLD. Here, the TID-to-link mapping state indicated by the AP MLD to non-AP MLDs is indicated by a management frame (e.g., a beacon or a probe response frame) transmitted by the AP MLD, and the non-AP MLDs associated with the AP MLD through at least one link need to operate each link according to TID-to-link mapping indicated by the AP MLD. However, when a new TID-to-link mapping negotiation is performed between the AP MLD and the non-AP MLD, traffic (MPDU) of each TID may be transmitted/received via different links according to a method determined by the new TID-to-Link mapping negotiation. For example, when the AP MLD and the non-AP MLD are connected through two links and TIDs 0 to 3 are mapped to link 1 and TIDs 4 to 7 are mapped to link 2, the AP MLD and the non-AP MLD needs to transmit/receive only MPDUs having TIDs 0 to 3 through link 1 and transmit/receive MPDUs having TIDs 4 to 7 through link 2.

When the AP MLD indicates no separate TID-to-link mapping state and no TID-to-link mapping is performed between the AP MLD and the non-AP MLD, the AP MLD and the non-AP MLD have a default TID-to-link mapping state. The default TID-to-link mapping state refers to a state in which all TIDs are mapped to each link, in which case the AP MLD and the non-AP MLD transmit/receive MPDUs of all TIDs (TID = 0 to 7) in each link.

Since Wi-Fi 8 (ultra-high reliability: UHR) is expected to be developed based on Wi-Fi 7, the concept of an MLD, a procedure for connection between MLDs, and a method of operating a link through TID-to-link mapping will still be inherited to Wi-Fi 8. That is, an AP affiliated with an AP MLD may be a UHR STA, and a non-AP STA affiliated with a non-AP MLD may be a UHR STA.

<Channel access of MLD>

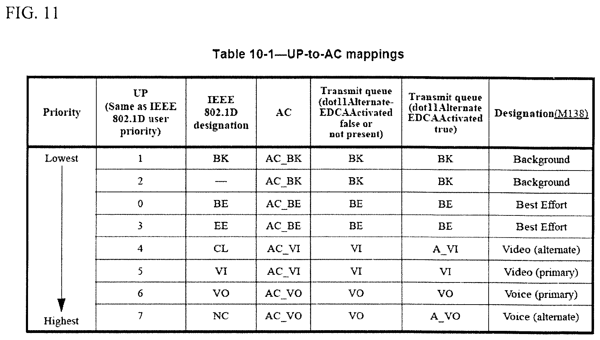

FIG. 11 illustrates a mapping table of a user priority and an access category.

Each STA affiliated with an MLD performs channel access by the same method as a conventional Wi-Fi terminal. More specifically, each STA performs channel access using enhanced distributed channel access (EDCA).

A channel access mechanism using EDCA is a method generally used for channel access in an unlicensed band.

EDCA provides a mechanism that manages traffic by differentiating the traffic into four types of access categories (ACs) according to characteristics thereof. The four types of ACs are AC voice (AC_VO), AC video (AC_VI), AC best effort (AC_BE), and AC background (AC_BK), and the respective AC may have different contention window (CW), transmit opportunity (TXOP), and AIFSN parameters. In short, EDCA is a mechanism that differentiates CWs, TXOPs, and AIFSN parameters for the four types of ACs to adjust the transmission priority of traffic transmitted using each AC. To this end, EDCA may map traffic (MSDU) that a MAC needs to service to one of the four ACs according to a traffic category (TC) or traffic stream (TS). Here, the traffic mapped to one of the four ACs by EDCA is separately managed in four queues for the respective ACs. The four queues may be queues that are logically separated rather than physically separated. Here, packets mapped to each AC and stored in a transmission queue are transmitted when each AC completes a backoff procedure and obtains a channel access right. A method in which an AC performs a backoff procedure to obtain a channel access right has been described with reference to FIG. 6, and thus a detailed description thereof is omitted.

AC_VO is an AC that may be used for traffic having a low absolute traffic amount and vulnerable to transmission delay, such as voice traffic, and has relatively small CW and AIFSN parameter values to increase a probability of being serviced with priority over traffic of other ACs. A TXOP parameter of AC_VO is limited to a relatively small value compared to TXOP parameters of the other ACs, and thus guarantees only a shorter transmission time than the other ACs.

AC_VI is an AC that may be used for traffic more robust to transmission delay than voice traffic but still requiring low-delay transmission and needing large-amount traffic processing, such as video. AC_VI has CW and AIFSN parameter values greater than those of AC_VO but smaller than those of the other ACs and has a TXOP about twice as long as that of AC_VI.

AC_BE is an AC that may be used for traffic robust to transmission delay, and most general traffic except for voice data and streaming video data may be classified as AC_BE. AC_BE uses CW and AIFSN parameters greater than those of AC_VO and AC_VI. In addition, AC_BE does not have a separate TXOP, and thus may not use a TXOP transmission sequence in which a PPDU is transmitted, an ACK is received in response thereto, and then a PPDU is transmitted again after SIFS.

AC_BK is an AC may be used for traffic robust to transmission delay similar to AC_BE but having a lower priority than that of BE traffic. AC_BK uses the same CW parameter value as that of AC_BE, and uses an AIFSN parameter value greater than that of AC_BE. In addition, AC_BK does not have a separate TXOP like AC_BE, and thus may not use a TXOP transmission sequence.

The foregoing four types of EDCA ACs are mapped to a user priority (UP) of 802.1D, and an EDCA AC is determined according to an UP value of traffic received through a wire or a TID of an MSDU indicated from a higher layer. When the TID of the MSDU indicates a value of 0 to 7, the value indicated by the TID may correspond to the UP one-to-one.

An explanation about a rule for mapping an 802.1D UP and an EDCA AC is replaced with an UP-to-AC mapping table illustrated in FIG. 11.

Further, the foregoing four types of EDCA ACs each have default CW (CWmin, CWmax), AIFSN, and TXOP parameters defined in the standard, and the parameter values for each AC may be changed by an AP so that different values may be used for each BSS.

Using the EDCA mechanism, Wi-Fi traffic is stored in one of the four queues corresponding to the four ACs, and may be transmitted to a destination device only when an AC including the traffic wins channel access contention with other ACs. In the channel access contention between the ACs, each AC performs contention by utilizing an access parameter (CW[AC] and AIFSN[AC]) assigned thereto, and a channel access contention operation performed by each AC is the same as the DCF. Here, when a specific AC does not have any traffic to transmit in the queue, the specific AC may not participate in the contention.

However, as described above, since the respective ACs utilize different CW and AIFSN parameter values, AC_VO with the smallest CW and AIFSN parameters has a high probability of winning the channel access contention with the other ACs, and therefore traffic of AC_VO is more likely to be serviced with priority than traffic of the other ACs.

In addition, although the EDCA mechanism stipulates an internal contention rule, such as allowing an AC with a higher priority (see FIG. 11) to win or increasing a CW of another AC causing a collision when the (internal) collision occurs between ACs, and a rule of constructing a PPDU including traffic of an AC other than an AC (primary AC) winning contention, which are not closely related to the proposal of the present disclosure, a detailed description is omitted.

As described above, each STA affiliated with the MLD performs channel access by the same method as the conventional Wi-Fi terminal. That is, when observing each STA affiliated with the MLD in each link, each STA affiliated with the MLD performs channel access by the same method as that of a non-MLD STA (QoS STA) not affiliated with the MLD, which may be a rule defined considering fairness with existing non-MLD STAs operating in each link when developing Wi-Fi 7.

However, there is an exception defined for an MLD operating in a nonsimultaneous transmit and receive (NSTR) link pair. More specifically, a STA of the MLD operating in the nonsimultaneous transmit and receive (NSTR) link pair is allowed to defer transmission initiation to align a transmission initiation timing to transmission performed in a different link in a situation in which a backoff procedure is completed.

An NSTR link pair refers to a link pair in which transmission performed by an MLD in a specific link causes strong interference to a remaining link among link pairs in which a STA of the MLD operates. For example, in a case where Link1 and Link2 are an NSTR link pair of a non-AP MLD, when non-AP STA1 of the non-AP MLD operating in Link1 performs transmission, non-AP STA2 of the non-AP MLD operating in Link2 receives strong interference. Accordingly, non-AP STA2 is unable to determine whether Link2 is idle/busy or to normally receive a PPDU being received while non-AP STA1 is performing transmission. In this case, even though operating the STAs in the two links, when transmission is performed in one link, the non-AP MLD is unable to normally operate the other link. In Wi-Fi 7, to resolve the above problem, a mechanism is introduced that allows a non-AP MLD to initiate simultaneous transmissions in an NSTR link pair. The mechanism for initiating simultaneous transmissions is briefly described as a mechanism in which even though completing a backoff procedure in a first link, a non-AP MLD defers transmission until a backoff procedure performed in a second link is completed, thereby enabling transmissions in the first link and the second link to be simultaneously initiated.

In addition, an exceptional rule is defined such that while a PPDU is being received in one link of an NSTR link pair, a response frame (e.g., a CTS frame) may not be transmitted in response even though a frame (e.g., an RTS frame) requesting a response is received in the other link of the NSTR link pair.

As described above, since an NSTR link pair has a feature that interference caused by transmission performed by a STA operating in a specific link makes it impossible for a STA operating in a different link to normally operate (to perform CCA and/or receive a PPDU), the same link pair may be an NSTR link pair for a specific MLD and may be a simultaneous transmit and receive (STR) link pair for another MLD. An STR link pair refers to a link pair in which transmission performed by each STA operating in each link of the STR link pair does not affect a STA operating in another link and thus PPDU reception is possible in a different link during PPDU transmission in a specific link.

Each link pair may become an STR link pair for a specific MLD or an NSTR link pair for another MLD according to an interference shielding capability of each MLD. However, when operating channels of a specific link pair overlap, the specific link pair may only be an NSTR link pair regardless of characteristics/performance of an MLD. Accordingly, in Wi-Fi 7, it is stipulated that when an AP MLD and a non-AP MLD perform a multi-link setup to be connected through a plurality of links, operating channels of BSSs operated in the respective links in which the setup is performed are adjusted not to overlap. That is, the operating channels of the links in which the AP MLD and the non-AP MLD performs the multi-link setup do not overlap each other.

<Primary channel dependency problem in conventional Wi-Fi channel access procedure>

An MLD is introduced 1) for increasing throughput by using a plurality of links and 2) for obtaining a channel access right more quickly by performing a channel access procedure through a plurality of links (obtaining the right quickly by performing channel access through one of the plurality of links) than when performing channel access through a single link. However, a method for improving a channel access opportunity by performing a channel access procedure simultaneously in a plurality of links may cause great power consumption as the number of links for performing the channel access procedure increases. That is, the MLD may perform channel access in a plurality of links to increase a channel access probability (frequency), but may have a problem due to power consumption required when performing the channel access in the plurality of links. Therefore, the method using the plurality of links as a solution to increase a channel access probability (frequency) may be considered to be a limited solution, and a method for increasing the probability (frequency) of success in a channel access procedure performed in each link is needed. For example, a channel access procedure is performed through one or more links to obtain a channel access right more quickly than a channel access procedure through one link, but may use a certain number of links or fewer in consideration of power consumption. For example, when a channel access procedure is impossible in a primary channel, the channel access procedure may be performed by selecting one of non-primary channels (or secondary channels) in an idle state without waiting until the primary channel is changed to the idle state.

Therefore, to support "ultra-high reliability (UHR)" which is a development goal of Wi-Fi 8, it is necessary not only to optimize a method of utilizing a plurality of links which is a characteristic of the MLD but also to support STAs operating in each link to obtain a channel access opportunity by an optimum method.

Accordingly, it is necessary to analyze channel accessibility of a Wi-Fi terminal that performs channel access in each link. Wi-Fi standards have achieved significant improvements in throughput through generations, and recently standardized Wi-Fi 7 supports a throughput exceeding 30 Gbps. One reason why Wi-Fi 7 is able to support extremely high throughput compared to legacy Wi-Fi standards is a wide operating BW of Wi-Fi 7. A conventional Wi-Fi terminal uses a 20 MHz bandwidth as an operating BW, while Wi-Fi 7 operates with an operating BW of up to 320 MHz. That is, maximum throughput is increased by 16 times only by extending a maximum operating bandwidth (BW) supported by the Wi-Fi standard. However, the maximum throughput of the Wi-Fi standard increased by extending the operating BW is merely a nominal value, and is difficult to lead to actual improvement in performance of a Wi-Fi terminal.

That is, even though a supportable maximum operating BW is continuously being extended through advancement of a Wi-Fi terminal/standard, the influence on actual performance of the Wi-Fi terminal is relatively small. This is because there is a low probability that all wide bands included in the maximum operating BW is identified as idle at a time when the Wi-Fi terminal performs channel access, and a method for the Wi-Fi terminal to perform channel access has excessively high dependency on a primary 20 MHz channel. The low probability that all of the wide bands included in the operating BW are identified as idle may be an inherent problem due to a frequency band in which the Wi-Fi terminal operates being an unlicensed band. That is, it is natural for a medium to be occupied by other devices operating in the unlicensed band, and it is impossible to increase the channel access probability of the Wi-Fi terminal by solving the problem. However, the excessively high dependency on the primary 20 MHz channel is a feature inherited in the course of maintaining a channel access method traditionally used in conventional Wi-Fi rather than a feature of Wi-Fi that has been maintained for a harmonious operation with heterogeneous devices. In detail, the Wi-Fi standards are designed to perform channel access for a 40 MHz channel by extending a channel access method used in an operating BW of 20 MHz. More specifically, in a method for accessing a 40 MHz channel according to the method defined in the Wi-Fi standards, access to a 40 MHz band (40 MHz band including a primary 20 MHz band and a secondary 20 MHz band) is performed when a secondary 20 MHz channel is identified as idle for a past priority inter frame space (PIFS, aSIFSTime (16 us) + aSlotTime (9 us)) at a time when a backoff procedure is completed in a primary 20 MHz channel. Similarly, in a method for accessing an 80 MHz channel according to the method defined in the Wi-Fi standards, access to an 80 MHz band (80 MHz band including a primary 20 MHz band, a secondary 20 MHz band, and a secondary 40 MHz band) is performed when a secondary 20 MHz channel and a secondary 40 MHz channel are identified as idle for a past priority inter frame space (PIFS, aSIFSTime (16 us) + aSlotTime (9 us)) at a time when a backoff procedure is completed in a primary 20 MHz channel. A Wi-Fi wide band operation method of accessing subchannels identified as idle for a PIFS when a backoff procedure is completed in a primary 20 MHz channel is applied in the same manner when accessing a 320 MHz BW defined in Wi-Fi 7. The reason for repeated use of this method is because wide bandwidth access is possible in an energy-efficient manner and with reduced hardware implementation burden by performing a backoff only in one channel (primary channel) and determining accessibility of other subchannels for a minimum time interval.

However, this channel access method using the primary channel has a significant disadvantage that when the primary 20 MHz channel in which a Wi-Fi terminal performs a backoff procedure is identified as busy, even though all subchannels except the primary 20 MHz channel are available (not occupied by other devices), the Wi-Fi terminal is unable to complete the backoff procedure, and thus channel access to the wide idle subchannels is also impossible.

As described above, the problem that channel access of a Wi-Fi terminal supporting a wideband operation is limited according to a CCA result of a primary 20 MHz subchannel is not a newly generated problem in UHR. However, UHR, which inherits Wi-Fi 7 supporting an ultra-wideband operation of up to 320 MHz, may receive greater loss caused by the foregoing dependency on the primary 20 MHz subchannel than the conventional Wi-Fi standards. In addition, next-generation standards following UHR may also experience performance degradation due to the foregoing dependency on the primary 20 MHz subchannel, and therefore the foregoing channel access problem related to the primary 20 MHz subchannel needs to be resolved.

Accordingly, the present disclosure provides a method and a procedure in which a terminal supporting a wideband operation performs communication by using a subchannel other than a primary 20 MHz subchannel determined to be busy when a CCA result of the primary 20 MHz subchannel is busy.

For example, when a PPDU is received through a primary 20 MHz subchannel and a result of CCA performed based on the received PPDU indicates that the primary 20 MHz subchannel is busy, a channel access procedure may be performed by selecting one of subchannels (non-primary 20 MHz subchannels) other than the primary 20 MHz subchannel. Here, the CCA of the PPDU may be performed based on a preamble of the PPDU. Another subchannel in which the channel access procedure is performed other than the primary 20 MHz subchannel may be included in an operating channel the same as or different from primary 20 MHz.

<Channel access not using non-primary channel>

As a simplest method for solving the foregoing problem of dependency on a primary 20 MHz subchannel (hereinafter, a P20 channel), a method of performing channel access by using (or through) other subchannels (non-primary channels) except for a P20 channel may be considered. Performing channel access by using (through) a non-primary channel means that a backoff procedure is performed based on whether the non-primary channel is idle or busy. Here, there may be one or more non-primary channels in which a terminal is able to perform a backoff procedure. That is, the terminal may perform a backoff procedure through a P20 channel or a plurality of non-primary channels (e.g., a first non-primary channel or a second non-primary channel). The channels (i.e., P20, the first non-primary, the second non-primary channel, and a third non-primary) in which the terminal is able to perform the backoff procedure may be 20 MHz subchannels included respectively in different 80 MHz subblocks. That is, the first non-primary channel may need to be located in an 80 MHz subblock other than an 80 MHz subblock including the P20 channel. That is, when selecting a different backoff channel (non-primary channel) other than P20, the terminal needs to select a different backoff channel (non-primary channel) among 20 MHz subchannels of an 80 MHz subblock not including the P20 subchannel (i.e., a subblock other than a primary 80 MHz subblock). In this case, different backoff channels selected by the terminal may need to be located respectively in different 80 MHz subblocks. That is, the first non-primary channel may be a subchannel located in an 80 MHz subblock different from the second non-primary channel. The foregoing restriction on selection of a subchannel related to an 80 MHz subblock may be applied only when an operating channel of a BSS is included in a 5 GHz or 6 GHz band.

Channel access using a non-primary channel may be limitedly performed only for a time interval in which a P20 channel is determined to be busy. That is, the channel access using the non-primary channel (hereinafter, non-primary channel access) may be performed only when the P20 channel is determined to be busy as a result of physical CCA (energy detection: ED), PD, and virtual CCA. In addition, the non-primary channel access may be limitedly allowed only for a STA (AP STA or non-AP STA) that is not a destination device of a frame identified in the P20 channel when the P20 channel is busy. Therefore, the non-primary channel access procedure may be limitedly allowed only when a preamble of the PPDU received in the P20 channel is successfully detected or an MPDU is successfully decoded. Therefore, the non-primary channel access procedure may be limitedly allowed for a STA that has successfully received a frame received in the P20 channel.

That is, when an MLD (AP MLD or non-AP MLD) operates in one P20 and one or more non-primary channels, one of STAs (APs or non-APs) included in the MLD may perform a channel access procedure in the P20 channel. In this case, the STA may receive a PPDU in the P20 channel, and may perform CCA, based on the received PPDU. When a CCA result indicates that the P20 channel is idle and the PPDU received in the P20 channel is transmitted from an overlapping BSS (OBSS), the STA may select one of one or more non-primary channels and perform a channel access procedure through the selected non-primary channel. The non-primary channel in which the channel access procedure is performed may be in an idle state.

That is, a backoff operation and a channel access procedure using a different subchannel other than a P20 channel may be limited to a case in which a PPDU detected in the P20 channel is a PPDU of an OBSS. Therefore, the backoff operation and the channel access procedure using the different subchannel may be limitedly allowed only when the PPDU detected in the P20 channel is a PPDU of which a destination device is not a device receiving the PPDU.

To this end, the backoff operation and the channel access procedure using the different subchannel other than the P20 channel may be initiated after identifying a BSS color of an HE-SIG and/or a U-SIG or identifying a STA-ID of an EHT-SIG and/or a UHR-SIG by decoding a preamble of the PPDU detected in the P20 channel or after identifying the destination device by decoding a first MAC frame of the PPDU in order to identify the destination device of the PPDU or the OBSS. That is, to determine whether the received PPDU has been transmitted from the OBSS, a STA may identify the BSS color included in a SIG field (e.g., the HE-SIG (HE-SIG-A or HE-SIG-B) or the U-SIG) included in the preamble of the PPDU, or may identify the station identifier (STA-ID) included in the SIG field (e.g., the HE-SIG-B, the EHT-SIG, or the UHR-SIG). Alternatively, the STA may identify the destination device by decoding the first MAC frame of the PPDU.

Here, when a transmitter/receiver of a specific PPDU and a transmitter/receiver MAC address of a frame included in the PPDU are an AP with which the STA is associated, the specific PPDU may be classified as a PPDU (intra-BSS PPDU) other than an OBSS PPDU. In this case, the backoff procedure using the different subchannel other than the P20 channel may needs to be initiated after identifying whether the different subchannel is idle for a DIFS. Here, when the identified BSS color is not a BSS color of the STA, decoding of the STA-ID and the MAC frame performed to identify the destination device may be omitted. A method for identifying whether the different subchannel is idle may be performing PHY CCA (energy detection and/or packet detection) for a preset time. The preset time may be a priority inter frame space (PIFS), a distributed inter frame space (DIFS), or a medium sync time. The medium sync time may be a time interval having a different name, and may refer to a time during which a device to perform a backoff procedure in a secondary channel needs to perform CCA to determine whether a medium is idle or busy. The medium sync time may have a length of tens of ms, and may be shorter than a maximum PPDU length (5.484 ms). A terminal that performs CCA by applying a medium sync time may configure an NAV by using information included in a PPDU (frame) received while performing the CCA. Here, an NAV configured based on a PPDU (frame) received by the terminal in a S20 channel (subchannel other than the primary 20 MHz channel) may be an NAV different from two NAVs (basic NAV and intra-BSS NAV) used in conventional Wi-Fi. The different NAV is a timer configured by the frame (PPDU) received through S20, and is an NAV used for virtual CCA of the S20 channel when channel access is performed through the S20 channel. That is, even though the different NAV has been configured by the frame (PPDU) received in the S20 channel and the value of the different NAV is not 0, the terminal may determine that the result of CCA performed in the P20 channel is idle. That is, the different NAV is an NAV for the S20 channel, not for the P20 channel. The different NAV may be referred to as a secondary NAV.

Therefore, when the terminal performing the channel access through the S20 channel is an AP STA, the AP may need to manage both a basic NAV configured based on a frame (PPDU) received while occupying the primary 20 MHz subchannel and a secondary NAV configured based on a frame (PPDU) received without occupying the primary 20 MHz subchannel (i.e., received through the S20 channel). That is, the AP needs to perform a backoff procedure in consideration of the basic NAV when performing channel access through the P20 channel, and needs to perform a backoff procedure in consideration of the secondary NAV when performing channel access through the S20 channel. The secondary NAV may be a timer that is initialized to a medium sync time value when the terminal that has performed channel access through the P20 channel determines to perform channel access through the S20 channel. That is, when determining to perform channel access through S20, the AP may need to initiate CCA of the S20 channel and simultaneously initialize the secondary NAV to a medium sync time value.

A STA that has performed channel access through a different subchannel other than the primary 20 MHz subchannel and then has performed a frame exchange may needs to perform a procedure for identifying whether the primary 20 MHz subchannel is occupied by a different BSS and a different device when initiating a channel access procedure in the primary 20 MHz subchannel after completion of the frame exchange performed through the different subchannel. A method for the STA to identify whether the P20 channel is occupied by a different BSS or a different device may include performing CCA of the P20 channel for a medium sync time. Here, when the STA receives a valid PPDU (frame) while performing the CCA for the medium sync time, the STA may configure an NAV for the P20 channel, based on information obtained through the received PPDU (frame). In this case, the STA may resume the channel access procedure performed in the primary 20 MHz subchannel when the configured NAV is released (when an NAV timer becomes 0).

Here, the backoff procedure using the different subchannel may be compensated by a time delayed to decode the preamble of the PPDU detected in the P20 channel or to decode the MAC frame. In an embodiment, when a 3-slot time (e.g., 27 us) is consumed to identify the destination device (or BSS color) of the PPDU identified in the P20 channel, an operation of reducing a backoff counter used for channel access using a different subchannel other than the P20 channel by 3 at once may be allowed. Alternatively, since channel access using a different subchannel other than the P20 channel is an additional function not used by conventional devices, the operation of reducing the backoff counter at once may not be allowed, and the backoff counter may be reduced by 1 in a sequential manner after identifying the destination device of the PPDU detected in the P20 channel. That is, separate compensation for the backoff procedure delayed in a process of identifying the destination device of the PPDU detected in P20 may not be performed.

The following embodiments of the present disclosure may omit the foregoing process of identifying the destination device of the PPDU received in the P20 channel for convenience of description. Therefore, even though not separately described, a channel access procedure performed using a subchannel other than a P20 channel should be understood as including a process of identifying a destination device of a PPDU received in the P20 channel.

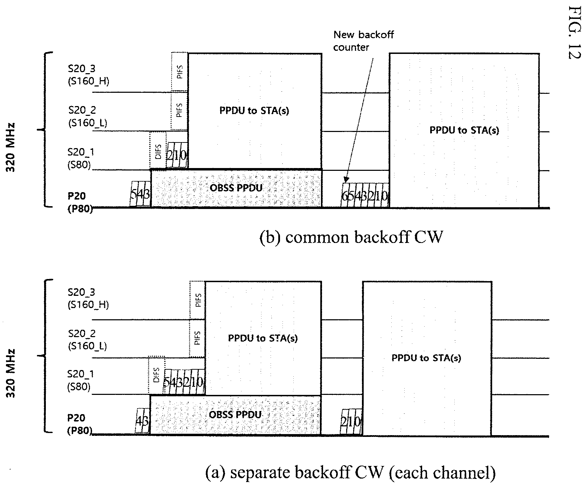

FIG. 12 illustrates an example of a channel access procedure through a non-primary channel when a primary channel is in a busy state.

Referring to FIG. 12, when a primary 20 MHz subchannel is determined to be busy as a result of CCA, a terminal may perform channel access by using a non-primary 20 MHz subchannel other than the primary 20 MHz subchannel.

Specifically, when a P20 channel is determined to be busy (e.g., when the P20 channel is determined to be busy as a result of CCA based on a preamble of a received PPDU), a STA (AP STA or non-AP STA) included in an MLD may perform channel access by using a channel other than the P20 channel. Here, an operation of performing the channel access may be performing a backoff according to the result of CCA of the other channel. Here, the backoff operation may be an operation of reducing a backoff count by 1 when the result of the CCA performed on the other channel in each slot is idle. In addition, the backoff operation may be an operation of not reducing but maintaining the backoff counter when the result of the CCA performed on the other channel in each slot is busy.

A S20 channel which may be used for channel access using a 20 MHz subchannel other than the P20 channel is not specifically limited to a particular S20 channel, and a plurality of S20 channels may be used. For example, assuming that the STA performs a 320 MHz operation as in an embodiment of FIG. 12, not only channel access using a S20_1 channel included in a secondary 80 MHz subblock but also channel access through S20_2 and S20_3 included in a secondary 160 MHz subblock may be possible as shown in FIG. 12. Here, the number of S20 channels used by each STA for channel access may be determined according to a capability of each STA, or may be limited to one or two particular S20 channels. However, the STA may perform a backoff in only one non-primary subchannel per 80 MHz subblock. Each non-primary subchannel in which the STA performs a backoff is a subchannel determined by an AP, and thus is indicated through a management frame transmitted by the AP. That is, the AP may indicate information about a different subchannel (S20) in which a backoff may be performed when the primary channel (P20) is busy through a management frame (e.g., a beacon, a probe response, or an association response frame) transmitted by the AP, and the different subchannel is one of subchannels included in an 80 MHz subblock other than a primary 80 MHz subblock.

Referring to FIG. 12(a), a backoff counter used when performing channel access in a P20 channel and a backoff counter used when performing channel access in a S20 channel may separately exist and be managed. In this case, the backoff counter used by each channel may be changed to a new value of the backoff counter only when transmission is performed as a result of the channel access performed in each channel (when a backoff is completed). Changing the backoff counter to the new value may mean that the backoff counter is changed to a new backoff counter selected using CW_min when the transmission succeeds or that the backoff counter is changed to a new backoff counter selected using CW x 2 when the transmission fails. That is, changing the backoff counter to the new value does not mean an operation of reducing the backoff counter as a result of CCA. Here, when there is a plurality of S20 channels for performing channel access as described above, each of the plurality of S20 channels may have a backoff counter. The backoff counter for each S20 channel may exist for each access category. That is, the terminal may need to separately manage the backoff counter for each AC for each S20 channel in which the terminal is able to perform a backoff. That is, the terminal that performs a backoff procedure through a S20 channel may perform a channel access procedure by using four ACs internally.

Referring to FIG. 12(b), all S20 channels for performing channel access including P20 may use a common backoff counter. As shown in FIG. 12(b), as a result of a channel access operation performed in the P20 channel, the backoff counter is reduced from 5 to 3, and then the P20 channel is changed to busy. According to an embodiment proposed in the present disclosure, when the P20 channel is busy, a channel access procedure may be performed in the S20 channels, and the backoff counter, which has been reduced to 3 by P20, may be reduced in succession according to the result of CCA performed on S20_1 as in FIG. 12(b). When S20_1 is also determined to be busy while reducing the backoff counter for channel access, channel access using S20_2 may start, or the backoff counter may be maintained as is until P20 or S20_1 is determined to be idle. Here, a case in which the channel access using S20_2 is performed may be understood as an embodiment in which two or more S20 channels are used for channel access, and a case in which the backoff counter is maintained until P20 or S20_1 is determined to be idle may be understood as an embodiment in which one S20 channel is used for channel access.

<Restriction on transmission through non-primary channel>

As described above, a STA (non-AP STA or AP) included in an MLD (non-AP MLD or AP MLD) that operates in one primary channel and one or more non-primary channels may attempt a channel access procedure in the primary channel. Here, as a result of CCA performed to perform a channel access procedure in the primary channel, when the primary channel is in an idle state, the STA may perform channel access procedure in the primary channel. However, when the primary channel is determined to be busy as a result of CCA performed based on a preamble of a PPDU received in the primary channel, the STA is unable to perform a channel access procedure until the primary channel is changed to idle. Therefore, in this case, the STA may not wait until the primary channel is changed to the idle state, but may select one non-primary channel in the idle state from among one or more non-primary channels to perform a channel access procedure.

The STA that performs the channel access procedure by using the non-primary channel (S20 channel) other than the primary channel may have a restriction in the length of a PPDU to be transmitted. The PPDU transmission length restriction may be required for two reasons. Here, the length of a PPDU transmitted after a backoff procedure is performed in the S20 channel may be restricted such that the PPDU terminates before the end time of a PPDU recognized by a PPDU (and/or frame) identified in the P20 channel. That is, when the STA that performs the channel access in the non-primary channel transmits a PPDU (second PPDU) in the non-primary channel, the length of the PPDU transmitted in the non-primary channel may be restricted by the length of the PPDU (first PPDU) received in the primary channel for CCA. For example, the length of the second PPDU may be the same as or shorter than the length of the first PPDU. Here, the length of the first PPDU for restricting the length of the second PPDU may be identified by a Length field included in a preamble of the first PPDU.

One reason that the restriction is needed may be for preventing a problem which may arise when transmission by an OBSS device that has occupied the P20 channel terminates while transmission started using the S20 channel is maintained. More specifically, transmission performed after performing channel access through the S20 channel is performed through a subchannel(s) other than the P20 channel, and an AP is unable to provide any service, such as transmission/reception or scanning, in the P20 channel during the transmission. Therefore, when the transmission in S20 terminates later than an OBSS PPDU identified in P20, the AP is unable to identify and receive another STA UL PPDU or OBSS PPDU identifiable in the P20 channel. In this case, it is impossible not only to receive a UL PPDU of the STA but also to configure an NAV by an OBSS PPDU, and thus a problem may occur in an overall BBS operation. Another reason that the PPDU transmission length restriction is needed may be for mitigating a fairness issue. When the length restriction is not applied to transmission performed after channel access through the S20 channel, a fairness issue with a conventional Wi-Fi STA that performs channel access only through the P20 channel may arise. Therefore, by restricting the length of a PPDU transmitted through channel access through a S20 channel in addition to restricting the number of S20 channels for performing channel access through a S20 channel as described above, it may be needed to alleviate the fairness issue with the conventional Wi-Fi STA.

In addition, a device that performs channel access by using a non-primary channel (S20 channel) other than a primary channel (P20 channel) may have a restriction in the length of a TXOP obtained after performing a backoff procedure in a different sub-channel (S20) other than a primary 20 MHz channel. The length of the TXOP obtained after performing the backoff procedure in the S20 channel may be restricted such that the TXOP terminates before the end time of a TXOP of an OBSS recognized by a PPDU (and/or frame) received in the P20 channel. That is, a STA that performs channel access in the non-primary channel (S20 channel) other than the primary channel (P20 channel) may have a restriction in the length of a TXOP obtained through the channel access procedure. For example, the length of the TXOP (second TXOP) obtained by the STA through the channel access procedure in the non-primary channel may be the same as or shorter than the length of a TXOP (first TXOP) based on a PPDU (first PPDU) of the primary channel. Here, the length of the first TXOP may be obtained based on a TXOP field included in a preamble of the first PPDU.

The TXOP length restriction may be required for two reasons. One reason that the restriction is needed may be for preventing a problem that may arise when a TXOP of an OBSS device that has occupied the P20 channel terminates while a TXOP obtained using the S20 channel (subchannel other than the primary 20 MHz channel) is maintained. More specifically, the TXOP obtained through S20 channel is applied to a frequency range occupied by a subchannel(s) other than the P20 channel, and terminals may be unable to perform transmission/reception or CCA in the P20 channel while a frame exchange is performed using the TXOP. Therefore, when transmission in the S20 channel terminates after the TXOP of the OBSS identified in the P20 channel, the terminals are unable to identify and receive another OBSS PPDU identifiable in the P20 channel. In this case, it is impossible not only to receive a UL PPDU of the STA but also to configure an NAV by an OBSS PPDU, and thus a problem may occur in an overall BBS operation. Another reason that the PPDU transmission length restriction is needed may be for mitigating a fairness issue. Another aspect for which the PPDU transmission length limit is required may be to mitigate a fairness issue. When the length restriction is not applied to a TXOP obtained after performing channel access through the S20 channel, a fairness issue with a conventional Wi-Fi terminal that performs channel access only through the P20 channel may arise. Therefore, by restricting the length of a TXOP obtained through channel access through a S20 channel in addition to restricting the number of S20 channels for performing channel access through a S20 channel as described above, it may be needed to alleviate the fairness issue with the conventional Wi-Fi STA.

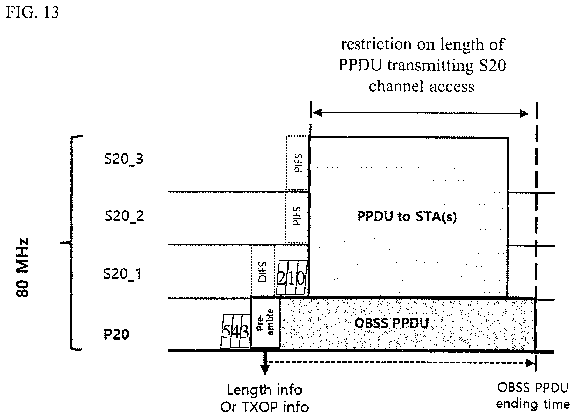

FIG. 13 illustrates an embodiment of a restriction on the transmission length of a PPDU transmitted after channel access is performed through a non-primary channel.

Referring to FIG. 13, the length of a PPDU transmitted through a non-primary channel (S20 channel) by an STA performs a channel access procedure through the non-primary channel other than a primary channel (P20 channel) may be restricted to be the same as or shorter than the length of a PPDU transmitted through the primary channel (e.g.,, a PPDU received by the STA through the primary channel for CCA).

Specifically, a situation in which a terminal having identified the P20 channel as busy completes a backoff procedure and transmits a PPDU through a S20_1 channel is illustrated. Here, a backoff counter of the backoff procedure performed in the S20_1 channel may be a backoff counter shared with the P20 channel, or may be a separate backoff counter used for channel access through the S20_1 channel. Although FIG. 13 shows that S20 channels exist in the same 80 MHz subblock as the P20 channel, the S20 channels that perform a backoff when the P20 channel is busy may be located in a different 80 MHz subblock from the 80 MHz subblock including the P20 channel.

Before starting channel access through the S20_1 channel, the STA may detect a preamble of an OBSS PPDU during a process of attempting channel access through the P20 channel, and may identify that the P20 channel is occupied (busy) by an OBSS. In this situation, the STA may decode the preamble of the OBSS PPDU to identify how long the OBSS PPDU will last. Here, an operation of the STA to be performed after identifying how long the OBSS PPDU will last may be configuring an NAV. The STA may identify the duration of the OBSS PPDU by identifying L-SIG and Length fields of the detected preamble or based on a value indicated through a TXOP field included in a U-SIG field and/or an HE-SIG field of the OBSS PPDU. Alternatively, the STA may identify the duration of the OBSS PPDU, based on a Duration/ID field of a MAC frame included in the PPDU.

Subsequently, the STA may determine the length of a PPDU to be transmitted after performing channel access through the S20 channel, based on the end time of the OBSS PPDU identified in the P20 channel. The length of the PPDU to be transmitted after performing the channel access through the S20 channel may be restricted/adjusted such that the PPDU terminates at the same time as the predicted end time of the OBSS PPDU identified in the P20 channel or earlier. A method for restricting the length of the PPDU may be adjusting the end time of a response frame expected to respond with to the PPDU to be the same as or earlier than the end time of the OBSS PPDU. The response frame may refer to a PPDU including an ACK frame or a block ACK frame and a trigger-based (TB) PPDU. That is, the end time of a PPDU to respond with to the PPDU may be restricted to be earlier than or the same as the predicted end time of the OBSS PPDU identified in the P20 channel.

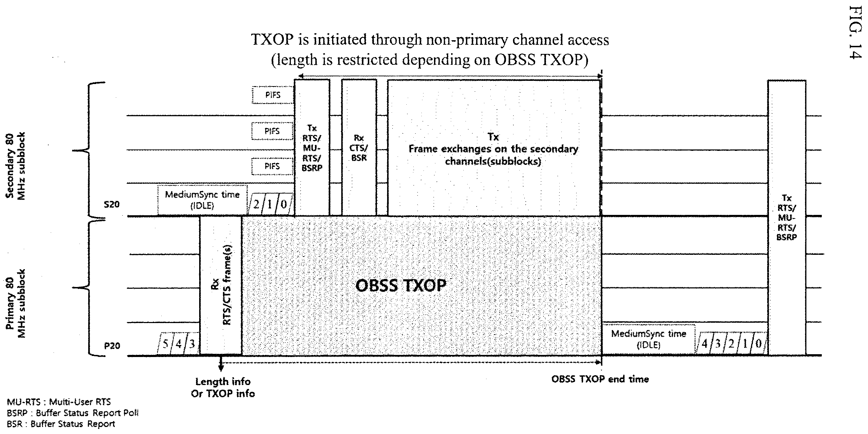

FIG. 14 illustrates an embodiment of a method for restricting the length of a TXOP obtained through channel access through a non-primary channel.

Referring to FIG. 14, the length of a TXOP based on a PPDU transmitted through a non-primary channel (S20 channel) by an STA performs a channel access procedure through the non-primary channel other than a primary channel (P20 channel) may be restricted to be the same as or shorter than the length of a TXOP based on a PPDU transmitted through the primary channel (e.g.,, a PPDU received by the STA through the primary channel for CCA).

Specifically, a situation in which a terminal having identified the P20 channel as busy completes a backoff procedure and obtains a TXOP through a subchannel (S20 channel) included in a secondary 80 MHz subblock is illustrated. Here, a backoff counter of the backoff procedure performed through the S20 channel may be a backoff counter shared with the P20 channel, or may be a separate backoff counter used when a backoff operation is performed in a subchannel included in the secondary 80 MHz subblock.

The terminal that has identified the P20 channel as busy and intends to perform a backoff procedure through S20 performs CCA on the S20 channel for a time period corresponding to a medium sync time to protect communication of the OBSS in which transmission/reception using the S20 channel may be ongoing. In FIG. 14, the state of S20 observed by the terminal for the time corresponding to the medium sync time is idle, and thus the terminal starts a backoff procedure in the S20 channel.

A TXOP obtained by the terminal when completing the backoff procedure performed through S20 channel is configured to terminate at the same time point as a TXOP (OBSS TXOP) included in a frame (an RTS/CTS frame in FIG. 14) transmitted by occupying the P20 channel. Although the embodiment of FIG. 14 shows that the two TXOPs terminate at the same time point, the TXOP obtained after performing the backoff through the subchannel included in the secondary 80 MHz subblock may be configured to terminate before the OBSS TXOP.

The terminal obtaining the TXOP after performing the backoff through the S20 channel may utilize a Duration/ID field of a (MU-)RTS and/or CTS and/or buffer status report poll (BSRP)/buffer status report (BSR) frame received in the primary 20 MHz subchannel to identify the length of the TXOP of the OBSS occupying the P20 channel. That is, when the frame transmitted by a STA of the OBSS is received through the primary 20 MHz subchannel, the terminal identifies the length of the TXOP of the OBSS, based on information indicated by the Duration/ID field of the received frame. The terminal configures an NAV corresponding to the primary 20 MHz subchannel, based on the identified length, and needs to adjust the length of the TXOP obtained by the terminal such that the TXOP terminates at the same time as or earlier than the identified TXOP of the OBSS when obtaining the TXOP after completing the channel access procedure (backoff procedure) through the subchannel included in the secondary 80 MHz subblock.

After the TXOP obtained through the S20 channel terminates, the terminal performs CCA on the P20 channel for the period corresponding to the medium sync time to resume channel access through P20. When a valid frame (PPDU) is received before the time corresponding to the medium sync time expires, the terminal may configure an NAV, based on information obtained through a field related to the length of the received frame (PPDU), and may resume the channel access procedure through the P20 channel when the NAV is released. In the example of FIG. 14, P20 is observed to be idle until the time corresponding to the medium sync time completely expires, and thus the terminal resumes the channel access procedure after the time corresponding to the medium sync time expires.

<Restriction on channel access procedure through S20 channel (non-primary channel)>

A series of channel access procedures performed through a S20 channel described above may be a channel access procedure allowed only for an AP STA. That is, a channel access procedure through a S20 channel other than a P20 channel may be a channel access procedure that a non-AP STA is unable to perform.

The reason why the channel access procedure through the S20 channel is allowed only for the AP STA is that even though STAs belong to a single BSS, the states of the P20 channel identified by the respective STA may be different. Assuming that a first non-AP STA and a second non-AP STA are associated with a BSS operated by an AP, the first non-AP STA recognizes that the P20 channel is busy after receiving a PPDU transmitted from an OBSS, while the AP and the second non-AP STA has failed to receive the PPDU and may thus recognize that the P20 channel is idle. In addition, a case may also occur in which the second non-AP STA has received a PPDU, but the first non-AP STA has not received the PPDU. The states of the P20 channel identified respectively by non-AP STAs belonging to the same BSS may be different from each other, and the state of the P20 channel identified by each STA and the state of the P20 channel identified by the AP may also be different. In this case, even though a non-AP STA having determined that the P20 channel is busy performs channel access and transmits a UL PPDU through the S20 channel, the AP may determine that P20 is idle, and may still continue a channel access procedure in the P20 channel. That is, the PPDU transmitted by the non-AP STA after performing channel access in S20 is impossible to be normally received by the AP when the P20 channel is identified by the AP as idle. Moreover, a case may occur in which while the non-AP STA having determined that the P20 channel is busy is performing channel access and transmitting a UL PPDU through the S20 channel, the AP completes channel access in the P20 channel and transmits a PPDU to the non-AP STA. In this case, the non-AP STA is unable to normally receive the PPDU received in P20 due to transmission of the PPDU performed in the S20 channel. Thus, since the states of the P20 channel identified by STAs (AP STA and non-AP STA) belonging to a BSS may be different, each non-AP STA may be restricted from performing a channel access procedure in the S20 channel even though the P20 channel identified by the non-AP STA is determined to be busy. However, when the P20 channel is determined to be busy, the non-AP STA may need to wait to receive a PPDU that may be transmitted on the S20 channel.

The AP may need to transmit a frame in a preconfigured format as a first frame transmitted after performing channel access in the S20 channel in order to identify whether a reception target device of frames to be transmitted by the AP after performing channel access in the S20 channel is in a receivable state in S20 channel. The preconfigured format may be a request-to-send (RTS), a multi-user RTS (MU-RTS), a buffer status report poll (BSRP), or a trigger frame of another type. That is, the AP may need to transmit a first PPDU transmitted after performing the channel access through the S20 channel, including the frame in the preconfigured format.

That is, the first frame transmitted after the channel access procedure by the AP having performed the channel access procedure in the S20 channel other than the P20 channel may be in the preconfigured format. For example, the first frame transmitted after the channel access procedure by the AP having performed the channel access procedure in the S20 channel may be a frame including no data. That is, since a channel for a STA associated with the AP may not yet have changed after the channel access procedure, the AP may first transmit a frame including no data in a specific format after the channel access procedure.

The frame in the preconfigured format transmitted by the AP is a frame for requesting a response of an immediate response frame from one STA or a plurality of STAs, and thus when the AP transmits the frame in the preconfigured format, a response frame is received in response from STAs having received the frame.

When receiving response frames in response to the frame in the preconfigured format transmitted by the AP, the AP may recognize that the STAs having transmitted the response frames are STAs that are able to support reception of a PPDU transmitted through S20. Therefore, after transmitting the frame in the preconfigured format, the AP may transmit frames of which a destination device is the STAs having responded with the response frames to the frame through a next PPDU.

More specifically, the AP may request a first STA and a second STA to respond with a response frame through the frame in the preconfigured format transmitted after performing channel access through S20. Here, when receiving a response frame from the first STA and not receiving a response frame from the second STA, the AP may include an MPDU of which a destination device is the first STA and not include an MPDU of which a destination device is the second STA in a PPDU to be transmitted next. That is, when failing to receive a response frame to the frame in the preconfigured format transmitted through S20 from a specific STA, the AP is not to include an (individually addressed) MPDU of which a destination device is the specific STA in PPDUs transmitted through the channel access.

<Normative operation restriction on channel access through S20>

All terminals that perform communication using an unlicensed band need to perform a normative channel access operation to ensure that each terminal access a medium in a harmonious and fair manner. European Telecommunications Standards Institute (ETSI)'s Broadband Radio Access Networks (BRAN) committee has defined a harmonized standard related to a channel access method of terminals utilizing an unlicensed band, and a Wi-Fi terminal also performs an operation by using the unlicensed band, and thus needs to follow the standard defined by ETSI BRAN. An EDCA mechanism that is a channel access method used in conventional Wi-Fi is defined as one of normative channel access methods by ETSI BRAN, and therefore conventional Wi-Fi terminals perform channel access through a normative operation defined by ETSI BRAN.

Among standards defined in relation to the EDCA mechanism, there is a regulation regarding a change of a channel (primary operating channel) in which a backoff operation is performed through the EDCA mechanism. Specifically, the regulation is that a terminal performing channel access through EDCA is not allowed to change a primary operating channel more than once per second. That is, when a channel (primary operating channel) for performing a backoff procedure is changed, a terminal that performs channel access through EDCA needs to perform channel access by using the changed channel for at least 1 second. Here, a time for which channel access is performed by using a specific subchannel may be calculated based on the start time of transmission of a PPDU transmitted first among PPDUs transmitted after the channel access is performed by using the specific subchannel. That is, when the start time of a first PPDU transmitted by the terminal after changing a primary operating channel to S20 is T1, the terminal is allowed to change the primary operating channel to a different subchannel (primary 20 MHz subchannel or another subchannel) other than S20 from 1 second after T1.

Therefore, a channel access operation through a S20 channel provided in the present disclosure may be available only when a channel access operation through a P20 channel is maintained for 1 second or more. In addition, a terminal that performs a channel access operation through a S20 channel needs to attempt the channel access operation for 1 second or more through the S20 channel, and then is allowed to switch to perform channel access through the P20 channel after having maintained the channel access operation through the S20 channel for 1 second or more. Here, 1 second is for illustration, and a different time length that is pre-agreed may be applied to perform the same operation/restriction.

That is, the terminal needs to attempt a channel access procedure in a primary channel for a predetermined time (e.g., 1s) in order to perform a channel access procedure in a non-primary channel, and when subsequently performing a channel access procedure in the non-primary channel, the terminal needs to attempt the channel access procedure in the non-primary channel for the predetermined time (e.g., 1s). For example, when performing a channel access procedure in a non-primary channel, the terminal needs to perform an operation (e.g., a channel access procedure) in the non-primary channel for a predetermined time (e.g., 1 s).

That is, non-AP STAs recognizing that an AP performs channel access through a S20 channel may need to perform an operation by considering the S20 channel to be the same as a basic channel until the AP is allowed to perform channel access through a P20 channel. That is, the non-AP STAs recognizing that the AP performs channel access through the S20 channel need to wait to perform channel access in the S20 channel or to receive a PPDU transmitted from the AP until the AP switches to a state of being allowed to perform channel access in the P20 channel. Here, the AP may indicate information about a time when the AP performs the channel access through the S20 channel or a time when the AP is allowed to switch to a channel access operation through the P20 channel to the non-AP STAs by using a management frame (e.g., a beacon frame) transmitted by the AP. That is, the AP may indicate, through the management frame transmitted by the AP, information about a time to switch to a channel access operation through the P20 channel in a time interval in which the AP needs to perform the channel access through the S20 channel. When the management frame transmitted by the AP is received and the information about the time when the AP switches to the channel access operation through the P20 channel is included in the management frame, the non-AP STAs may recognize whether a channel for the AP to perform channel access is the P20 channel or the S20 channel, based on the indicated information.

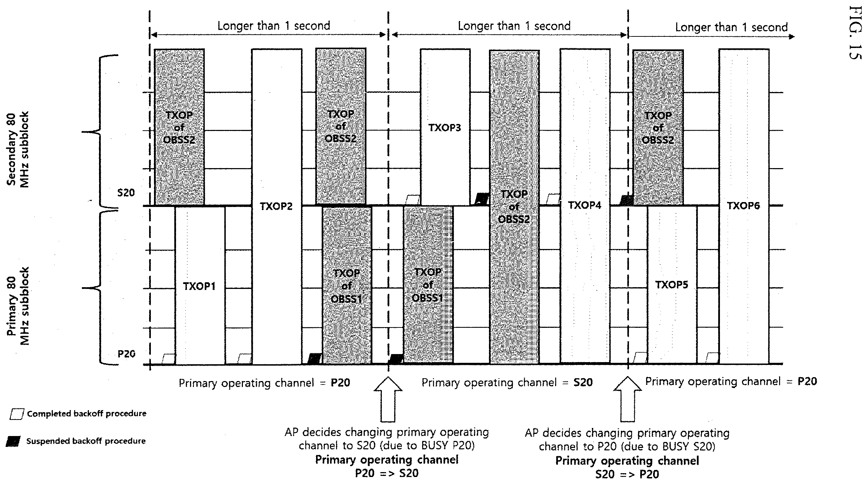

FIG. 15 illustrates a method in which an AP that obtains a TXOP through a primary channel and a non-primary channel manages a primary operating channel according to an embodiment of the present disclosure.

Referring to FIG. 15, in a situation in which OBSS1 and OBSS2 exist in a primary 80 MHz subblock and a secondary 80 MHz subblock, respectively, an AP is performing channel access through a channel not occupied by the OBSSs by changing a primary operating channel. The following description illustrates a channel access operation of the AP in a chronological order (from the left to the right in the drawing).

When obtaining TXOP1, the AP completes a channel access procedure performed through P20 to obtain a channel access right. Since OBSS2 is occupying a TXOP in a secondary 80 MHz subblock at a time when the AP obtains the TXOP, the AP obtains a channel access right only to a primary 80 MHz, and thus TXOP1 is applied only to a primary 80 MHz subblock. Subsequently, the AP completes a channel access procedure again on P20 and obtains TXOP2, which is a TXOP for a 160 MHz bandwidth. After expiration of TXOP2, while the AP is performing a channel access procedure to obtain TXOP3, a TXOP of OBSS1 is obtained in a form of occupying P20, which is a primary operating channel of the AP, and thus a backoff procedure of the AP is suspended. Here, the AP recognizes that S20 is also occupied by a TXOP of OBSS2, and maintains the primary operating channel without changing the same. However, a TXOP of OBSS1 starts again before the channel access procedure of the AP resumed after expiration of a first TXOP of OBSS1 is completed, and the AP determines to change the primary operating channel to S20. Here, the AP is able to change the primary operating channel to S20 since a time for which the AP has maintained P20 as the primary operating channel is 1 second or more.

Accordingly, during the second TXOP of OBSS1, the AP performs channel access through S20, and obtains TXOP3. After expiration of the TXOP of OBSS2, the AP completes a channel access procedure performed in S20, and obtains TXOP4 for a 160 MHz bandwidth. Subsequently, a channel access procedure performed by the AP in S20 is suspended as a TXOP of OBSS2 starts. Here, the AP identifies that P20 is idle, and determines to change the primary operating channel to P20. The AP is able to change the primary operating channel to P20 since a time for which the AP has maintained S20 as the primary operating channel is 1 second or more.

<Multi-subchannel access using multi-link>

As described above, according to the normative operation defined by ETSI's BRAN committee, when a change of primary operating channel is only allowed once per second, it is difficult to regard that a dependency issue on a primary channel, which is a basic concept of the present disclosure, as being fully solved. This is because when a specific terminal changes a primary operating channel, whether channel access is possible is determined depending on whether the changed primary operating channel is idle or busy for at least 1 second. That is, a Wi-Fi terminal is released from a dependency issue on a primary channel only up to once per second, and has the same dependency issue on a changed primary operating channel for the remaining time interval. That is, a problem to be solved through the present disclosure is not a dependency issue of a Wi-Fi terminal on a primary 20 MHz subchannel but a dependency issue of the Wi-Fi terminal on a primary operating channel (channel used for channel access or reference channel for performing a backoff procedure). Therefore, a method of changing a primary operating channel from P20 to S20 and changing from S20 back to P20 or another S20 provides only an effect of changing a channel designated as a primary operating channel and does not solve a limitation that channel access to the entire operating BW is restricted when a particular 20 MHz subchannel (primary operating channel) is determined to be busy.

To solve the foregoing dependency issue on a designated primary operating channel (channel for performing channel access, that is, an EDCA backoff procedure), a method of reducing the importance of the designated primary operating channel may be considered. As a simplest method for reducing the importance of a designated primary operating channel, designating a plurality of primary operating channels for a single operating channel may be considered. When a plurality of primary operating channels is designated for a single operating channel, a channel access dependency issue of a Wi-Fi terminal on each primary operating channel may be mitigated in proportion to the number of the designated primary operating channels.

<Method for designating plurality of primary operating channels for single operating channel>

An operating bandwidth (BW) supported by Wi-Fi standards has been continuously increased, and Wi-Fi7 supports an operating BW of up to 320 MHz. When accessing an operating channel having a wide BW (e.g., a 40, 80, 160, or 320 MHz channel), a Wi-Fi terminal may perform channel access only when a backoff procedure is completed in a primary 20 MHz subchannel (primary operating channel). Since the backoff procedure may be completed only when the primary 20 MHz subchannel is determined to be idle, the Wi-Fi terminal is unable to obtain a right to access a wide channel of 320 MHz when the primary 20 MHz subchannel is determined to be busy, which is due to the aforementioned dependency issue of the Wi-Fi terminal on the primary operating channel, and the reason why a conventional Wi-Fi standard has maintained a channel access procedure in a form having a dependency issue is to minimize an increase in complexity of the Wi-Fi terminal.

To explain the foregoing ETSI regulation in more detail, the ETSI regulation defines two different normative channel access methods for a wide bandwidth (BW exceeding 20 MHz). A first normative channel access method is to obtain a channel access right to each of all 20 MHz subchannels included in a wide bandwidth to access by using EDCA (or a channel access mechanism operating under rules similar to EDCA) and to simultaneously perform access to one or more 20 MHz channels to which a channel access right has been obtained. That is, a terminal that performs channel access to a bandwidth exceeding 20 MHz may perform a channel access procedure in each 20 MHz, and may access 20 MHz channels for which the channel access procedure is completed and to which a channel access right is obtained. A second normative channel access method for a wide bandwidth as defined by the ETSI regulation is to simultaneously access other 20 MHz channels that have identified to be idle as a result of measurements performed for at least 25 us when a channel access procedure has been completed on one primary operating channel (one 20 MHz channel). Conventionally, the Wi-Fi terminal accesses a 40 MHz, 80 MHz, 160 MHz, or 320 MHz bandwidth by using the second normative channel access method defined in the ETSI regulation.

When the Wi-Fi terminal uses the first normative channel access method defined by the ETSI regulation, the Wi-Fi terminal is able to flexibly access each subchannel that is determined to be idle in an operating BW without dependency on a specific subchannel. However, performing a separate channel access procedure for each 20 MHz channel included in the operating BW causes a great cost in other aspects, such as increases hardware/operational complexity of the Wi-Fi terminal and excessively increases energy consumption for the channel access procedures.

Accordingly, even Wi-Fi 7, which is the latest Wi-Fi standard, has inherited the conventional Wi-Fi channel access method of performing channel access on a primary 20 MHz channel, which is a primary operating channel, and performing channel access for other subchannels determined to be idle when the channel access procedure is completed on the primary 20 MHz channel instead of adopting a method of performing channel access in each 20 MHz subchannel to access each 20 MHz subchannel.

An overlapping operating channel configuration method of an MLD to be described with reference to the following embodiments of the present disclosure is a method for reducing dependency on a primary operating channel while maintaining the conventional Wi-Fi channel access method in which each terminal attempts to access a wide bandwidth by using a primary operating channel.

<Auxiliary AP/link/BSS>

As described above, a multi-link device (MLD) is defined in Wi-Fi 7, and an AP MLD and a non-AP MLD may be in a multi-link setup (ML-setup) state in which setup is performed through a plurality of links. In this case, operating channels of each link on which the AP MLD and the non-AP MLD perform the setup need to be set up not to overlap one another. Further, when the AP MLD and the non-AP MLD are set up through the plurality of links, BSSs operated on each of the plurality of links by APs (APs affiliated with the AP MLD) need to be BSSs operated over nonoverlapping frequency regions.

However, the operating BWs of the APs affiliated with the AP MLD are allowed to overlap. A simpler example illustrating a rule with respect to the operating channels in the multi-link setup performed by the AP MLD and the non-AP MLD is as follows. The AP MLD may operate a first AP, a second AP, and a third AP respectively on link 1, link 2, and link 3. In this case, operating channels of two BSSs operated by the first AP and the second AP are (partially or fully) overlapped, and an operating channel of a BSS operated by the third AP does not overlap the operating channels of the BSSs operated by the first AP and the second AP. The AP MLD performs an ML setup with the non-AP MLD, and allows ML setup states, such as [link 1, link 3] and [link 2, link 3], but does not allow ML setup states, such as [link1, link 2] and [link1, link2, link 3]. This is because link 1 and link 2 among the links on which the non-AP MLD has performed the setup have overlapping operating channels. In short, the BSS operating channels of each AP operated by the AP MLD may overlap with each other, while the BSS operating channels of the plurality of links on which the non-AP MLD has performed the ML setup are not allowed to overlap with each other. This is because when a BSS operating channel of a specific link on which the non-AP MLD has performed an ML setup overlaps with a BSS operating channel of another link on which the non-AP MLD has performed an ML setup, BSSs of the specific link and the other link act as overlapping BSSs (OBSSs), and thus are unable to provide services simultaneously.

According to an embodiment of the present disclosure, to reinforce channel access to subchannels, the AP MLD may configure operating channels (channel on which an AP operates a BSS) of two or more APs to overlap. In this case, one of the APs having the overlapping operating channels may be configured as a primary AP, and the remaining AP may be configured as a non-primary (or auxiliary) AP. A method for performing channel access by using a primary AP and an auxiliary AP will be described in <Channel access using overlapping AP> to be described below.

In the following description of the present disclosure, links on which a primary AP and an auxiliary AP are operated are respectively referred to as a primary link and an auxiliary link, a BSS operated by the primary AP is referred to as a primary BSS, and a BSS operated by the auxiliary AP is referred to as an auxiliary BSS. Since the operating channels of the primary BSS and the auxiliary BSS overlap each other, the two APs are expressed as having an overlapping AP relationship in the following description of the present disclosure.

An auxiliary AP operated by an AP MLD is paired with a primary AP, and operating channels of the auxiliary AP and the primary AP in the pair overlap. The primary AP and the auxiliary AP support different levels of operations. For example, the primary AP may periodically transmit a beacon frame (including a beacon frame and/or other types of management frames and group-addressed frames), while the auxiliary AP may not transmit a beacon frame (including a beacon frame and/or other types of management frames and group-addressed frames). In another example, the primary AP may support a service for legacy STAs (i.e., STAs following previous standards, such as Wi-Fi 7 and Wi-Fi 6, other than Wi-Fi 8), while the auxiliary AP may be restricted from performing a service for the legacy STAs. In addition, a BSS (auxiliary BSS) operated by the auxiliary AP may be a BSS in which only STAs of a non-AP MLD with which a STA that is a member of a BSS (primary BSS) operated by the primary AP paired with the auxiliary AP is affiliated are allowed to be members.

That is, in order for the non-AP MLD to be in a setup state with respect to an auxiliary link, the non-AP MLD needs to necessarily be set up together with a primary link paired with the auxiliary link. In other words, when the non-AP MLD requests setup of the auxiliary link to the AP MLD, the non-AP MLD needs to also request setup of the primary link paired with the auxiliary link. That is, the non-AP MLD should not transmit a frame (e.g., an association request frame) for requesting setup of only the auxiliary link among a pair of the primary link and the auxiliary link. However, when the non-AP MLD and the AP MLD have already performed a setup through the primary link, the non-AP MLD may perform an additional setup request for the auxiliary link to the AP MLD. In this case, a frame transmitted by the non-AP MLD to request addition of the auxiliary link may be a link reconfiguration request frame.

That is, only the non-AP MLD in a setup state with the primary link is able to be set up together with the auxiliary link paired with the primary link.

When the AP MLD receives a multi-link setup request from the non-AP MLD, if the non-AP MLD requests a setup with respect to the auxiliary link and does not request a setup with respect to the primary link paired with the auxiliary link, the AP MLD should not accept the setup with respect to the auxiliary link. However, the non-AP MLD may request setup of only the primary link in a pair of the primary link and the auxiliary link to the AP MLD. In this case, when the non-AP MLD requests setup (requests an ML setup) of the primary link and a third link together, the non-AP MLD may perform an ML setup with the AP MLD through the primary link and the third link.

<Overlapping AP>

The reason why an AP MLD operates two APs (primary AP and auxiliary AP) or two or more APs (primary AP, first auxiliary AP, and second auxiliary AP) of which operating channels overlap is for performing channel access through primary 20 MHz channels of BSSs operated by the respective APs and for supporting a service for non-AP MLDs through an AP that has completed channel access. In this case, the primary AP and the auxiliary AP may be APs using separate radios, or may be APs operated using a single radio. However, the AP MLD performs channel access via the overlapping APs, but performs channel access through only one AP at a specific time. "Performing channel access" refers to performing a series of procedures for channel access, such as reducing a backoff counter according to EDCA rules.

The primary AP and the auxiliary AP may be configured by using a separate radio. In this case, while the primary AP is transmitting a PPDU through the primary 20 MHz subchannel, the auxiliary AP may receive another PPDU received through an auxiliary channel (primary channel of an auxiliary BSS) or may perform CCA, packet detection (PD), or the like. The auxiliary AP having the separate radio may have a capability to function as a general AP when not designated as an auxiliary AP by the AP.

In addition, the primary AP and the auxiliary AP may also be configured to share a single radio. In this case, while the primary AP transmits a PPDU through the primary 20 MHz subchannel, the auxiliary AP is unable to perform transmission/reception, CCA, and PD on the primary channel (auxiliary channel) thereof, which is because when the radio commonly used by the two APs is used for an operation of the primary AP, there is no radio available for the auxiliary AP. That is, the primary AP and the auxiliary AP may be APs that are only logically separated and are operated physically by using one device (radio, an RF chain, or an antenna). The reason why the AP MLD is able to operate a plurality of APs (primary AP and auxiliary APs) by using a single radio is that the radio is used for only one AP among the plurality of APs at a specific time. That is, the AP MLD may not support channel access/PPDU transmission/reception of the auxiliary APs when the primary AP performs a channel access procedure or performs PPDU transmission/reception. Further, the plurality of APs operates while sharing a single radio in such a manner that support for the primary AP and other auxiliary APs is not required at a time of performing a channel access procedure or performing PPDU transmission/reception through a specific auxiliary AP. That is, the AP MLD may perform a single-radio multi-link operation on a primary link and an auxiliary link.

In this case, the AP MLD operating in a plurality of links by using a single radio may lose a medium sync for the remaining links while performing channel access or PPDU transmission/reception in a particular link among the plurality of links. "Losing a medium sync" means that an NAV timer which needs to have been managed by receiving other PPDUs (frames) transmitted/received in each link has not been managed. Therefore, the AP MLD that has lost the medium sync for the remaining links due to an operation performed through the specific link may need to recover the medium sync before performing channel access in the other links. In this case, in order to recover the medium sync of a link which has been lost, the AP MLD may need to perform CCA in the link of which the medium sync has been lost for a time corresponding to a medium sync time. In another method, to recover the medium sync of the link which has been lost, the AP MLD may instruct a particular non-AP MLD to transmit a particular frame (e.g., a medium sync recovery frame) in the link of which the medium sync has been lost. In this case, the non-AP MLD instructed by the AP MLD to transmit the particular frame needs to transmit the particular frame to the AP MLD through the link when the link indicated by the AP MLD for transmission of the particular frame is determined to be idle (idle as a result of PHY CCA and virtual CCA). When the indicated link remains in a busy state until expiration of an indicated time or a preset time from the time when transmission of the particular frame is indicated, the non-AP MLD may not transmit the particular frame to the AP MLD.

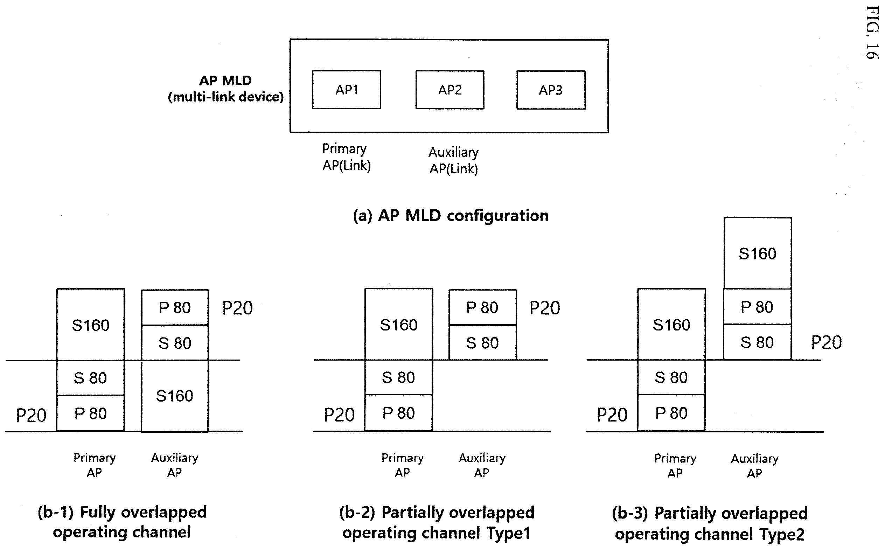

FIG. 16 illustrates the configuration of an AP MLD including a primary AP and an auxiliary AP having an overlapping operating channel and a method for configuring an operating channel according to an embodiment of the present disclosure.

Referring to FIG. 16(a), three APs are affiliated with an AP MLD. AP1 functions as a primary AP, and AP2 functions as an auxiliary AP that is paired with the primary AP. AP3 is a general AP.

Referring to FIG. 16(b-1), the primary AP and the auxiliary AP operate in the exact same operating channel (specific 320 MHz). However, a primary 20 MHz subchannel of the primary AP is positioned at the lowest 20 MHz subchannel within the operating channel, and a primary 20 MHz subchannel (auxiliary channel) of the auxiliary AP is positioned at the highest 20 MHz subchannel within the operating channel.

Referring to FIG. 16(b-2), an operating channel of the auxiliary AP is included in an operating channel of the primary AP. In this case, a primary 20 MHz subchannel of the primary AP and a primary subchannel (auxiliary channel) of the auxiliary AP are configured as different 20 MHz channels.

Referring to FIG. 16(b-3), an operating channel of the auxiliary AP and an operating channel of the primary AP partially overlap each other. A primary 20 MHz subchannel of the primary AP and a primary subchannel (auxiliary channel) of the auxiliary AP are positioned in an overlapping band of the operating channels of the two APs.

The following embodiments of the present disclosure are written assuming a situation in which operating channels of a primary AP (BSS) and an auxiliary AP (BSS) completely overlap each other as shown in FIG. 16(b-1). However, an operating channel configuration, such as (b-2) and (b-3) of FIG. 16, should also be understood as a primary/auxiliary BSS operating channel configuration method available to improve accessibility to a specific operating channel(s) by using a method provided in the present disclosure.

<Channel access using overlapping AP>

A channel access procedure of an AP MLD performed using a primary BSS and an auxiliary BSS having an operating channel overlapping that of the primary BSS is as follows.

The primary BSS and the auxiliary BSS are operated using the same operating channel (e.g., both BSSs are operated in the same 320 MHz channel). In this case, the primary BSS and the auxiliary BSS configure different 20 MHz subchannels as a primary 20 MHz subchannel. Here, the operating channel of the auxiliary BSS may be a subset of the operating channel of the primary BSS.

The primary channel (auxiliary channel) of the auxiliary BSS may need to be positioned in an 80 MHz subblock other than an 80 MHz subblock in which the primary channel of the primary BSS is positioned. That is, a 20 MHz subchannel included in the primary 80 MHz subblock of the primary BSS is not able to be configured as the primary channel (auxiliary channel) of the auxiliary BSS.

When a plurality of auxiliary APs forms an AP pair with a primary AP, the plurality of auxiliary APs needs to have primary channels (auxiliary channels) configured respectively in different 80 MHz subblocks. For example, when there are three auxiliary BSSs (auxiliary AP1, auxiliary AP2, and auxiliary AP3) that are paired with a primary BSS with a 320 MHz BW, the three auxiliary BSSs need to configure a primary channel (auxiliary channel 1, auxiliary channel 2, and auxiliary channel 3) respectively in a secondary 80 MHz subblock of the primary BSS, an 80 MHz subblock corresponding to a lower frequency of the secondary 160 MHz, and an 80 MHz subblock corresponding to a higher frequency of the secondary 160 MHz.

When the primary 20 MHz subchannel of the primary BSS is determined to be idle, the AP MLD performs channel access through the primary 20 MHz subchannel of the primary BSS, and then transmits a PPDU through the primary AP. That is, in frames included in the PPDU transmitted through the primary AP, a MAC address (TA) of a transmitting device is configured to a MAC address (or BSSID) of the primary AP. Further, an Address 3 field of a frame transmitted in the primary BSS (transmitted by the primary AP or transmitted by a STA that is a member of the primary BSS) may be configured to the BSSID of the primary AP according to the value of To DS and From DS subfields. In addition, in a frame transmitted by a non-AP STA that is a member of the primary BSS, an Address 1 field (RA field) is configured to the BSSID of the primary BSS when To DS and From DS subfields are 1 and 0, respectively. Furthermore, in the frames included in the PPDU transmitted through the primary AP, a MAC address (RA) of a destination device is configured to a MAC address of a non-AP STA operated on a primary link among non-AP STAs of the non-AP MLD. In this case, when the PPDU is transmitted as an HE/EHT/UHR PPDU, a BSS color indicated through a preamble of the PPDU is configured based on the ID of a BSS operated by the primary AP. In this case, the auxiliary BSS remains in an inactive state during an interval in which the channel access is performed through the primary 20 MHz subchannel of the primary BSS.

The auxiliary BSS remaining in the inactive state means that no PPDU transmission/reception is performed through the auxiliary AP.

During an interval in which the auxiliary BSS remains in the inactive state, the auxiliary AP should not perform channel access through the primary channel (auxiliary channel) thereof. Here, "not performing channel access" means that a backoff counter managed to perform channel access is not able to be reduced during an inactivated time period.

The auxiliary AP having a separate radio may be able to perform a PHY CCA or packet detection even during the period in which the auxiliary AP remains in the inactive state. In this case, the auxiliary AP may configure an NAV for the primary channel (auxiliary channel) thereof, based on information obtained through the received PPDU (frame).

The auxiliary AP may reduce the backoff counter according to an EDCA rule when performing a backoff procedure by using the auxiliary channel, and may reduce the backoff counter only when the auxiliary AP is in an active state. That is, even in a situation in which the backoff counter is able to be reduced according to the EDCA rule, when the auxiliary AP is in the inactive state, the backoff counter of the auxiliary AP (more precisely, a backoff counter for each of four access categories that the auxiliary AP has) is not reduced.

In the inactive state, the auxiliary AP is not able to perform PHY CCA and PD, because there is no radio frequency (RF) front end available for the auxiliary AP when the auxiliary AP is in the inactive state. This situation may occur in a configuration in which the auxiliary AP is logically a different AP from the primary AP but physically shares a single radio with the primary AP. In this case, when starting channel access, the auxiliary AP may need to configure an NAV for a time interval corresponding to a medium sync time. That is, after starting channel access, even though no PPDU (frame) is received, the auxiliary AP needs to perform the channel access by considering a medium as busy (busy as a result of virtual CCA) for a time corresponding to the medium sync time.

When a PPDU (frame) of another BSS is received through the primary 20 MHz subchannel of the primary BSS, the AP MLD switches the primary AP (BSS) to the inactive state and switches the auxiliary AP to the active state during a TXOP of the other BSS identified through the received PPDU. However, in a situation in which the PPDU of the other BSS is received, when the state of a primary channel (auxiliary channel) of a specific auxiliary AP identified (determined) through PHY CCA is busy, the specific auxiliary AP may remain in the inactive state. When there is no idle auxiliary channel (primary channel of the auxiliary APs paired with the primary AP) identified through the PHY CCA, the primary AP may remain in the active state without being switched to the inactive state. In this case, an operation of the primary AP switched to the inactive state may be the same as or similar to the foregoing operation performed when the auxiliary AP is in the inactive state.

A time interval during which the primary BSS remains in the inactive state may last until the TXOP of the other BSS expires. The time during which the primary BSS remains in the inactive state may last until the end time of the PPDU of the other BSS.

The time interval during which the primary BSS remains in the inactive state may last until the PPDU of the other BSS is received through the auxiliary BSS.

The time interval during which the primary BSS remains in the inactive state may last until a PPDU transmitted through channel access performed through the primary channel (auxiliary channel) of the auxiliary BSS occupies the primary channel of the primary AP.

The time interval during which the primary BSS remains in the inactive state may be limited to before the next target beacon transmission time (TBTT) of the primary BSS. That is, when the next TBTT of the primary BSS occurs, the primary BSS becomes active, and the auxiliary BSSs become inactive.

The time interval during which the primary BSS remains in the inactive state may be limited to before the start time of a restricted target wake time (R-TWT) service period (SP) operating in the primary BSS. That is, when the start time of the R-TWT SP of the primary BSS occurs, the primary BSS becomes active, and the auxiliary BSSs become inactive.

During a time during which the auxiliary AP (BSS) remains in the active state, the AP MLD performs channel access through the primary channel (auxiliary channel) of the auxiliary BSS. When the channel access procedure performed through the auxiliary channel is completed, the AP MLD may transmit a PPDU through the auxiliary AP. That is, in frames included in the PPDU transmitted through the auxiliary AP, a MAC address (TA) of a transmitting device is configured to a MAC address of the auxiliary AP. Further, an Address 3 field of a frame transmitted in the auxiliary BSS (transmitted by the auxiliary AP or transmitted by a STA that is a member of the auxiliary BSS) may be configured to a BSSID of the auxiliary AP according to the value of To DS and From DS subfields. In addition, in a frame transmitted by a non-AP STA that is a member of the auxiliary BSS, an Address 1 field (RA field) is configured to the BSSID of the auxiliary BSS when To DS and From DS subfields are 1 and 0, respectively. Furthermore, in the frames included in the PPDU transmitted through the auxiliary AP, a MAC address (RA) of a destination device is configured to a MAC address of a non-AP STA operated on an auxiliary link among non-AP STAs of the non-AP MLD. In this case, when the PPDU is transmitted as an HE/EHT/UHR PPDU, a BSS color indicated through a preamble of the PPDU is configured based on a color of a BSS operated by the auxiliary AP. The color of the BSS operated by the auxiliary AP may be the same as the BSS color of the primary AP. In this case, the primary AP (BSS) remains in the inactive state during an interval in which the channel access is performed through the primary channel (auxiliary channel) of the auxiliary BSS.

The primary BSS remaining in the inactive state means that no PPDU transmission/reception is performed through the primary AP.

During an interval in which the primary BSS remains in the inactive state, the primary AP should not perform channel access through the primary channel thereof. Here, "not performing channel access" means that a backoff counter managed to perform channel access is not able to be reduced during an inactivated time period.

The primary AP having a separate radio may be able to perform a PHY CCA or packet detection even during the period in which the primary AP remains in the inactive state. In this case, the primary AP may configure an NAV for the primary channel thereof, based on information obtained through the received PPDU (frame).

The primary AP may reduce the backoff counter according to an EDCA rule when performing a backoff procedure by using the primary channel, and may reduce the backoff counter only when the primary AP is in an active state. That is, even in a situation in which the backoff counter is able to be reduced according to the EDCA rule, when the primary AP is in the inactive state, the backoff counter of the primary AP (more precisely, a backoff counter for each of four access categories that the primary AP has) is not reduced.

In the inactive state, the primary AP is not able to perform PHY CCA and PD, because there is no radio frequency (RF) front end available for the primary AP when the primary AP is in the inactive state. This situation may occur in a configuration in which the primary AP is logically a different AP from the auxiliary AP but physically shares a single radio with the auxiliary AP. In this case, when starting channel access, the primary AP may need to configure an NAV for a time interval corresponding to a medium sync time. That is, after starting channel access, even though no PPDU (frame) is received, the auxiliary AP needs to perform the channel access by considering a medium as busy (busy as a result of virtual CCA) for a time corresponding to the medium sync time.

A TXOP obtained by the auxiliary AP may need to terminate before the TBTT of the primary BSS, which is a restriction to ensure that the primary AP is able to transmit a beacon frame at the TBTT of the primary BSS. Therefore, the auxiliary AP needs to manage the TXOP so that the TXOP of the auxiliary AP terminates before the next TBTT of the primary BSS. In this case, the TXOP of the auxiliary AP may need to terminate at least T before the TBTT of the primary BSS. T is a time interval including a time (delay) needed when the primary AP (BSS) in the inactive state is switched to the active state. T may be a time interval including a time (e.g., a medium sync time) needed to recover a medium sync after the primary AP is switched to the active state.

The TXOP obtained by the auxiliary AP may need to terminate before the start time of the R-TWT SP of the primary BSS, which is a restriction to ensure that the primary AP is able to perform channel access at the R-TWT SP of the primary BSS. Therefore, the auxiliary AP needs to manage the TXOP so that the TXOP of the auxiliary AP terminates before the start time of the R-TWT SP operating in the primary BSS. In this case, the TXOP of the auxiliary AP may need to terminate at least T before the start time of the R-TWT SP of the primary BSS. T is the time interval including the time (delay) needed when the primary AP (BSS) in the inactive state is switched to the active state. T may be the time interval including the time (e.g., a medium sync time) needed to recover the medium sync after the primary AP is switched to the active state.

An operation in which the primary AP and the auxiliary AP perform channel access according to the foregoing methods 1 to 4 is a normative channel access operation in which each AP performs channel access through the primary channel thereof and does not change the channel (primary operating channel) for performing channel access.

Here, according to an embodiment of the present disclosure, the AP MLD may configure operating channels of a plurality of APs to overlap (overlappingly or identically) and may differentiate a primary operating channel of each AP, thereby securing a plurality of access paths for a single operating channel. Accordingly, the AP MLD may have lower dependency on a primary operating channel than conventional Wi-Fi when accessing a specific operating channel that operates a plurality of APs.

In this case, the APs affiliated with the link pair (AP pair) including the primary AP and the auxiliary AP(s) have a feature such that only one AP remains in the active state and the remaining APs remain in the inactive state at a specific time.

The TBTT refers to a scheduled time at which the AP is committed to transmitting a beacon frame. The AP periodically transmits a beacon frame through the primary channel of the BSS operated by the AP, and the transmission period of the beacon frame is referred to as a beacon interval. Therefore, each TBTT occurs at intervals equal to the beacon interval.

The R-TWT SP is a type of broadcast TWT, and is a service interval for low-latency traffic introduced in Wi-Fi 7. During the R-TWT SP, low-latency traffic is prioritized. In this case, the ID of traffic considered as low-latency traffic for each R-TWT SP is indicated by the AP. That is, when an R-TWT SP is operated in a specific BSS, traffic corresponding to a TID (traffic ID) indicated by the AP is served with priority in the BSS during the R-TWT SP.

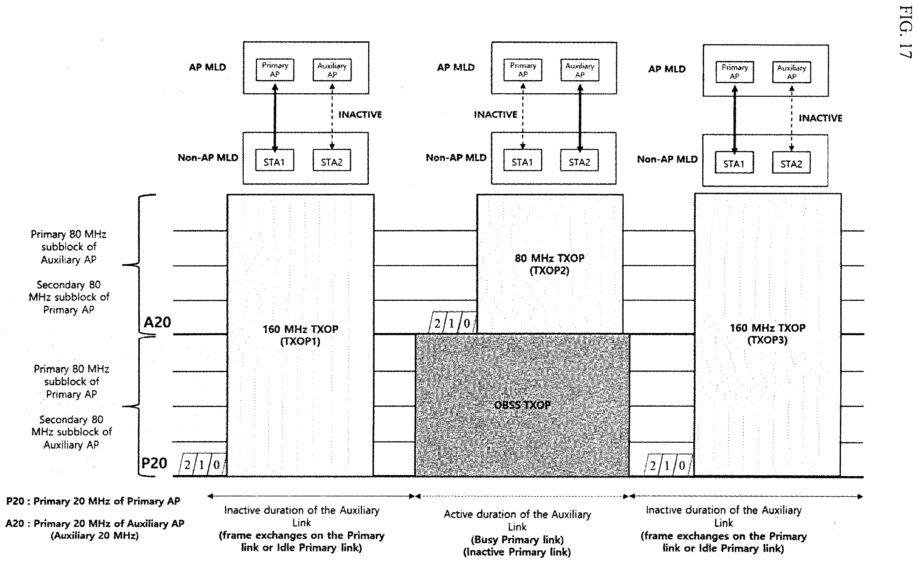

FIG. 17 illustrates an example of a procedure in which an AP MLD obtains a TXOP by using a primary BSS and an auxiliary BSS according to an embodiment of the present disclosure.

Referring to FIG. 17, an AP MLD performs channel access through a primary 20 MHz subchannel (P20) of a primary BSS. That is, the primary BSS is in the active state, and the auxiliary BSS is in the inactive state.

Upon obtaining TXOP1 through the primary BSS, the AP MLD performs transmission/reception with a non-AP MLD through a primary link. After expiration of TXOP1, the AP MLD identifies that the P20 channel of a primary AP is occupied by an OBSS, and thus switches the primary AP to the inactive state and switches an auxiliary AP to the active state.

The AP MLD performs channel access through a primary channel (A20) of the auxiliary AP, and obtains TXOP2. During TXOP2, the AP MLD performs transmission/reception with the non-AP MLD through an auxiliary link. In this case, TXOP2 terminates before a TXOP of the OBSS identified by the primary AP.

When TXOP2 obtained through the auxiliary AP terminates, the AP MLD switches the primary AP to the active state in order to perform channel access through the primary AP, and switches the auxiliary AP to the inactive state.

Subsequently, the AP MLD performs channel access through P20 of the primary AP, and obtains TXOP3 when the channel access is completed. During TXOP3, the AP MLD performs transmission/reception with the non-AP MLD through the primary link in the active state.

<Operation of non-AP MLD associated with overlapping APs>

As described above, according to an embodiment of the present disclosure, an AP MLD may configure operating channels of a plurality of APs as overlapping operating channels, and may operate one of the plurality of APs as a primary AP and the remaining APs as auxiliary APs. When a specific AP among the plurality of APs operating on the overlapping operating channels is in the active state, the other APs remain in the inactive state and thus are not able to transmit/receive a PPDU. In addition, the APs in the inactive state not only are unable to perform PPDU transmission/reception but may also be unable to perform CCA (virtual CCA and/or physical CCA).

When a non-AP MLD has an inactive link (link of an inactive AP) among links on which an ML setup has been performed, the non-AP MLD should not transmit a UL PPDU through the inactive link, because even though the non-AP MLD transmits a UL PPDU through the inactive link, the AP, which is an entity to receive the UL PPDU, is in a state of not supporting reception of the PPDU. That is, transmission of the UL PPDU by the non-AP MLD performed in the inactive link would inevitably fail, and may be regarded as an unnecessary operation.

Therefore, when the non-AP MLD has a primary link and an auxiliary link among the links on which the ML setup has been performed with the AP MLD and performs channel access through the primary link or the auxiliary link, the non-AP MLD may need to determine whether to perform transmission and/or to perform channel access by a different method from that for a link on which a regular AP is operated.

For example, the non-AP MLD should not perform UL PPDU transmission through EDCA in the auxiliary link of an AP MLD. A frame that the non-AP MLD is allowed to transmit in the auxiliary link may be limited to a response frame to a frame received from the auxiliary AP. The type of the response frame transmitted by the non-AP MLD on the auxiliary link includes at least one of a CTS frame transmitted after receiving an RTS/MU-RTS frame, a BSR frame transmitted after receiving a BSRP trigger frame, and a frame included in a TB PPDU transmitted after receiving a trigger frame.

The reason why the non-AP MLD is restricted from performing transmission through EDCA in the auxiliary link is because the non-AP MLD may find it difficult to accurately determine whether the auxiliary AP is active or inactive. Therefore, the non-AP MLD may be restricted to perform UL PPDU transmission only when a frame requesting a response frame is received from the auxiliary AP, instead of attempting to UL PPDU transmission that is highly likely to fail.

However, there may be an exception in which the non-AP MLD is allowed to transmit a UL PPDU after performing EDCA channel access through the auxiliary link. In an example of the exception, when obtaining information for determining whether a specific auxiliary link is active from the AP MLD, the non-AP MLD may perform channel access (channel access using an EDCA mechanism, i.e., autonomously performed channel access other than trigger-based channel access) through a non-AP STA operating on the specific auxiliary link, and may then attempt UL PPDU transmission. The information for determining whether the specific auxiliary link is active may be information indicated through a frame transmitted through another AP affiliated with the AP MLD. In this case, the information indicated through the other AP affiliated with the AP MLD may be information indicating which AP (which link) among the primary AP and the auxiliary APs is in the active state. Upon performing the channel access through the auxiliary link (channel access using an EDCA mechanism, i.e., autonomously performed channel access other than channel access trigger-based), the non-AP MLD may need to transmit a first frame transmitted in the auxiliary link as an RTS frame. That is, the non-AP MLD may need to transmit the RTS frame as the first frame transmitted in the auxiliary link. When failing to receive a CTS frame from the AP in response to the RTS frame transmitted as the first frame, the non-AP MLD may not perform additional channel access on the auxiliary link.

Like the AP MLD, the non-AP MLD may use separate radios for a non-AP STA (primary non-AP STA) operating on in the primary link and a non-AP STA (auxiliary non-AP STA) operating in the auxiliary link, or may use a single radio to operate the non-AP STAs on the two links.

That is, the primary non-AP STA and the auxiliary non-AP STA may be configured by using a separate radio. In this case, while the primary non-AP STA is transmitting/receiving a PPDU through the primary 20 MHz subchannel, the auxiliary non-AP STA may receive another PPDU received through an auxiliary channel (primary channel of an auxiliary BSS) or may perform CCA, packet detection (PD), or the like. The auxiliary non-AP STA having the separate radio may have a capability to function as a general non-AP STA when associated with an AP other than an auxiliary AP (e.g., a regular AP other than a primary/auxiliary AP).

Further, the primary non-AP STA and the auxiliary non-AP STA may also be configured to share a single radio. In this case, while the primary non-AP STA transmits/receives a PPDU through the primary 20 MHz subchannel, the auxiliary non-AP STA is unable to perform transmission/reception, CCA, and PD on the primary channel (auxiliary channel) thereof, which is because when the radio commonly used by the two non-AP STAs is used for an operation of the primary non-AP STA, there is no radio available for the auxiliary non-AP STA. That is, the primary non-AP STA and the auxiliary non-AP STA may be non-AP STAs that are only logically separated and are operated physically by using one device (radio, an RF chain, or an antenna). The reason why the non-AP MLD is able to operate a plurality of non-AP STAs (primary non-AP STA and auxiliary non-AP STAs) by using a single radio is that the radio is used for only one non-AP STA among the plurality of non-AP STAs at a specific time. That is, the non-AP MLD may not support channel access/PPDU transmission/reception of the auxiliary non-AP STAs when the primary non-AP STA performs a channel access procedure or performs PPDU transmission/reception. Further, the plurality of non-AP STAs operates while sharing a single radio in such a manner that support for the primary non-AP STA and other auxiliary non-AP STAs is not required at a time of performing PPDU transmission/reception through a specific auxiliary non-AP STA. That is, the non-AP MLD may perform a single-radio multi-link operation on the primary link and the auxiliary link.

For the non-AP MLD, a restriction may be applied such that the non-AP MLD is able to be set up with only one auxiliary link among auxiliary links paired with each Primary link. For example, when there exist a first primary link and first and second auxiliary links paired with the first primary link, a specific non-AP MLD may have an ML setup state including the first primary link and the first auxiliary link, or an ML setup state including the first primary link and the second auxiliary link, but may not have an ML setup state including both the first auxiliary link and the second auxiliary link. That is, when a plurality of auxiliary links corresponding to a specific primary link exists, the non-AP MLD may be required to perform setup through only one of the plurality of auxiliary links.

The non-AP STA operating on the auxiliary link may be required to terminate a TXOP thereof before the next TBTT of the primary link (TBTT of the primary BSS) when the non-AP STA has obtained a TXOP through EDCA. This operation is the same as/similar to the auxiliary AP terminating the TXOP before the TBTT of the primary BSS, and thus a detailed description thereof is omitted.

<Discovery of auxiliary AP>

Since an auxiliary link (auxiliary AP or auxiliary BSS) is a link having different characteristics from those of a general AP and a primary link, an AP MLD needs to indicate which among affiliated APs is an AP operating on an auxiliary link through management frames that the AP MLD transmits. In addition, a non-AP MLD to perform an ML setup with the AP MLD receives a management frame transmitted by the AP MLD, and then needs to determine whether each AP operated by the AP MLD is a general AP, a primary AP, or an auxiliary AP, based on information included in the management frame. For example, the non-AP MLD having received a beacon frame transmitted by a specific AP MLD and having recognized that a specific AP of the specific AP MLD is an auxiliary AP should not perform a multi-link setup through the specific AP (auxiliary AP). That is, the non-AP MLD should not transmit an (ML) probe request frame and/or an (ML) association request frame to the auxiliary AP.

A method for the AP MLD to indicate, through a management frame transmitted by the AP MLD, what type of AP each AP is, may be to use a Reduced Neighbor Report (RNR) element.

For example, the AP MLD may configure/set a Neighbor AP Information field corresponding to an auxiliary AP among Neighbor AP Information fields included in an RNR element transmitted by the AP MLD by a different method from that for a Neighbor AP Information field corresponding to another AP (third AP (general AP) and a primary AP), thereby indicating that the AP corresponding to the Neighbor AP Information field configured/set by the different method is an auxiliary AP. A specific method for the AP MLD to indicate an auxiliary AP by using an RNR element will be described in more detail with reference to an embodiment of FIG. xx.

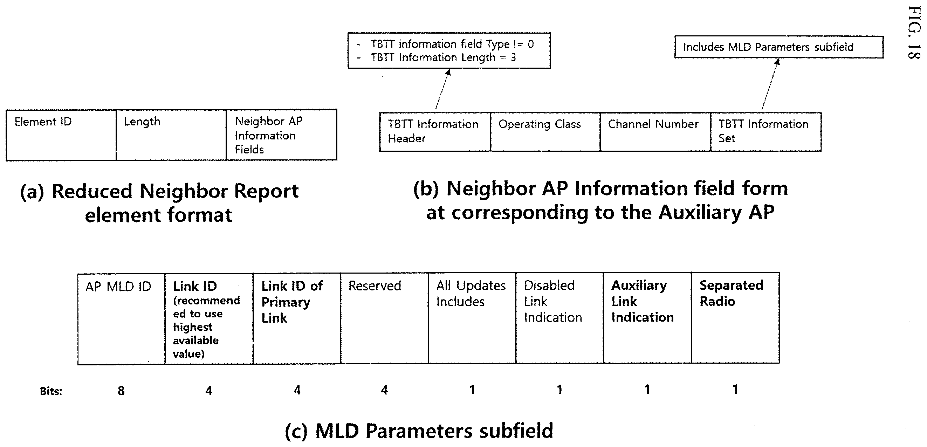

FIG. 18 illustrates an example of the format of an RNR element transmitted by an AP MLD to indicate an auxiliary AP according to an embodiment of the present disclosure.

FIG. 18(a) illustrates a Reduced Neighbor Report element format. A Reduced Neighbor Report element may include a plurality of Neighbor AP Information fields, and the length of the element is indicated through a Length field.

The Neighbor AP Information fields include a Neighbor AP Information field corresponding to each AP affiliated with an AP MLD that transmits the element. In this case, a Neighbor AP Information field for an AP that transmits the RNR element is not included.

FIG. 18(b) illustrates a method for configuring a Neighbor AP Information field corresponding to an auxiliary AP affiliated with an AP MLD. A Neighbor AP Information field is the same regardless of the nature of an AP, while the configuration of a TBTT information header and the size of a TBTT Information Set field may be different for a general AP and an auxiliary AP. More specifically, as illustrated in FIG. 18(b), in a Neighbor AP Information field corresponding to the auxiliary AP, a TBTT Information field Type of a TBTT Information Header field may indicate a value (e.g., 1 or 2) other than 0. This configuration method is differentiated from that in which a TBTT Information field Type of the general AP is indicated by 0. Further, in the Neighbor AP Information field corresponding to the auxiliary AP, a TBTT Information Length indicated in the TBTT Information Header field is configured to 3. That is, a TBTT Information Set field is indicated to have a size of 3 octets. In this case, the TBTT Information Set field includes an MLD Parameters subfield.

FIG. 18 (c) illustrates an MLD Parameters subfield format corresponding to an auxiliary AP. In an MLD Parameters subfield corresponding to an auxiliary AP, a link ID may be configured to a value greater than the link ID of a general AP. That is, when a plurality of APs (primary AP and general APs) and one auxiliary AP exist in an AP MLD, the link ID of the auxiliary AP is encouraged to be configured to be greater than the link IDs of the other APs.

The MLD Parameters subfield corresponding to the auxiliary AP includes a Link ID of Primary Link subfield. The Link ID of Primary Link subfield is a subfield indicating the link (Primary Link) ID of a primary AP paired with the auxiliary AP.

An Auxiliary Link Indication subfield is a subfield indicating whether the AP corresponding to the MLD Parameters subfield is an auxiliary AP, and is indicated as 1 when included in the MLD Parameters subfield corresponding to the auxiliary AP. A Separated Radio subfield is a subfield indicating whether the auxiliary AP corresponding to the MLD Parameters subfield has a radio separately from the primary AP. That is, the auxiliary AP, for which the Separated Radio subfield is configured to a specific value (e.g., 1), may not lose a medium sync with respect to a primary channel (auxiliary channel) of an auxiliary BSS even when transmission/reception is performed through the primary AP.

In this case, when non-AP MLDs receive the RNR element transmitted by the AP MLD, the non-AP MLDs may identify the Neighbor AP Information field instead of the TBTT Information field Type of 0 included in the RNR element, thereby recognizing that the Neighbor AP Information field corresponds to the auxiliary AP. Alternatively, the non-AP MLDs may identify whether the AP corresponding to the MLD Parameters subfield is an auxiliary AP, based on a specific bit (Auxiliary Link Indication in FIG. 18(c)) included in the MLD Parameters subfield.

In another example, the AP MLD may configure/set a Per-STA Profile subelement corresponding to the auxiliary AP among Per-STA Profile subelements included in a Multi-link element transmitted by the AP MLD by a different method from that for a Per-STA Profile subelement corresponding to another AP (third AP (general AP) and the primary AP), thereby indicating that the AP corresponding to the Per-STA Profile subelement configured/set by the different method is an auxiliary AP. The Per-STA Profile subelement configured/set by the different method may have a subfield (bit) that is configured to a different value (e.g., 1 or 0) for the auxiliary AP from a specific value (e.g., 0 or 1) indicated in the Per-STA Profile subelement corresponding to the general AP, thereby distinguishing the auxiliary AP from the general AP.

When a non-AP MLD recognizes that the auxiliary AP is operating, the non-AP MLD should not transmit a probe request frame to the AP MLD through an auxiliary link. A method for the non-AP MLD to recognize that the auxiliary link is being operated may be based on information indicated through a management frame transmitted by the AP MLD.

The AP MLD may change which AP among overlapping APs (primary AP and auxiliary APs) functions as a primary AP. For example, an AP that initially functioned as a primary AP may be changed to an auxiliary AP, and an AP that initially functioned as an auxiliary AP may be changed to a primary AP. There may be various reasons for changing which AP functions as a primary AP among the overlapping APs, and one reason may be that the AP MLD intends to change a channel on which a beacon frame is transmitted.

When changing which AP (link or BSS) functions as the primary AP (link or BSS) among the overlapping APs (links or BSSs), the AP MLD is required to indicate this change to the non-AP MLDs. In this case, the AP MLD may indicate information about a new primary AP (AP that is an auxiliary AP at a time of transmitting a management frame) and/or information about a time when the primary AP is changed through the management frame (e.g., a beacon frame) transmitted by the AP MLD. The information indicated by the AP MLD through the management frame may include the ID of a link (i.e., the link ID of an auxiliary link) on which the auxiliary AP to be changed to the primary AP operates. In this case, to indicate the time when the primary AP is changed, the AP MLD may indicate the number of TBTTs remaining until the time when the primary AP is changed. That is, when there are 5 TBTTs of the current primary AP remaining until the time for the AP MLD to change the primary AP, the AP MLD may configure a field related to the time to change the primary AP to a value (e.g., 5 or 4 (5-1)), based on the number of the remaining TBTTs. When there is no remaining TBTT until the time to change the primary AP, the AP MLD transmits the field related to the time to change the primary AP that is configured to a value of 1 or 0, and would transmit a next beacon frame through the new primary AP.

The AP MLD to change the primary AP may transmit a BSS transition management request frame through the existing primary AP (which becomes an auxiliary AP after a primary AP change). The BSS transition management request frame may be a frame indicating that a service of a BSS operated by the primary AP will terminate to a non-AP STA and non-AP MLDs that are connected (set up) only through the existing primary AP. The BSS transition management request frame transmitted by the AP MLD may be a BSS transition management request frame in which a Link Removal Imminent subfield is configured to 0 and a Primary Link Change field is configured to 1. The Primary Link Change field is a field that is configured to 1 when a link designated as a primary link is changed (and/or is scheduled to be changed) in a pair of the primary link (AP) and auxiliary links (APs) having overlapping operating channels. When receiving the BSS transition management request frame in which the Primary Link Change field is configured as 1, the non-AP MLD may interpret the BSS transition management request frame not as the primary BSS terminating the service but as indicating that the primary link (AP) and the auxiliary link (AP) will be changed. In this case, the AP MLD needs to update a Neighbor AP Information field regarding an auxiliary link and a Neighbor AP Information field regarding a primary link of an RNR element transmitted after the primary link and the auxiliary link are changed considering the changed primary link.

In another method, the AP MLD may perform a channel switch to change a primary channel of a BSS operated by an AP that functions as a primary AP (link) among a plurality of APs (links) having overlapping operating channels. The AP MLD may transmit a (Extended) Channel Switch Announcement element to change the primary channel of the BSS operated by the primary AP, and a new primary channel is indicated through a New Channel Number field included in the element. The new main channel is one of subchannels included in the existing operating channel (BW). When the Channel Switch Announcement element is used to change a subchannel used as the primary channel by the primary BSS without changing an operating channel, a subchannel used as a primary channel (auxiliary channel) by an auxiliary BSS paired with the primary BSS may be designated as the new primary channel. When the new primary channel of the primary BSS (indicated by the New Channel Number field) is the subchannel previously used as the primary channel (auxiliary channel) by the auxiliary BSS, the AP MLD needs to also transmit a (Extended) Channel Switch Announcement element to change the primary channel (auxiliary channel) of the auxiliary BSS. That is, the AP MLD that intends to change the primary channel of the primary BSS to the primary channel (auxiliary channel) of the auxiliary BSS may need to manage the primary channel (auxiliary channel) of the auxiliary BSS to be changed so that the primary BSS and the auxiliary BSS do not use the same subchannel as the primary channel. Upon receiving both the (Extended) Channel Switch Announcement element indicating a change of the primary channel of the primary BSS and the (Extended) Channel Switch Announcement element indicating a change of the primary channel (auxiliary channel) of the auxiliary BSS from the AP MLD, a non-AP MLD may recognize that the primary channels of the two BSSs will be switched with each other. In this case, the two Channel Switch Announcement elements received together indicate the same value through a Channel Switch Count field. In this case, when the AP MLD transmits a Channel Switch Announcement element to change only the primary channel without changing the operating channel of the Primary BSS, a Channel Switch Mode subfield of the Channel Switch Announcement element transmitted by the AP MLD to change only the primary channel without changing the operating channel of the primary BSS may be configured to a value (e.g., 2) different from a value indicated when a general channel switch is performed (when the operating channel is changed).

<Channel change of AP (link or BSS) pair having overlapping operating channels>

When intending to change the operating channel of a plurality of APs (primary AP and paired auxiliary APs) having overlapping operating channels, an AP MLD may transmit only a (extended) Channel Switch Announcement element for the primary AP. That is, the Channel Switch Announcement element for the primary AP (link or BSS) may be a Channel Switch Announcement element commonly applied to the plurality of APs (primary AP and paired auxiliary APs) having the overlapping operating channels. For example, when the operating channel of the primary BSS is changed from a first 320 MHz channel to a second 320 MHz channel through the Channel Switch Announcement element, the operating channel of an auxiliary BSS that is paired with the primary BSS is also changed from the first 320 MHz channel to the second 320 MHz channel. That is, for the APs having the overlapping operation channels (overlapping AP (link or BSS) pair), when an operating channel change is indicated for a specific AP (e.g., the Primary AP), an operating channel change for another AP (e.g., an auxiliary AP) may be implicitly indicated. Therefore, when the non-AP MLD receives an indication of a change of the operating channel of the primary AP from the AP MLD, the non-AP MLD may recognize that the operating channel of the auxiliary AP(s) paired with the primary AP is also changed the same as the primary AP. In this case, the new primary channel (auxiliary channel) of the auxiliary AP(s) that has moved to the changed operating channel may be indicated through an RNR element included in a management frame (frame transmitted by the AP MLD) transmitted after the channel switch of the primary BSS is completed.

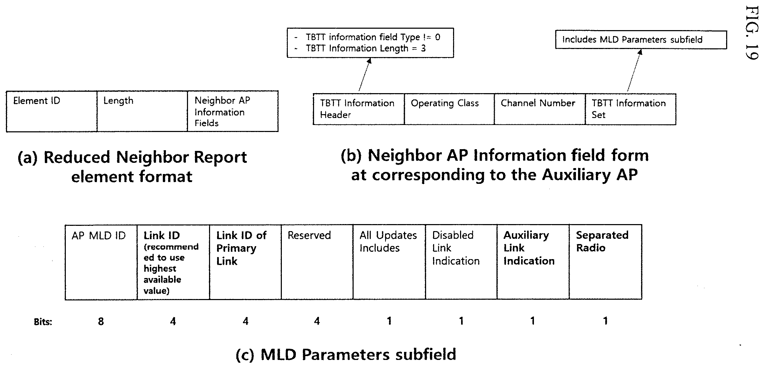

FIG. 19 illustrates a method in which a channel switch of an auxiliary BSS is indicated/performed together when a channel switch of a primary BSS is performed according to an embodiment of the present disclosure.

Referring to FIG. 19, a primary BSS and an auxiliary BSS operate in an operating channel of which the initial center frequency is "X."

An AP MLD includes a (Extended) Channel Switch Announcement element in a beacon frame transmitted by a primary AP to change the overlapping operating channel.

The (Extended) Channel Switch Announcement element includes information about a time when a channel switch of the primary BSS starts and a new operating channel.

Since a Channel Switch Count value of a (Extended) Channel Switch Announcement element included in Beacon#1 is 2 and a Channel Switch Count value included in Beacon#2 is 1, the primary AP starts the channel switch after transmitting Beacon#2. In this case, although a Channel Switch Announcement element for an auxiliary AP (BSS) is not directly included in Beacon#1 and Beacon#2, the same information as channel switch information indicated for the primary AP (BSS) is implicitly included for the auxiliary AP (BSS), which is because the auxiliary AP is an AP paired with the primary AP to perform the channel switch.

Therefore, when the channel switch of the primary BSS is started, a channel switch of the auxiliary BSS is also started together, and the changed center frequency of the primary BSS is the same as the changed center frequency of the auxiliary BSS. That is, the operating channels of the two BSSs remain overlapping even after the channel switches are completed.

The primary AP transmits a Beacon#3 frame in the new operating channel, and Beacon#3 includes an RNR element indicating information about the new primary channel (auxiliary channel, A20 of FIG. 19) of the auxiliary AP. Therefore, a non-AP MLD may receive the beacon frame transmitted by the AP MLD after completing the channel switch of the primary BSS, thereby identifying information about the new primary channel (auxiliary channel) of the auxiliary BSS.

<Characteristics and restrictions of auxiliary AP/link/BSS>

As described above, an AP MLD may operate a plurality of APs with overlapping operating channels in order to increase accessibility to a specific operating channel. One of the plurality of APs functions as a primary AP, and an AP(s) other than the primary AP functions as an auxiliary AP. The primary AP transmits a beacon frame at each beacon interval, and supports a function similar to that of a general AP, such as supporting a (ML) setup procedure with a non-AP STA and non-AP MLDs. The auxiliary AP is an AP with a large number of restrictions, such as not transmitting a beacon frame, and being unable to be set up with a non-AP MLD that is not associated with the paired primary AP. This is because the reason why the AP MLD operates the plurality of APs with the overlapping operating channels is to increase the accessibility to the overlapping operating channels, and is not to operate the auxiliary APs as general APs.

Since the auxiliary AP (link or BSS) is an AP that performs only a restricted operation and has dependency on the primary AP (link or BSS), the AP MLD needs to utilize information indicated through the primary AP and parameters used in the primary AP in operating the auxiliary AP.

<TSF timer of auxiliary link>

As described above, an auxiliary AP does not transmit a beacon frame. A Wi-Fi beacon frame is a frame transmitted for various purposes, such as indicating various pieces of information that non-AP STAs associated with an AP that transmits the beacon frame needs to be aware of and enabling non-AP STAs not associated with the AP not only to discover existence of the AP but also to partially recognize even information about other APs (neighbor APs) adjacent to the AP. Further, in 11be, the beacon frame has been extended to include additional information required by non-AP MLDs, by transmitting a Multi-link element through the beacon frame, thereby indicating that the AP transmitting the beacon frame belongs to an AP MLD and also providing information about other APs (links) belonging to the AP MLD.

A Timestamp field, which is one of fields included in the beacon frame, is a field indicating a value related to a timing synchronization function (TSF) timer of the AP, and is a field that supports a non-AP STA in achieving timing synchronization between the AP and the non-AP STA by adjusting a TSF timer thereof to match a TSF timer value of the AP. All timing-based operations of a BSS are aligned with the TSF timer of the AP, that is, the AP functions as a timing master. Therefore, each non-AP STA needs to achieve timing synchronization with the AP by using the Timestamp field included in the beacon frame transmitted by the AP. However, the auxiliary AP does not transmit a beacon frame for a BSS of the auxiliary AP, and therefore non-AP STAs included in the BSS (auxiliary BSS) of the auxiliary AP are unable to achieve time synchronization with the auxiliary AP. As a solution to this issue, it is possible to consider that a primary BSS (AP or link) and an auxiliary BSS (AP or link) use a common TSF timer.

According to an embodiment of the present disclosure, a primary AP and paired auxiliary APs may have a common TSF timer. Alternatively, a TSF timer of the primary AP and a TSF timer of the auxiliary APs may be the same. The value of the commonly used TSF timer is indicated to non-AP STAs (non-AP STA and non-AP MLD) through a beacon frame transmitted by the primary AP. Therefore, the non-AP MLD may maintain time synchronization with the auxiliary APs by receiving the beacon frame transmitted by the primary AP.

<Mapping TID (traffic ID) of auxiliary link>

As described above, an MLD has been defined in Wi-Fi 7, and a TID-to-link mapping negotiation may be performed between MLDs having established an ML setup. In a simple example of TID-to-link mapping, a non-AP MLD set up with an AP MLD through two links may perform a negotiation with the AP MLD to map TID0 to TID3 to a first link and map TID4 to TID7 to a second link. In this case, the non-AP MLD and the AP MLD transmit only MPDUs/MSDUs with TID 0 to 3 through the first link, and transmit MPDUs/MSDUs with TID 4 to 7 through the second link. In this case, different TID-to-link mappings may be applied to a transmission direction (downlink: DL) of the AP MLD and a transmission direction (uplink: UL) of the non-AP MLD. An AP MLD and a non-AP MLD for which TID-to-link mapping has not been performed have a default TID-to-link mapping negotiation state, and the default TID-to-link mapping state refers to a state in which all TIDs are mapped to all setup links, that is, a state in which all types of TIDs may be transmitted through all setup links without restriction. In this case, the default TID-to-link mapping mode is applied to both the DL and UL directions.

Generally, the TID-to-link mapping negotiation between the AP MLD and the non-AP MLD may be freely configured through negotiations between the two MLDs, except for a restriction that all TIDs need to be mapped to at least one link. That is, there is no restriction that a specific TID needs to be mapped to a specific link or that a specific TID should not be mapped to a specific link, which is however valid only when all setup links are assumed to be links on which a general AP operates, and when an auxiliary link exists among the setup links, a separate restriction may be additionally applied.

According to an embodiment of the present disclosure, the auxiliary link may be mapped to only a TID mapped to a paired primary link. Furthermore, the auxiliary link may be mapped to the same TID mapped to the paired primary links. That is, the auxiliary link may not be mapped to a TID that is not mapped to the paired primary link. That is, the TID-to-link mapping state of the auxiliary link is the same as the TID-to-link mapping state of the paired primary link. As described above, a separate TID-to-link mapping restriction exists on the auxiliary link, because the auxiliary link is a link that is unable to remain in the active state at the same time as the primary link.

More specifically, the auxiliary link may be in the active state only when the primary link is in the inactive state, and thus the primary link remains in the inactive state while transmission is performed on the auxiliary link. When a specific TID is mapped only to the primary link and is not mapped to the auxiliary link, the TID that is not mapped to the auxiliary link is a TID on which transmission is impossible during a time interval in which the primary link is in the inactive state, which means that a TID which each MLD is able to transmit is restricted depending on whether an active link is the primary link or the auxiliary link, and this restriction is extremely inappropriate to maintain a traffic flow. Therefore, the auxiliary link needs to be restricted to always be mapped to the same TID mapped to the primary link, thereby maintaining a state enabling all TIDs to be transmitted through at least one setup link regardless of whether the primary link is in the active state or the auxiliary link is in the active state.

Therefore, when performing TID-to-link mapping, the AP MLD and the non-AP MLD need to perform a TID-to-link mapping request in a form of always mapping a TID mapped to the primary link to the auxiliary link. In this case, this mapping restriction is applied to both directions (DL/UL).

In another method, when the AP MLD and the non-AP MLD perform TID-to-link mapping, it may be considered to apply TID mapping indicated for the primary link to the auxiliary link in the same manner without separately indicating TID mapping information about the auxiliary link. That is, the AP MLD and the non-AP MLD may not perform a separate TID-to-link mapping negotiation for the auxiliary link. In this case, a TID mapping state not negotiated for the auxiliary link may be applied the same as a TID mapping state negotiated for the primary link paired with the auxiliary link. That is, TID mapping for the auxiliary link is not directly indicated/negotiated, and TID mapping applied to the primary link may be equally applied. This may be interpreted as the TID-to-link mapping negotiation for the auxiliary link being implicitly performed/completed by the TID-to-link mapping negotiation performed for the paired primary link.

<Traffic indication of auxiliary AP>

As described above, a TID-to-link mapping negotiation may be performed between two MLDs associated through a plurality of links. When a TID-to-link mapping negotiation has been performed between an AP MLD and a non-AP MLD, the AP MLD may needs to indicate a traffic indication in consideration of TID-to-link mapping negotiated with the non-AP MLD. Similarly, when receiving the traffic indication from the AP MLD, the non-AP MLD may need to perform an operation for MSDU reception in consideration of the TID-to-link mapping. The reason why the AP MLD and the non-AP MLD need to indicate the traffic indication and perform MSDU reception in consideration of the TID-to-link mapping is a transmission restriction on traffic related to the TID-to-link mapping. As described above in relation to TID-to-link mapping, an MLD having performed a TID-to-link mapping negotiation with a counterpart MLD needs to perform transmission only through a link mapped to the TID of traffic to transmit when performing transmission to the counterpart MLD. Therefore, when the AP MLD and the non-AP MLD have performed TID-to-link mapping in a non-default mode with respect to the DL direction, the AP MLD needs to transmit an MSDU to the non-AP MLD only through a link mapped to the TID of the MSDU in the DL direction in order to transmit the queued MSDU. That is, the non-AP MLD needs to transmit a PS-poll frame only through the link for transmitting the MSDU to be received by the non-AP MLD, and when the non-AP MLD transmits the PS-poll frame through a link not mapped to the TID of the MSDU queued in the AP MLD in the DL direction, the non-AP MLD is unable to receive the MSDU from the AP MLD. In this case, the non-AP MLD switches the link on which MSDU reception is impossible to be awake not only to reduce PS efficiency but also to cause MSDU transmission delay, making it difficult to effectively operate/support a PS mode.

Therefore, in order to prevent the problem of being unable to transmit a queued MSDU (BU) due to TID-to-link mapping, the AP MLD needs to indicate to each non-AP MLD, through a TIM element, whether there is a queued MSDU to be transmitted, and additionally provide information regarding which link the corresponding MSDU should be transmitted on. In this case, for a non-AP MLD that has performed a TID-to-link mapping negotiation in which all TIDs are mapped to at least one link in the DL (downlink, i.e., transmission direction from an AP to a non-AP) direction, no additional indication may be provided other than whether there is a queued MSDU. This is because a non-AP MLD that either remains in the default TID-to-link mapping state or has a link mapped to all TIDs in the DL direction is able to receive a queued MSDU without any transmission restriction due to a TID by transmitting a PS-poll frame through the link on which all TIDs are mapped to receive the queued MSDU.

A method for the AP MLD to provide to the non-AP MLD the information regarding which link the corresponding MSDU (BU, queued frame, or the like) should be transmitted on may be to transmit an element indicating a TID or a link ID together with the TIM element. The element transmitted to indicate the TID or the link ID to the non-AP MLD may be referred to as a Multi-link TIM element (or Multi-link Traffic Indication element). The Multi-link TIM element may indicate information regarding a link on which each non-AP MLD, indicated by the TIM element as having a queued MSDU, is able to receive the MSDU, and in a case where no separate link-related indication is required for a non-AP MLD (in a case of the default TID-to-link mapping state or when a TID-to-link mapping negotiation has been performed such that all TIDs are mapped to a link in the DL direction), the Multi-link TIM element may not indicate separate link-related information. A non-AP MLD that does not receive separate link-related information through the multi-link TIM element needs to transmit a PS-poll frame on the link in which all TIDs are mapped in the DL direction in order to receive a BU (queued MSDUs). For a non-AP MLD using the default TID-to-link mapping, since all links are in a state where all TIDs are mapped in the DL direction, it may be understood that there is no restriction on selection of a link for transmitting the PS-poll frame.

As described above, in a case of the auxiliary link, the same TID as that mapped to the primary link is mapped. Therefore, depending on the TID-to-link mapping state, traffic (MSDU/MPDU) of a TID that is transmissible on the primary link implies traffic that is likewise transmissible on the auxiliary link. In addition, a non-AP MLD that is set up through the auxiliary link is always also set up through the primary link, and there does not exist any non-AP STA that is associated only through the auxiliary link.

When it is indicated through the Multi-link Traffic Indication element transmitted by the AP MLD that the MSDU queued on the AP MLD is able to be received through the primary link, it is evident that the MSDU is also able to be received through the auxiliary link. Further, it is evident that an MSDU that is transmissible by the AP MLD through the auxiliary link is also transmissible through the primary link.

Therefore, when the AP MLD indicates through the Multi-link Traffic Indication element that a bufferable unit (BU or MSDU) to be transmitted on each link is queued, the AP MLD may not indicate information about the auxiliary link. Instead, a traffic indication for the auxiliary link may be implicitly indicated through a traffic indication for the primary link. In this case, a link ID bitmap (Per-link Traffic Indication Bitmap subfield) included in the Multi-link Traffic Indication element transmitted by the AP MLD may not include a bit corresponding to the auxiliary link.

In other words, each bit of the Per-link Traffic Indication Bitmap included in the Multi-link Traffic Indication element transmitted by the AP MLD may correspond to a link ID of a general AP and/or the primary AP, and may not correspond to a link ID of the auxiliary AP. That is, the traffic indication for the auxiliary AP is not indicated by the AP MLD.

A non-AP MLD that is instructed by the AP MLD, through a Traffic Indication Map (TIM) element or a Multi-link Traffic Indication element, that there is an MSDU to be received on a specific primary link may attempt to receive a buffered BU from the AP MLD by transmitting a PS-poll frame through the specific primary link or an auxiliary link paired with the specific primary link.

<Configuration of BSS color of auxiliary BSS>

An auxiliary BSS may need to use the same BSS color as the BSS color of a primary BSS. That is, an AP MLD configures BSS Color fields (included in an HE-SIG-A of an HE PPDU or included in a U-SIG of an EHT/UHR PPDU) of a PPDU transmitted through a primary AP and an HE/EHT/UHR PPDU transmitted through an auxiliary AP to the same value. In addition, a non-AP MLD also needs to configure BSS Color fields of a PPDU transmitted in the primary BSS and a PPDU transmitted in the auxiliary BSS to the same value.

Therefore, when the primary AP configures the BSS color of the primary BSS to a new value by transmitting a BSS Color Channel Announcement element, the BSS color of the auxiliary BSS is changed to the new value.

However, the primary BSS and the auxiliary BSS need to be configured to have different BSS IDs. Configuring the BSS IDs of the two BSSs to different values means that the BSSID of the primary BSS and the BSSID of the auxiliary BSS are determined randomly.

<Parameter update of auxiliary BSS>

As described above, an auxiliary AP is unable to transmit a beacon frame (and a probe response frame), and there, when a parameter of the auxiliary BSS changes, the auxiliary AP is unable to announce the change to member STAs of the auxiliary BSS.

Instead, a parameter update of the auxiliary BSS may be performed through management frames transmitted by a primary AP that is paired with the auxiliary AP, or by another AP belonging to an AP MLD. More specifically, when the parameter of the auxiliary BSS is updated, the AP MLD may indicate that the parameter update of the auxiliary BSS is performed by using an Update Indication field (e.g., a BSS Parameter Change Count subfield (included in an MLD Parameters subfield corresponding to the auxiliary AP)) in an RNR element included in a management frame transmitted by the AP MLD. In this case, a non-AP MLD may recognize that the parameter of the auxiliary BSS has been changed through the received RNR element. Subsequently, the non-AP MLD may receive and update the parameter of the auxiliary BSS through a Per-STA Profile subelement of the auxiliary AP included in a Multi-link element transmitted by the AP MLD.

Some present bits included in the Per-STA Profile subelement corresponding to the auxiliary AP needs to always be configured to 0. A Beacon Interval Present subfield of the Per-STA Profile subelement corresponding to the auxiliary AP is configured to 0. A TSF Offset Present subfield of the Per-STA Profile subelement corresponding to the auxiliary AP is configured to 0. A DTIM Info Present subfield of the Per-STA Profile subelement corresponding to the auxiliary AP is configured to 0. In this case, the three subfields are configured to 0 because the auxiliary AP does not transmit a beacon frame and uses the same value of a TSF as that of the primary AP. That is, since pieces of information indicated when the Present subfields are indicated by 1 are not defined or do not need to be indicated for the auxiliary AP (BSS or link), the three Present subfields are always configured to 0 for the auxiliary AP.

Specific parameters among operating parameters of the auxiliary BSS may be dependent on an operating parameter of the primary BSS. For example, when an operating BW of the primary BSS is changed, an operating BW of the auxiliary BSS may be changed to the same as the operating BW of the primary BSS.

<Method of operating modified auxiliary link>

As described above, an AP MLD and a non-AP MLD may have an ML setup state including a plurality of links operating on overlapping operating channels in order to improve accessibility to a specific operating channel.

As an alternative, instead of configuring a plurality of links with overlapping operating channels, it is possible to utilize a method of configuring a plurality of links of which operating channels (bandwidths) are positioned contiguously.

More specifically, the AP MLD and the non-AP MLD may configure an ML setup connected through a plurality of links with contiguous operating channels within a specific channel bandwidth, thereby enhancing channel accessibility to the contiguous operating channels. For example, the AP MLD and the non-AP MLD may perform an ML setup through two links using two 80 MHz channels included in a specific 160 MHz channel respectively as operating channels, thereby enhancing accessibility to the specific 160 MHz channel. In another example, the AP MLD and the non-AP MLD may perform an ML setup through two links using two 160 MHz channels included in a specific 320 MHz channel respectively as operating channels, thereby enhancing accessibility to the specific 320 MHz channel. In still another example, the AP MLD and the non-AP MLD may perform an ML setup through four links using four 80 MHz channels included in a specific 320 MHz channel respectively as operating channels, thereby enhancing accessibility to the specific 320 MHz channel.

In this case, when performing transmission through a first STA (AP STA and/or non-AP STA) operating on the contiguous operating channels, the AP MLD and/or the non-AP MLD may perform a synchronized operation with transmission of a second STA operating on the contiguous operating channels. For example, when the AP MLD transmits a PPDU through a first AP operating on a first 80 MHz within specific 160 MHz, the AP MLD may perform synchronized transmission with a second AP operating on a second 80 MHz within the specific 160 MHz. In this case, the 80 MHz PPDUs transmitted respectively by the first AP and the second AP may be understood as a first segment and a second segment of a 160 MHz PPDU. The first segment may refer to a PPDU transmitted in a first 80 MHz segment within the specific 160 MHz, and the second segment may refer to a PPDU transmitted in a second 80 MHz segment within the specific 160 MHz. The AP MLD synchronizing transmission of the first AP and transmission of the second AP means that the transmission start times and the PPDU lengths of the PPDU transmitted through the first AP and the PPDU transmitted through the second AP are managed to be the same. In addition, when the first AP and the second AP transmit synchronized PPDUs, TXOPs obtained by the first AP and the second AP may also be synchronized. That is, when the AP MLD synchronizes the 80 MHz PPDUs and transmits the same through the first AP and the second AP, respectively, the two transmitted 80 MHz PPDUs may have a form equivalent to a single 160 MHz PPDU. That is, when the AP MLD transmits the synchronized PPDUs through the first AP and the second AP, the start times and the lengths of the TXOP obtained by the first AP and the TXOP obtained by the second AP are configured to be the same.

Further, as described above, when performing transmission through a first STA (AP STA and/or non-AP STA) operating on contiguous operating channels, the non-AP MLD may also perform a synchronized operation with transmission of a second STA operating on the contiguous operating channels. In this case, a detailed description of the synchronized transmission performed by the non-AP MLD is the same as that of the AP MLD described above, and thus is omitted.

One of a plurality of links with contiguous operating channels is configured as a primary link, and the remaining link(s) is configured as an auxiliary link. An AP operating on the primary link periodically transmits a beacon frame, while an AP operating on the auxiliary link does not transmit a beacon frame. In this case, the primary link and the auxiliary link operating on the contiguous operating channels may employ operating methods that are the same as/similar to those applied to the primary link and the auxiliary link operating on the overlapping operating channels described above. For the primary link and the auxiliary link operating on the contiguous operating channels, the same TID is mapped, and an AP and STAs operating on the auxiliary link share a TSF timer of an AP and STAs operating on the primary link.

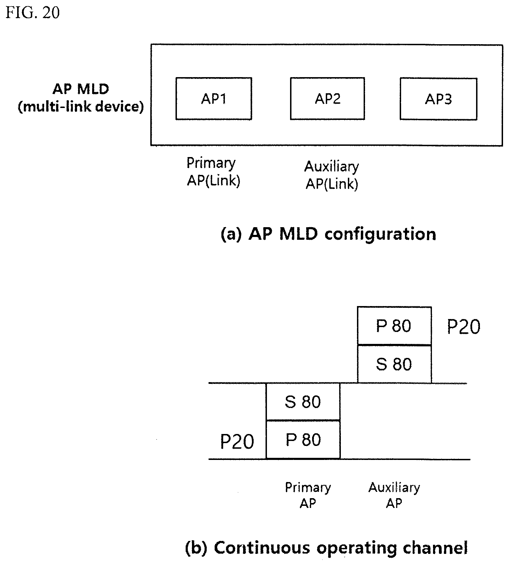

FIG. 20 illustrates the configuration of an AP MLD including a primary AP and an auxiliary AP having contiguous operating channels and a method for configuring an operating channel according to an embodiment of the present disclosure.

Referring to FIG. 20(a), three APs are affiliated with an AP MLD. AP1 functions as a primary AP, and AP2 functions as an auxiliary AP that is paired with the primary AP. AP3 is a general AP.

Referring to FIG. 20(b), the primary AP and the auxiliary AP operate on contiguous operating channels (two 160 MHz channels positioned with a specific 320 MHz channel).

An AP MLD and a non-AP MLD connected through a plurality of links with contiguous operating channels may perform communication by the following method.

1. STAs (AP STA and non-AP STA) operating on each link (primary link and auxiliary link(s) perform a backoff procedure through a primary channel of each link. The STA operating on the auxiliary link maintains a backoff counter at 0 when the backoff procedure is completed.

2-1. When the backoff procedure of the STA (AP STA or non-AP STA) operating on the primary link is completed, an MLD including the STA initiates transmissions through the primary link and the auxiliary link of which the backoff procedure has already been completed (including a link completed simultaneously with the primary link). In this case, the MLD performs the transmissions on the primary link and the auxiliary link as synchronized transmissions.

2-2. When the backoff procedure of the STA (AP STA and non-AP STA) operating on the primary link is suspended, the MLD including the STA performs transmission through the auxiliary link when the backoff procedure of the STA operating on the auxiliary link is completed. When the backoff procedure of the STA operating on the auxiliary secondary link has already been completed and the backoff counter has remained at 0 at a time when the backoff procedure of the STA operating on the primary link is interrupted, the MLD needs to reinitialize the backoff counter of the STA operating on the auxiliary link and perform the backoff procedure. In this case, a retry counter and a contention window (CW) of the STA operating on the auxiliary link are not changed. Here, interruption of the backoff procedure means that decrement of the backoff counter has been suspended, for example when the primary channel is occupied by an OBSS.

That is, when the backoff procedure of the primary link is completed, the MLD may initiate synchronized transmissions through the primary link and the auxiliary links of which the backoff procedures have been completed as in 2-1, thereby occupying the contiguous operating channels simultaneously.

When the backoff procedure of the primary link is interrupted, the MLD may initiate transmission through the auxiliary link as in 2-2. The MLD that initiates transmission through the auxiliary link terminates a TXOP obtained through the auxiliary link before a time when the backoff procedure on the primary link is expected to resume (e.g., when an NAV of the STA operating on the primary link is expected to reach 0).

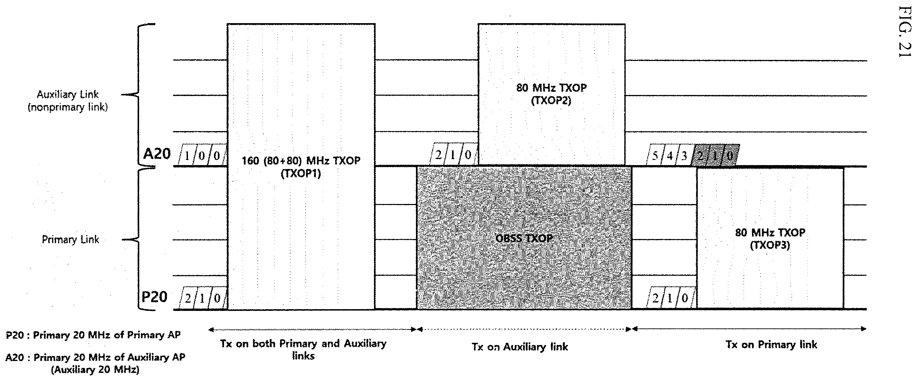

FIG. 21 illustrates a channel access method of an MLD that operates a STA on two links with contiguous operating channels according to an embodiment of the present disclosure.

Referring to FIG. 21, a primary link and an auxiliary link each having an 80 MHz operating BW are operated within a specific 160 MHz channel.

A procedure in which a first TXOP is obtained by an MLD is as follows.

The MLD has first completed a channel access procedure (backoff procedure) in A20 (primary 20 MHz channel of a BSS operating on the auxiliary link) of the auxiliary link, but does not initiate transmission on the auxiliary link and performs an operation of maintaining a backoff counter of the auxiliary link at 0 in order to perform transmission synchronized with the primary link. When a channel access procedure is completed in P20 (primary 20 MHz channel of a BSS operating on the primary link) of the primary link, the MLD initiates transmission not only on the primary link but also simultaneously on the auxiliary link of which the backoff counter has already reached zero. In this case, the MLD performs synchronized transmissions through STAs of the primary link and the auxiliary link. Two 80 MHz PPDUs transmitted by the MLD through the two links are indicated with a BW field of 160 MHz, allowing an external terminal to perceive the PPDUs as a single 160 MHz PPDU.

A procedure in which a second TXOP is obtained by the MLD is as follows.

Upon completing a channel access procedure (backoff procedure) in A20 (primary 20 MHz channel of the BSS operating on the auxiliary link) of the auxiliary link, the MLD initiates transmission on the auxiliary link considering that the primary link has been occupied by an OBSS. In this case, a TXOP (or PPDU) initiated on the auxiliary link is terminated before a time when a TXOP of the OBSS occupying the primary link is expected to terminate.

A procedure in which a third TXOP is obtained by the MLD is as follows.

Upon completing a channel access procedure (backoff procedure) in P20 of the primary link, the MLD initiates a TXOP on the primary link. The MLD loses a CCA capability on the auxiliary link after initiating transmission on the primary link, and therefore the backoff counter of the secondary link may not be reduced to 3 or less. However, the MLD capable of performing CCA on the auxiliary link may be able to continuously reduce the backoff counter of the auxiliary link.

<MU PPDU transmission/reception method of terminals that performs non-primary (secondary) channel access using single link>

As described above, a channel access method using a non-primary channel may be considered as a method for improving channel accessibility of a Wi-Fi STA, and for an MLD, a method for enhancing channel accessibility using a characteristic of the MLD (the foregoing overlapping BSS or the like) may be used. A common feature of various channel access methods provided in the present disclosure is that a transmitting device does not perform channel access through only one primary channel, but performs channel access by using a different channel (non-primary channel or primary channel of an auxiliary link) when the primary channel is occupied by another device.

Since the transmitting device may initiate transmission through a different channel other than the primary channel, a receiving device needs to wait to receive a PPDU on a different subchannel (non-primary channel or primary channel of the auxiliary link) other than the primary channel when the state of the primary channel observed by the receiving device is busy.

A PPDU transmitted by a STA (AP STA or non-AP STA) that has performed channel access through the non-primary channel does not occupy the primary channel, while a PPDU transmitted by a STA that has performed channel access through the primary channel may occupy the non-primary channel. This is because the primary channel is always regarded as busy by the STA that performs channel access through the non-primary channel, while the STA performing channel access through the primary channel conducts the channel access through the primary channel regardless of the state of the non-primary channel.

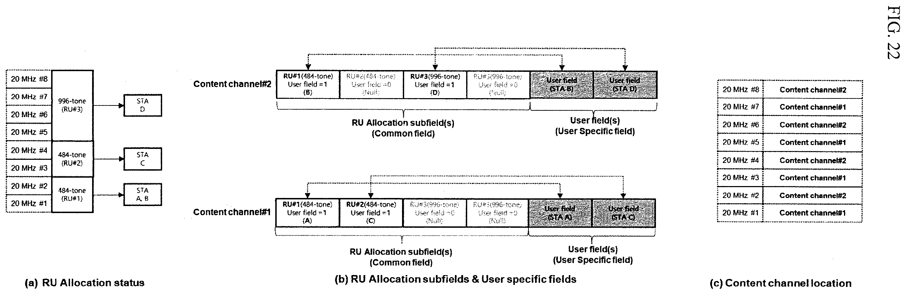

Therefore, when the state of the primary channel determined by the transmitting device is idle, the transmitting device may transmit a PPDU occupying both the primary channel and the non-primary channel, and the receiving device having determined the primary channel to be busy may receive the PPDU through the non-primary channel. That is, a device receiving a PPDU in the non-primary channel may receive both a PPDU transmitted by the transmitting device after performing channel access through the primary channel and a PPDU transmitted by the transmitting device after performing channel access through the non-primary channel, in which case the device may have difficulty in interpreting whether an RU thereof, which is indicated by an RU Allocation subfield of the received PPDU, corresponds to a particular RU (or multiple-RU (MRU)) index. That is, the transmitting device and the receiving device may have different judgments regarding the state (idle or busy) of the primary channel, and thus a channel on which the transmitting device performs channel access and a channel on which the receiving device starts PPDU reception may differ. A procedure for a conventional Wi-Fi STA to indicate and obtain RU allocation information is briefly described with reference to an embodiment of FIG. 22. Hereinafter, an RU may be interpreted as a collective term that encompasses not only conventional RUs such as 26-, 52-, 106-, 242-, 484-, 996-, and 996 x N-tone size RUs (where N is a natural number greater than 2), but also MRUs (e.g., 52+26, 106+26, 484+242, 996+484-tone size RUs).

That is, the transmitting device may determine that the primary channel and the non-primary channel are idle, but the receiving device may determine that the primary channel is busy and the non-primary channel is idle. In this case, the transmitting device may transmit a PPDU occupying both the primary channel and the non-primary channel. However, since the primary channel is in busy, the receiving device is unable to receive a PPDU on the primary channel, and is able to receive a PPDU on the non-primary channel. The receiving device has received the PPDU on the non-primary channel, and thus may interpret a field (e.g., an RU Allocation subfield) included in the PPDU, based on the non-primary channel. However, the transmitting device may generate fields, based on the primary channel, and may include the generated fields in the PPDU. Therefore, in this case, when the receiving device interprets the fields included in the received PPDU, based on the non-primary channel, the receiving device may interpret the fields included in the PPDU differently from the transmitting device. Therefore, in this case, the receiving device needs to interpret the fields included in the PPDU, based on the primary channel.

To this end, when the transmitting device transmits a PPDU by using both the primary channel and the non-primary channel, even though the receiving device receives the PPDU on the non-primary channel, the receiving device may interpret fields included in the PPDU, based on the primary channel.

According to another embodiment of the present disclosure, indication information instructing the non-primary channel to interpret fields included in a PPDU based on the primary channel may be included in the PPDU and transmitted.

FIG. 22 illustrates an embodiment of a Resource Unit Allocation subfield indicated through a preamble of a PPDU, a method for performing resource unit allocation to each STA by using a Resource Unit Allocation subfield, and a method for indicating a content channel.

FIG. 22(a) illustrates a situation in which two 484-tone RUs and one 996-tone RU included in a 160 MHz bandwidth are allocated to STAs A, B, C, and D. STA A and STA B are allocated RU#1 (484-tone size RU) located in the lowest frequency region, STA C is allocated RU#2 (484-tone size RU), and STA D is allocated RU#3 (996-tone size RU).

As in FIG. 22(a), a transmitting device that transmits a PPDU for allocating an RU may indicate an RU configuration and information about STAs to which each RU is allocated through a Signaling field (e.g., an HE/EHT/UHR SIG field) included in a DL PPDU. In this case, the Signaling field transmitted through each 20 MHz subchannel may include the same or different content channels.

FIG. 22(b) illustrates the configuration of a content channel. Each content channel includes an RU Allocation subfield and a User field. RU Allocation subfields included in content channel #1 respectively correspond to odd-numbered 20 MHz subchannels (see FIG. 22(a)), and RU allocation subfields included in content channel #2 respectively correspond to even-numbered 20 MHz subchannels (see FIG. 22(a)).

Each RU Allocation subfields included in the content channel indicates RU information about each corresponding 20 MHz subchannel. More specifically, first and second RU Allocation subfields included in content channel#1 indicate information about RUs corresponding to subchannels 20 MHz #1 and 20 MHz #3, respectively, and first and second RU Allocation subfields included in content channel#2 indicate information about RUs corresponding to 20 MHz #2 and 20 MHz #4, respectively.

Referring to FIG. 22(a), subchannel 20 MHz #1 corresponds to RU#1, and thus the first RU Allocation subfield included in content channel #1 indicates information about RU#1. In this case, the RU Allocation subfield may also indicate number information about a user to which the corresponding RU is allocated, and a User field specified by an indicated number among User fields following the RU Allocation subfields is interpreted as being allocated the RU indicated by the corresponding RU Allocation subfield.

In an example of FIG. 22(b), the first RU Allocation subfield included in content channel #1 indicates one user, and thus RU #1 is allocated to STA A corresponding to a first User field included in content channel #1. Since the second RU Allocation subfield included in content channel #1 indicates RU #2 corresponding to 20 MHz #3 and indicates one user, RU #2 is allocated to STA C corresponding to a second User field included in content channel #1.

Content channels #1 and #2 appear alternately across each 20 MHz band, and specific indication positions may be identified through FIG. 22(c). Therefore, a STA that intends to identify the position of an RU allocated thereto may receive two types of content channels received through a specific 40 MHz band (e.g., a primary 40 MHz band, a secondary 40 MHz band, or a specific 40 MHz band included in a secondary 80/160 MHz band), identify whether a User field corresponding to the STA is included in the content channels, and then identify information about an RU indicated by an RU Allocation subfield corresponding to the User field of the STA, thereby obtaining RU information allocated to the STA. However, content channels positioned in different 80 MHz segments may include different content even though the content channels have the same index. For example, content channel #1 indicated in 20 MHz #1 and content channel #1 indicated in 20 MHz #5 may have different content.

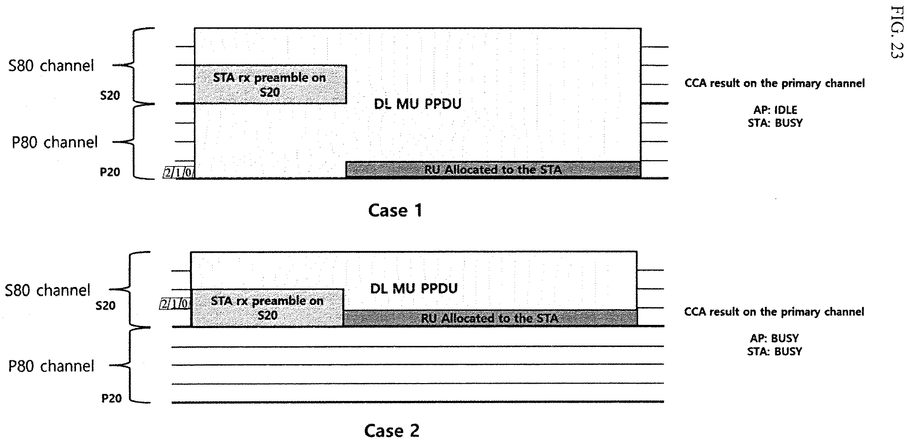

FIG. 23 illustrates an ambiguity in interpreting an allocated RU for a STA that receives a preamble through a non-primary channel.

Case 1 and case 2 in FIG. 23 respectively illustrate a case in which a DL MU PPDU is transmitted by an AP that has performed channel access on a primary 20 MHz channel and a case in which a DL MU PPDU is transmitted by an AP that has performed channel access on secondary 20 MHz channel.

Case 1 is a situation that occurs when the AP has determined that the primary channel (primary 20 MHz subchannel) is idle but a STA has determined that the primary channel is busy, and case 2 is a situation that occurs when both the AP and the STA have determined that the primary channel is busy.

In both case 1 and case 2, the STA receives a preamble while waiting to receive a PPDU through S20, and receive a content channel included in the preamble, thus identifying that an RU allocated to the STA is a 242-tone size RU located in the lowest frequency band.

However, in case 1 and case 2, the position of the 242-tone size RU located in the lowest frequency band differs, and thus the STA is unable to identify whether the RU allocated to the STA corresponds to case 1 or case 2.

Thus, to resolve an ambiguity in interpreting an RU allocated for a receiving device, the following two methods may be used.

1) First, when identifying an RU indicated through an RU Allocation subfield of a received PPDU, the receiving device interprets the RU Allocation subfield by different methods depending on whether a device having transmitted the received PPDU has transmitted the PPDU after performing channel access through a primary channel or after performing channel access through a non-primary channel. In this case, the RU Allocation subfield being interpreted by different methods implies that a reference frequency used to interpret the position of the RU indicated by the RU Allocation subfield varies. That is, a subchannel corresponding to a specific sequence of the RU Allocation subfield indicated through a UHR-SIG (or EHT-SIG or HE-SIG) field may differ depending on whether the device transmitting the PPDU including the SIG field performed channel access on the primary channel or on the non-primary channel.

2) Second, the transmitting device may apply a configuration indicating that signaling fields (e.g., Bandwidth, RU Allocation subfield, and Puncturing Information) of a PPDU transmitted after performing channel access on the non-primary channel are in a form of a PPDU transmitted after performing channel access on the primary channel where a band including the primary channel is punctured. That is, the transmitting device may configure the signaling fields of the non-primary channel PPDU in the same manner as those of the PPDU transmitted after performing channel access on the primary channel, but may indicate that the band (e.g., a primary 80 MHz segment) including the primary channel is punctured. In this case, regardless of which channel the device having transmitted the received PPDU used to perform channel access, the receiving device may obtain RU information allocated to the receiving device by interpreting the received PPDU as if the PPDU were transmitted by the device that performed channel access on the primary channel.

As described above in the first method, the receiving device needs to determine whether the received PPDU has been transmitted by the transmitting device that has completed channel access on the primary channel or by the transmitting device that has completed channel access on the non-primary channel, and interpret the RU Allocation subfield by different methods. In this case, the RU Allocation subfield refers to an RU Allocation subfield included in a Signaling field (e.g., included in an HE-SIG, EHT-SIG, or UHR-SIG field) positioned in a preamble of an MU PPDU and/or an RU Allocation subfield positioned in a User field included in a trigger frame.

A method for the receiving device to identify which channel the transmitting device has used to perform channel access to transmit a PPDU may be to utilize direct or indirect information indicated by the transmitting device.

According to an embodiment of the present disclosure, a STA (AP STA and non-AP STA) that transmits a first PPDU after performing channel access on a non-primary channel may configure a specific field of the first PPDU in a different manner from a specific field of a second PPDU that is transmitted after performing channel access on a main channel. The specific subfield may be a field included in a U-SIG (Universal SIG field). For example, the STA that transmits the PPDU after performing channel access on the primary channel may configure the specific field of the U-SIG to 0, and the STA that transmits the PPDU after performing channel access on the non-primary channel may configure the specific field of the PPDU to a value other than 0. In this case, a device receiving the PPDU may determine, based on the specific field, whether the transmitting device of the PPDU has performed channel access on the primary channel and transmitted the PPDU or has performed channel access on the non-primary channel and transmitted the PPDU.

According to another embodiment of the present disclosure, even though the transmitting device does not indicate whether the transmitting device has performed channel access through on the primary channel or on the non-primary channel, the receiving device may be able to autonomously determine a channel access method of the transmitting device. For example, the receiving device having received an 80 MHz PPDU occupying a secondary 80 MHz segment from a STA (AP STA and non-AP STA) of a BSS with an operating BW of 160 MHz may recognize that the STA performed channel access on a non-primary channel located in the secondary 80 MHz segment and transmitted the 80 MHz PPDU. That is, the receiving device is able to obtain information about a channel in which the transmitting device has performed channel access, based on BW information about a received PPDU.

The device receiving a PPDU interprets an RU Allocation subfield included in the received PPDU in the following manners, based on whether the received PPDU was received from a device that performed channel access on the primary channel or from a device that performed channel access on the non-primary channel.

First, when it is determined that the received PPDU was transmitted by the device that performed channel access on the primary channel, the receiving device interprets an RU Allocation subfield received on the non-primary channel in the same manner as an RU Allocation subfield received on the primary channel.

Second, when it is determined that the received PPDU was transmitted by the device that performed channel access on the non-primary channel, the receiving device interprets the RU Allocation subfield received on the non-primary channel as if the RU Allocation subfield were been transmitted by a device that uses the non-primary channel as a primary channel. That is, the receiving device that interprets the RU Allocation subfield received on the non-primary channel needs to interpret the received RU Allocation subfield by considering the receiving device as the primary channel and the 80 MHz segment including the non-primary channel as a primary 80 MHz segment. In this process, when interpreting the position of an RU indicated through the RU Allocation subfield received on the non-primary channel, the receiving device may interpret the position of the RU indicated through the RU Allocation subfield as being shifted by a frequency offset between the primary channel and the secondary channel of the receiving device, thereby identifying the position of the RU allocated to the receiving device.

In a case where the second method described above is used, when transmitting a PPDU after performing channel access on the non-primary channel, the transmitting device configures signaling fields of the PPDU in the same manner as when transmitting a PPDU after performing channel access on the primary channel. However, since the transmitting device performs secondary channel access during a time interval in which the primary channel is determined to be busy, the PPDU transmitted after performing channel access on the non-primary channel is always transmitted without occupying the primary channel. That is, when transmitting a PPDU after performing channel access on the non-primary channel, the transmitting device needs to transmit the PPDU in a punctured form of the primary channel (in a form that does not occupy the primary channel).

For example, when the primary channel is determined to be busy and the transmitting device performs channel access through the non-primary channel located in a secondary 80 MHz segment, the transmitting device needs to, when transmitting a PPDU through the secondary 80 MHz segment, configure a BW field of the PPDU to 160 MHz and indicate that preamble puncturing is applied to a subchannel in which the primary 20 MHz channel is located. In this case, a method for applying preamble puncturing to the subchannel located in the primary 20 MHz channel may be to puncture a primary 20 MHz subchannel or to puncture a band (e.g., a primary 40 MHz band or a primary 80 MHz segment) including the primary 20 MHz subchannel.

That is, a conventional Wi-Fi restriction that preamble puncturing should not be applied to a primary 20 MHz subchannel may not be applied to the PPDU transmitted after channel access is performed on the non-primary channel.

In this case, the receiving device is able to determine whether the transmitting device has performed channel access through the primary channel or through the non-primary channel, based on the RU Allocation subfield included in the PPDU. More specifically, when the RU Allocation subfield of the received PPDU indicates that an RU located on the primary channel has been punctured, the receiving device may recognize that the device transmitting the PPDU performed channel access through the non-primary channel. In this case, the RU Allocation subfield indicating that the RU has been punctured refers to an RU Allocation subfield interpreted as a "punctured 242-tone RU." In this case, a 20 MHz subchannel indicated as a punctured 242-tone RU is a subchannel to which puncturing is applied in the PPDU and thus which is not occupied.

However, when obtaining information about an RU allocated to the receiving device through the RU Allocation subfield included in the PPDU, the receiving device may interpret the RU Allocation subfield in the same manner regardless of whether a channel used for channel access by the device that has transmitted the PPDU is the primary channel or the non-primary channel.

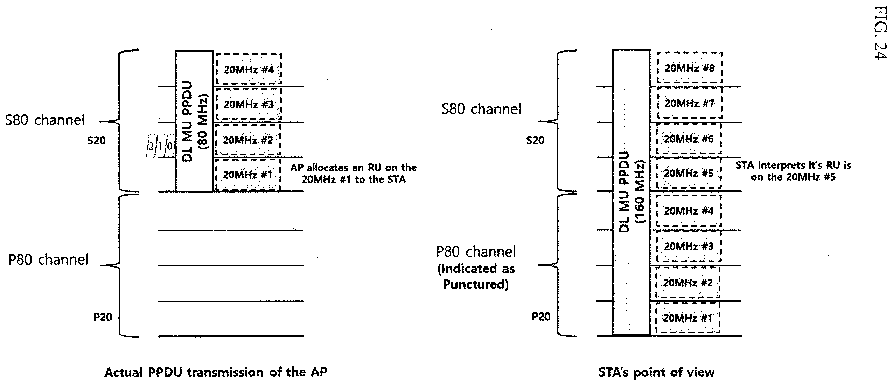

FIG. 24 illustrates a method for an AP having performed channel access through a non-primary channel to indicate the BW and RU allocation information of a PPDU according to an embodiment of the present disclosure.

Referring to FIG. 24, the AP performs channel access through a non-primary channel, and subsequently transmits an 80 MHz PPDU occupying a secondary 80 MHz segment. In this case, the AP indicates through a U-SIG of the PPDU that the BW of the PPDU is 160 MHz. The indicated PPDU BW may be determined as a BW including an actual frequency band occupied by the PPDU and a primary channel.

In addition, since the PPDU actually transmitted by the AP does not occupy a primary 80 MHz segment, the AP does not allocate an RU through RU Allocation subfields corresponding to the primary 80 MHz segment among the RU Allocation subfields included in the PPDU. In this case, the AP indicates, through the RU Allocation subfields corresponding to the primary 80 MHz segment, that a corresponding subchannel has been punctured.

The STA receiving the PPDU from the AP recognizes that the received PPDU is a PPDU of a 160 MHz BW, and identifies the RU Allocation subfields to identify an RU allocated to the STA. The STA may identify that a subchannel corresponding to an RU Allocation subfield corresponding to a User field of the STA is a 20 MHz #5 subchannel included in the secondary 80 MHz segment. Therefore, the STA may identify that the RU allocated to the STA is an RU located at 20 MHz #5. In this case, the STA may receive the RU Allocation subfields corresponding to the primary 80 MHz segment among the received RU Allocation subfields and identify that the RU allocated to the STA does not exist in the primary 80 MHz segment. That is, since the RU Allocation subfields indicating that the subchannel corresponding to the primary 80 MHz segment has been punctured are included in a content channel, the STA may clearly recognize that a band corresponding to the RU Allocation subfield corresponding to the User field of the STA is 20 MHz #5.

<Method for terminals that perform non-primary channel access procedure using single link to transmit trigger frame and respond to trigger frame>

A trigger frame is a Wi-Fi control frame in which a response is carried out by a receiving device in a manner indicated/requested by a transmitting device. For example, an AP may transmit a basic trigger frame to a STA, thereby instructing the STA to respond with a TB PPDU.

A basic trigger frame includes a Common Info field and a User Info field, and a brief description of the Common Info field and the User Info field is as follows. The Common Info field is a field that includes information commonly indicated to a plurality of STAs responding with a TB PPDU, such as the length of the TB PPDU, whether an additional trigger frame is transmitted, whether a carrier sensing result needs to be considered when responding with the TB PPDU, and UL BW information to be recorded in a BW field of the TB PPDU. The User Info field indicates information about an RU in which each STA needs to respond with a TB PPDU, an FEC coding method, MCS information to be applied to the TB PPDU, dual carrier modulation (DCM), and target Rx power information, and each STA responds with a TB PPDU, based on information obtained through a User Info field corresponding to the STA.

In addition, an MU-RTS trigger frame that may be used for protection is also a type of trigger frame, and an AP intending to transmit a DL MU PPDU may perform protection with a plurality of STAs at once by transmitting an MU-RTS frame for requesting a response with a CTS frame to one or more STAs. A detailed description of the MU-RTS trigger frame is as follows.

An MU-RTS is a type of trigger frame. STAs whose AID12 (least significant 12 bits of an association ID) is indicated in a User field of the MU-RTS frame, upon receiving the MU-RTS trigger frame, are required to simultaneously respond with a CTS frame. When an AP performs TXOP protection using an MU-RTS frame, since a plurality of STAs responds with a CTS frame, a TXOP may be protected from adjacent devices of the plurality of STAs that is destination devices of a downlink multi-user PPDU (DL MU PPDU). In addition, an MU-RTS frame may also be used for protecting an UL MU PPDU. More specifically, before requesting a trigger-based (TB) PPDU from a plurality of STAs through a trigger frame, an AP may transmit an MU-RTS frame, thereby causing the plurality of STAs that is to respond with the TB PPDU to respond with a CTS frame. In this case, the CTS frames with which the plurality of STAs responds serve to induce neighbor STAs of each STA to configure an NAV that protects the TB PPDU and an acknowledgment frame (such as Ack or Block Ack) transmitted after the TB PPDU, and thus even legacy STAs that are unable to recognize (interpret or decode) the trigger frame and the TB PPDU may refrain from performing channel access during a packet exchange sequence interval (or TXOP) initiated by the trigger frame.

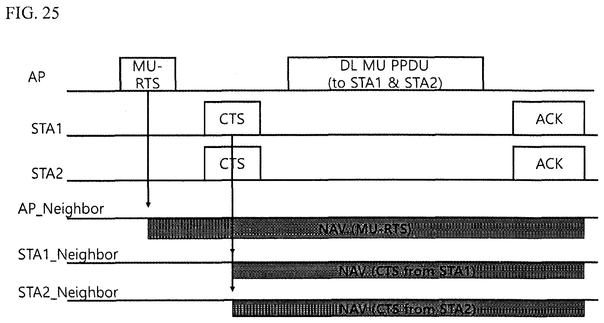

FIG. 25 illustrates an embodiment of a transmission/TXOP protection method using an MU-RTS frame and a CTS frame.

Referring to FIG. 25, before transmitting an MU PPDU, an AP transmits an MU-RTS frame to STA1 and STA2, which are destination devices of the MU PPDU, and STA1 and STA2 receive the MU-RTS frame, and each respond with a CTS frame after SIFS.

STA1_Neighbor, which is a neighbor STA of STA1, receives the CTS frame transmitted by STA1, and subsequently configures an NAV based on information indicated in a Duration field of the CTS frame. STA2_Neighbor, which is a neighbor STA of STA2, receives the CTS frame transmitted by STA2, and subsequently configures an NAV based on information indicated in a Duration field of the CTS frame. STA1_Neighbor and STA2_Neighbor perform an operation of not reducing a backoff counter considering that a virtual carrier sense (VCS) is busy while the NAV (counter) configured after receiving the CTS frame is maintained at a value other than 0. Therefore, since the neighbor terminals that have received the CTS frame do not attempt transmission during a duration in which the NAV is maintained at a value other than 0, the AP may transmit the MU PPDU and STA1 and STA2 may respond with an Ack frame, without being interrupted by the neighbor terminals.

The foregoing trigger frame is a frame type defined in 11ax, in which Type (B3 and B2) and Subtype (B7, B6, B5, and B4) subfields of a Frame Control field are configured to 01 and 0010, respectively. That is, the trigger frame is a control-type frame in which the Type subfield of the Frame Control field is 01, and the Subtype value of 0010 is used to indicates a trigger frame type. In 11ax, a trigger frame is defined such that an AP may request response frames from a plurality of STAs at once, and an MU-RTS frame (a type of trigger frame) described above is used for an AP to request CTS frames from a plurality of STAs (non-AP STAs). Other trigger types excluding an MU-RTS include a basic trigger frame (for requesting a UL MU PPDU), a beamforming report poll trigger frame (for requesting a beamforming report), an MU-BAR trigger frame (for requesting a block Ack), a buffer status report poll trigger frame (for requesting a buffer status report), a GCR MU-BAR trigger frame, a bandwidth query report poll trigger frame, and an NDP feedback report poll trigger frame.

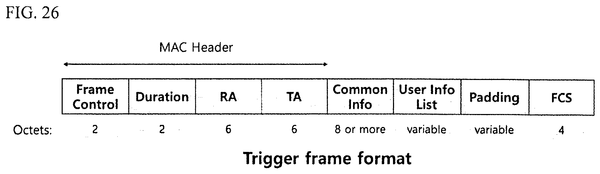

FIG. 26 illustrates the format of a trigger frame.

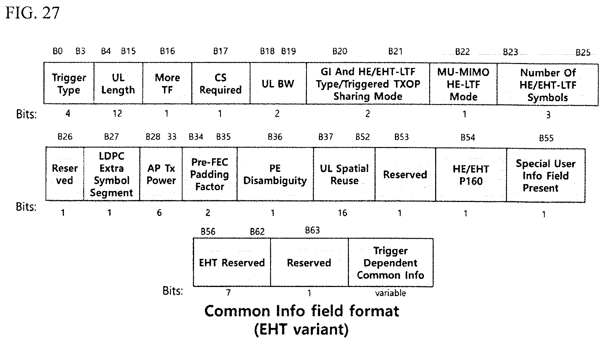

The trigger frame includes a MAC header including a Frame Control field, a Common Info field, a User Info List field, a Padding field, and an FCS field. The Frame Control field includes Type and Subtype subfields, and the two subfields in the trigger frame are configured to 01 and 0010, respectively. The Common Info field includes a Trigger Type subfield indicating the type of the trigger frame and a UL Length subfield indicating the length of responding UL transmission, which are described in detail through an embodiment of FIG. 27.

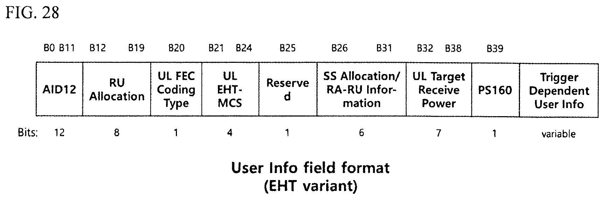

The User Info List field includes zero or one or more User Info fields including information indicating a destination device of the trigger frame. In addition to the information indicating the destination device, the User Info field includes information about a parameter (UL DCM or UL MCS) to be used by the destination device to transmit a response frame after receiving the trigger frame depending on the type of the trigger frame. Details of the User Info field are described in detail with reference to FIG. 28.

The Padding field is added to secure time for destination devices of the trigger frame to prepare a response frame (e.g., a UL TB PPDU and a CTS frame) after receiving the trigger frame, and an AP transmitting the trigger frame may adjust the length of the Padding field considering the performance of the destination devices. Further, in 11be (Wi-Fi 7 or EHT), the Padding field may be added/adjusted to align the end time of a PPDU including the trigger frame with another PPDU, which is not related to the content intended to be provided by the present disclosure and thus is not described in detail.

The Frame Check Sequence (FCS) field includes a 32-bit cyclic redundancy code (CRC), and is a value calculated by including the MAC header and a Frame Body field. A function and a configuration method of the FCS field of the trigger frame are the same as a function and a configuration method of an FCS field included in a conventional MAC frame, and thus a separate description thereof is omitted.

FIG. 27 illustrates an example of the format of a Common Info field of a trigger frame.

A Trigger Type subfield (4 bits) is used to indicate the type (or variant) of the trigger frame. When the Trigger Type subfield is configured to 0, the Trigger Type subfield indicates Basic; 1 indicates Beamforming Report Poll (BFRP); 2 indicates MU-BAR; 3 indicates MU-RTS; 4 indicates Buffer Status Report Poll (BSRP); 5 indicates GCR MU-BAR; 6 indicates Bandwidth Query Report Poll (BQRP); and 7 indicates NDP Feedback Report Poll (NFRP).

A UL Length subfield indicates a value to be configured in an L-SIG LENGTH field of a TB PPDU that is transmitted in response to the trigger frame.

A More TF subfield is used to indicate whether there are more trigger frames to be transmitted after the trigger frame.

A CS Required subfield indicates whether a destination device of the trigger frame needs to perform CS (physical & virtual CS, ED & NAV) when transmitting a response frame. A STA that transmits a response frame after receiving the trigger frame in which the CS Required subfield is configured to 1 is required to perform CS.

A UL BW subfield indicates a BW value that STAs responding with a TB PPDU after receiving the trigger frame needs to indicate in a preamble (e.g., HE-SIG-A or U-SIG).

A GI and HE/EHT-LTF type/Triggered TXOP Sharing Mode subfield is a subfield indicating guard interval (GI) and HE (EHT)-LTF values of a TB PPDU to be transmitted in response, or indicating a sharing mode when an MU-RTS trigger frame is used for TXOP sharing using an MU-RTS TXOP sharing (TXS) trigger frame.

An MU-MIMO HE(EHT)-LTF Mode subfield indicates information related to an HE(EHT)-LTF mode that needs to be applied to the TB PPDU to be transmitted in response.

A Number Of HE/EHT-LTF Symbols subfield indicates the number of HE(EHT)-LTF symbols that need to be applied to a TB PPDU when a Doppler subfield is configured to 0, and indicates the number of HE(EHT)-LTF symbols and the periodicity of a midamble when the Doppler subfield is configured to 1.

A LDPC Extra Symbol Segment subfield indicates whether an LDPC extra symbol segment needs to be present in a TB PPDU to respond with. When the LDPC Extra Symbol Segment subfield is configured to 1, the LDPC extra symbol segment needs to be present in the TB PPDU.

An AP Tx Power subfield indicates a value related to transmission power used when an AP transmits the trigger frame. A STA may perform power control when responding with a response frame, based on the value indicated by the AP Tx Power subfield.

Pre-FEC Padding Factor and PE Disambiguity subfields indicate whether a pre-FEC padding factor is 1, 2, 3, or 4 and information for clarifying the length of a packet extension (PE).

A UL Spatial Reuse subfield includes four Spatial Reuse subfields, and indicates a value to be configured in Spatial Reuse fields (HE-SIG-A) of an HE TB PPDU to respond with.

The Doppler subfield indicates whether a midamble is included in a TB PPDU to respond with. However, the trigger frame that causes an EHT TB PPDU to be transmitted in response may have the Doppler subfield reserved. Here, the subfield being reserved may imply that a STA that responds with the EHT TB PPDU after receiving the trigger frame operates without considering the presence and configured value of the subfield.

An HE/EHT P160 subfield indicates whether a TB PPDU to be transmitted in response is an HE TB PPDU or an EHT TB PPDU in a channel corresponding to P160 MHz.

A Special User Info Field Present subfield indicates whether a User Info field in which an AID12 subfield is configured to 2007 appears among User Info fields.

A Trigger Dependent Common Info subfield is a field included only when the type of the trigger frame indicated by the Trigger Type field is a basic trigger frame or an NFRP trigger frame.

FIG. 28 illustrates an example of the format of a User Info field of a trigger frame.

Referring to FIG. 28, an AID12 subfield indicates information related to which STA the corresponding User Info field pertains to. That is, a STA having an AID that matches a value indicated in the AID12 subfield of a particular User Info field may recognize that the corresponding trigger frame includes the STA as a destination device. Here, the AID12 subfield may be configured to 1 to 2006 (1 to 2007 in a case of an HE trigger) when indicating one associated STA.

The AID12 subfield may be configured to 0 when one or more random access RUs (RA-RUs) are to be allocated to associated STAs. That is, the STAs associated with an AP may attempt to transmit a TB PPDU using an RA-RU when the received trigger frame does not include a User Info field in which AID12 indicates the AID of the STAs but includes a User Info field in which AID12 is indicated as 0.

The AID12 subfield may be configured to 2045 or 2044 when one or more RA-RUs are to be allocated to unassociated STAs. That is, the STAs that are not associated with the AP may attempt to transmit a TB PPDU using an RA-RU when the received trigger frame includes a User Info field in which AID12 is indicated as 2045 and 2044. In this case, a STA that responds with a TB PPDU through an RA-RU may be required to respond with an HE TB PPDU when AID12 is indicated as 2045, and may be required to respond with an EHT TB PPDU when AID12 is indicated as 2044.

The AID12 subfield may be configured to a preconfigured value, such as 4095 or 4094. The AID12 subfield indicated as the preconfigured value signifies that a padding field starts from the corresponding AID12 subfield. That is, when the AID12 subfield of the trigger frame is indicated as a value (preconfigured) that signifies the start of the padding field, the STA may recognize that the padding field has started, and may refrain from attempting to parse the remaining portion of a MAC frame.

A User Info field in which an AID12 subfield is configured to 2046 may include information about an RU that is not allocated. More specifically, when an AID12 subfield of a particular User Info field is indicated as 2046, an RU indicated by an RU Allocation subfield included in the particular User Info field may be an unallocated RU.

An RU Allocation subfield of other trigger frames excluding an MU-RTS trigger frame indicates information about the size and position of a resource unit (RU)/multiple resource unit (MRU) allocated to a destination device (STA indicated through the AID12 subfield) of the corresponding User Info field. However, an RU allocation subfield of the MU-RTS trigger frame is used to indicate a channel on which the destination device of the corresponding User Info field needs to respond with a CTS frame. Specifically, the RU Allocation subfield (of the User Info field) of the MU-RTS frame indicates whether the destination STA needs to respond with the CTS only on a primary 20 MHz channel or on a primary 40 MHz/primary 80 MHz/primary 160 MHz/80 + 80 MHz/(primary) 320 MHz (when an EHT/UHR AP performs transmission) channel when responding with the CTS frame. More specifically, the AP may indicate one value among 61 to 64 through B7 to B1 of an Allocation subfield in a User Info field of a particular STA in order to instruct the particular STA to respond with a CTS frame through primary 20 MHz, may indicate 65 or 66 through B7 to B1 of the RU Allocation subfield in order to instruct the particular STA to respond with a CTS frame through primary 40 MHz, may indicate 67 through B7 to B1 of the RU Allocation subfield in order to instruct the particular STA to respond with a CTS frame through primary 80 MHz, and may indicate 68 in order to instruct the particular STA to respond with a CTS frame through primary 160 MHz. An instruction to respond with a CTS frame through the primary 320 MHz channel is performed by indicating 69 through B7 to B1. In this case, a PS160 subfield of the User Info field is configured to 0 when an instruction is to respond with a CTS frame through primary 20/40/80/160 MHz, and is configured to 1 when an instruction is to respond with a CTS frame through (primary) 320 MHz channel.

A UL FEC Coding Type subfield indicates the code type of a TB PPDU to be transmitted in response. When the UL FEC Coding Type subfield is 0, the UL FEC Coding Type subfield indicates binary convolution coding (BCC), and when the UL FEC Coding Type subfield is 1, the UL FEC Coding Type subfield indicates a low density parity check (LDPC).

A UL EHT-MCS subfield indicates an EHT-MCS that needs to be applied to a TB PPDU to respond with.

An SS Allocation/RA-RU Information subfield may be used as an RA-RU Information subfield when the AID12 subfield is not a value indicating that an RA-RU has been allocated, that is, is indicated as 0, 2044, or 2045, and may be used as an SS Allocation subfield when the AID12 subfield is indicated as a value other than 0, 2044, or 2045. When the SS Allocation/RA-RU Information subfield is used as an SS Allocation subfield, 6 bits corresponding to the SS Allocation subfield may be used as a 4-bit Starting Spatial Stream subfield and a 2-bit Number of Spatial Streams subfield.

A UL Target Receive Power subfield indicates a predicted signal power value for which a TB PPDU to respond with is received at an antenna side of the AP. Therefore, when responding with a TB PPDU, the STA may need to adjust the transmission power of the TB PPDU according to the value of the UL Target Receive Power subfield so that the AP may receive the TB PPDU with predicted power.

The PS160 subfield is used together with the RU Allocation subfield, and indicates information about the position and size of the RU/multiple RU (MRU) allocated by the corresponding User Info field.

However, the UL EHT-MCS, UL FEC Coding Type, UL DCM, SS Allocation/RA-RU Information, and UL Target Receive Power fields are not used in the MU-RTS trigger frame. That is, these fields are reserved subfields.

As described above, an AP transmits an MU-RTS frame, and indicates a STA to respond with a CTS frame through a User Info field while simultaneously specifying a band in which each STA needs to respond with a CTS frame, including a primary 20 MHz channel.

However, when the non-primary channel access method provided in the present disclosure is used, the AP may perform channel access through a non-primary channel, and then transmit an MU-RTS frame through channels other than the primary 20 MHz channel. In this case, a STA that responds with a CTS frame after receiving the MU-RTS frame and is also required to respond with a CTS frame in a manner that does not occupy the primary 20 MHz channel.

Therefore, the AP that transmits the MU-RTS frame after performing channel access on the non-primary channel indicates a STA to respond with a CTS frame through a User Info field.

This operation is different from that in which a conventional Wi-Fi STA performs transmission only in a state of occupying the primary 20 MHz channel. Thus, upon receiving the MU-RTS frame from the AP that has performed channel access through the non-primary, the STA is required to respond with a CTS frame not occupying the primary channel.

However, as described above, the AP that transmits the MU-RTS frame and indicates a channel on which the STA is to responds with a CTS frame has a limitation in that the AP is able to indicate only a channel type occupying the primary 20 MHz channel, such as primary 20/40/80/160/320 MHz. Accordingly, in order to allow the AP that transmits the MU-RTS frame after performing channel access through the non-primary channel to indicate a response with a CTS frame occupying only the non-primary channel, more information than that included in a conventional MU-RTS trigger frame may need to be utilized between the AP and STA performing an non-primary channel operation. The more information may include information about a channel utilized by the AP for channel access and/or more diverse indication methods for designating a channel on which the STA is to respond with a CTS frame.

According to an embodiment of the present disclosure, an AP that transmits a trigger frame may indicate whether the AP has performed channel access on a primary channel or on a non-primary channel. More specifically, the trigger frame may include a subfield that is indicated with different values depending on whether the AP transmits the trigger frame after performing channel access on a primary 20 MHz channel or on a non-primary channel (another 20 MHz non-primary channel excluding the primary 20 MHz channel) transmits.

The AP may indicate, to STAs receiving the trigger frame, that the AP has performed channel access on the primary channel to transmit the trigger frame after, by configuring a specific subfield included in a Common Info field of the trigger frame to a specific value. When the AP has performed channel access on the non-primary channel, the AP may indicate that the AP has not performed channel access on the primary channel by configuring the specific subfield to a different value. In this case, when the specific subfield has a 1-bit size, the specific subfield may be configured to 0 to indicate that the AP has performed channel access on the primary channel, and may be configured to 1 to indicate that the AP has performed channel access on a channel other than the primary channel. When the specific subfield has a 2-bit size, the specific subfield may be configured to 0 to indicate that the AP has performed channel access on the primary channel, 1 to indicate that the AP has performed channel access on a first non-primary channel, 2 to indicate that the AP has performed channel access on a second non-primary channel, and 3 to indicate that the AP has performed channel access on a third non-primary channel. The first, second, and third non-primary channels may be subchannels located in different 80 MHz segments.

When the AP provides information about a channel on which the AP has performed channel access through the Common Info field of the trigger frame, the STA needs to interpret an RU Allocation subfield included in a User Info field thereof, based on the information about the channel on which the AP has performed channel access when interpreting the RU Allocation subfield. In other words, the STA having received the MU-RTS frame needs to utilize the information about the channel used for channel access indicated by the AP through the Common Info field and information indicated through the RU Allocation subfield of the User Info field of the STA together in order to identify a frequency band in which the STA is to respond with a CTS frame. A method for the STA to utilize the information indicated in the Common Info field and the information indicated through the RU Allocation subfield may briefly be described as obtaining a bandwidth in which a CTS frame is be transmitted in response through the RU Allocation subfield and identifying the location of a subchannel in which the CTS frame is transmitted in response based on the information indicated in the Common Info field.

For example, in a case where the RU Allocation subfield included in the User Info field of the STA is indicated with a value representing primary 80 MHz, when the channel on which the AP has performed channel access is indicated as the primary 20 MHz channel, the STA responds with a CTS frame on a primary 80 MHz channel, and when the channel on which the AP has performed channel access is indicated as a non-primary channel, the STA responds with a CTS frame on an 80 MHz channel located in an 80 MHz segment in which the non-primary channel is included.

Alternatively, the AP may indicate, through the User Info field of each STA, information about a frequency band and a location in which each STA is to respond with a CTS frame. That is, the AP may indicate an RU that does not include the primary 20 MHz channel by configuring an RU Allocation subfield included in the User Info field to a value other than 61 to 69. For example, the AP may configure the RU Allocation subfield to 71 to 74 to indicate a response with a CTS frame on one of four 20 MHz subchannels located in a secondary 80 MHz segment, may configure the RU Allocation subfield to 75 or 76 to indicate one of two 40 MHz channels located in the secondary 80 MHz segment, or may configure the RU Allocation subfield to 77 to indicate the secondary 80 MHz channel. That is, the RU Allocation subfield included in the User Info field of the MU-RTS trigger frame may have a function of indicating a frequency region except for the primary 20 MHz channel.

Alternatively, the RU Allocation subfield may be used according to the conventional configuration method, and by interpreting the RU Allocation subfield in combination with another subfield indicated in the User Info field, the AP may instruct the STA to respond with a CTS frame on a band that does not include the primary 20 MHz channel. For example, the AP may indicate a value corresponding to 20 MHz through the RU Allocation subfield (e.g., 61 to 64) and indicate a first 80 MHz segment through the specific subfield, thereby indicating a response with a CTS frame through a specific 20 MHz subchannel located in the first 80 MHz segment. That is, the STA may combine indicated segment information and indicated CTS frame response BW information, thereby determining subchannels on which the STA needs to respond with a CTS frame.

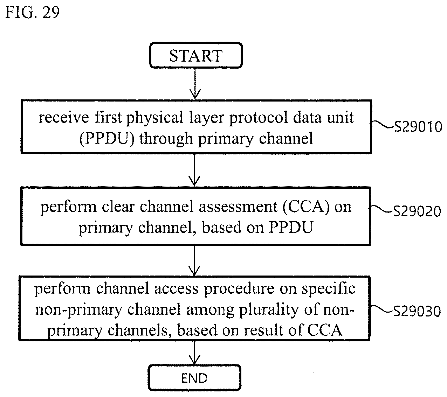

FIG. 29 is a flowchart illustrating an example of a channel access procedure performed by a terminal according to an embodiment of the present disclosure.

Referring to FIG. 29, when determining that a primary channel is busy, the terminal may perform a channel access procedure through a non-primary channel. The terminal may be an AP or a non-AP STA.

Specifically, the terminal may receive a first physical layer protocol data unit (PPDU) through a primary channel (primary link) (S29010). Subsequently, the terminal may measure the received signal strength of the PPDU, and may perform clear channel assessment (CCA) on the channel, based on the received signal strength (S29020).

When the primary channel is in an idle state, the terminal may perform a channel access procedure by using the primary channel. However, when the primary channel is in a busy state, the terminal may perform the channel access procedure on a specific non-primary channel among a plurality of non-primary channels, based on the result of the CCA (S29030).

Here, when the primary channel is determined to be busy as a result of the CCA and the first PPDU is transmitted from an overlapping basic service set (OBSS), the channel access procedure may be performed through the specific non-primary channel.

The terminal may receive a second PPDU through the specific non-primary channel after the channel access procedure. Here, the preamble of the first PPDU may include a length field related to the length of the first PPDU, and when the channel access procedure is performed through the specific non-primary channel, the length of the second PPDU may be the same as or shorter than the length of the first PPDU.

The preamble of the first PPDU may include a TXOP field related to the length of a first transmission opportunity (TXOP) based on the first PPDU, and the length of a second TXOP obtained through the channel access procedure through the specific non-primary channel may be the same as or shorter than the length of the first TXOP.

When the state of the primary channel is busy as a result of the CCA, the wireless communication terminal may perform an operation for the channel access procedure for a predetermined time in the specific non-primary channel.

A first operating channel of the primary channel and a second operating channel of the specific non-primary channel may partially or entirely overlap.

When the wireless communication terminal is the AP, the AP may transmit a specific frame to a receiving device after the channel access procedure. The specific frame may be transmitted first after the channel access procedure, and may have a preconfigured format.

The wireless communication terminal may receive the second PPDU through the specific non-primary channel after the channel access procedure. In this case, when the second PPDU occupies both the primary channel and the specific non-primary channel, a resource unit allocation subfield included in the second PPDU may be differently determined depending on whether a channel through which a transmitting device that has transmitted the second PPDU performs channel access is the primary channel or the specific non-primary channel.

When the channel access of the transmitting device is performed through the primary channel, the position of a resource unit allocated by the resource unit allocation subfield may be identified based on the primary channel other than the specific non-primary channel.

The foregoing description of the present disclosure is for illustration, and it will be understood by those skilled in the art to which the present disclosure pertains that the present disclosure is easily modifiable into other specific forms without changing the technical idea or essential features of the present disclosure. Therefore, the embodiments described above should be considered as illustrative in all aspects, and should not be construed as restrictive. For example, each component described in a single form may be implemented in a distributed manner, and likewise, components described as distributed may be implemented in a combined form.

The scope of the present disclosure should be construed as being defined by the appended claims rather than the detailed description above, and all changes or modified forms derived from the meaning and scope of the appended claims and equivalents thereof should be construed as being included in the scope of the present disclosure.

**Claims**

1. A wireless communication terminal comprising:

   a transceiver; and
   a processor,
   wherein the processor is configured to:

   receive a first physical layer protocol data unit (PPDU) through a primary channel (primary link);
   perform clear channel assessment (CCA) in the primary channel, based on the first PPDU; and
   perform a channel access procedure in a specific non-primary channel among a plurality of non-primary channels, based on a result of the CCA,
   wherein, when a state of the primary channel is determined to be busy as the result of the CCA and the first PPDU is transmitted from an overlapping basic service set (OBSS), the channel access procedure is performed through the specific non-primary channel.

2. The wireless communication terminal of claim 1, wherein the processor is configured to,

   receive a second PPDU through the specific non-primary channel after the channel access procedure,
   wherein the preamble of the first PPDU comprises a length field related to a length of the first PPDU, and
   wherein, when the channel access procedure is performed through the specific non-primary channel, a length of the second PPDU is equal to or shorter than the length of the first PPDU.

3. The wireless communication terminal of claim 1,

   wherein the preamble of the first PPDU comprises a TXOP field related to a length of a first transmission opportunity (TXOP) based on the first PPDU, and
   wherein a length of a second TXOP obtained by the channel access procedure through the specific non-primary channel is equal to or shorter than the length of the first TXOP.

4. The wireless communication terminal of claim 1,
wherein, when the primary channel is busy as the result of the CCA, the wireless communication terminal performs an operation for the channel access procedure in the specific non-primary channel for a predetermined period of time.

5. The wireless communication terminal of claim 1,
wherein a first operating channel of the primary channel and a second operating channel of the specific non-primary channel partially or entirely overlap.

6. The wireless communication terminal of claim 1,

wherein the processor is configured to transmit a specific frame to a receiving device after the channel access procedure, and
wherein the specific frame is transmitted first after the channel access procedure, and has a preconfigured format.

7. The wireless communication terminal of claim 1, wherein the processor is configured to

receive a second PPDU through the specific non-primary channel after the channel access procedure,
wherein, in case that the second PPDU occupies both the primary channel and the specific non-primary channel, a resource unit allocation subfield included in the second PPDU is differently determined depending on whether a channel through which a transmitting device transmitting the second PPDU has performed channel access is the primary channel or the specific non-primary channel.

8. The wireless communication terminal of claim 7,
wherein, when the channel access of the transmitting device has been performed through the primary channel, a position of a resource unit allocated by the resource unit allocation subfield is identified based on the primary channel, rather than the specific non-primary channel.

9. A method performed by a wireless communication terminal, the method comprising:

receiving a first physical layer protocol data unit (PPDU) through a primary channel (primary link);
performing clear channel assessment (CCA) in the primary channel, based on the first PPDU; and
performing a channel access procedure in a specific non-primary channel among a plurality of non-primary channels, based on a result of the CCA,
wherein, when the primary channel is determined to be busy as the result of the CCA and the first PPDU is transmitted from an overlapping basic service set (OBSS), the channel access procedure is performed through the specific non-primary channel.

10. The method of claim 9, further comprising:

receiving a second PPDU through the specific non-primary channel after the channel access procedure,
wherein the preamble of the first PPDU comprises a length field related to a length of the first PPDU, and
wherein, when the channel access procedure is performed through the specific non-primary channel, a length of the second PPDU is equal to or shorter than the length of the first PPDU.

11. The method of claim 9,

wherein the preamble of the first PPDU comprises a TXOP field related to a length of a first transmission opportunity (TXOP) based on the first PPDU, and
wherein a length of a second TXOP obtained by the channel access procedure through the specific non-primary channel is equal to or shorter than the length of the first TXOP.

12. The method of claim 9,
wherein, when a state of the primary channel is busy as the result of the CCA, the wireless communication terminal performs an operation for the channel access procedure in the specific non-primary channel for a predetermined period of time.

13. The method of claim 9,
wherein a first operating channel of the primary channel and a second operating channel of the specific non-primary channel partially or entirely overlap.

14. The method of claim 9, further comprising

transmitting a specific frame to a receiving device after the channel access procedure,
wherein the specific frame is transmitted first after the channel access procedure, and has a preconfigured format.

15. The method of claim 9, further comprising:

receiving a second PPDU through the specific non-primary channel after the channel access procedure,
wherein, when the second PPDU occupies both the primary channel and the specific non-primary channel, a resource unit allocation subfield included in the second PPDU is differently determined depending on whether a channel through which a transmitting device transmitting the second PPDU has performed channel access is the primary channel or the specific non-primary channel.

16. The method of claim 16,
wherein, when the channel access of the transmitting device is performed through the primary channel, a position of a resource unit allocated by the resource unit allocation subfield is identified based on the primary channel, rather the specific non-primary channel.

FIG. 1

FIG. 2

FIG. 3

FIG. 4

200

210

Communication Unit

Processor

Memory

220

260

FIG. 5

FIG. 6

FIG. 7

(a) 11a/g PPDU | L-STF | L-LTF | L-SIG | SVC | MPDU | TAIL

mod3=1,2

(b) 11ax HE PPDU | L-STF | L-LTF | L-SIG | RL-SIG | HE-SIG-A | HE-SIG-B | HE-STF | HE-LTF | SVC | MPDU | TAIL

B  B  B  B/Q

mod3=0

(c) EHT/UHR PPDU | L-STF | L-LTF | L-SIG | RL-SIG | U-SIG | EHT/UHR-SIG | STF | LTF | SVC | MPDU | TAIL

B  B  B  B

Reserved

(d) L-SIG RL-SIG | L_RATE (4b) | L_LENGTH (12b) | Parity | Tail (6b)

UL/DL(1b)

(e) U-SIG | PHY VER (3b) | BSS Color (6b+a) | TXOP (7b+a) | BW (4b) | TBD | PPDU Format (2b) | Format-specific field | CRC (3b) | Tail (6b)

Version independent field        Version dependent field

FIG. 8

(a) EHT/UHR SU PPDU

| L-STF | L-LTF | L-SIG | RL-SIG | U-SIG | EHT/UHR-SIG | EHT-STF | EHT-LTF | SVC | MPDU | TAIL |

(b) EHT/UHR TB PPDU

| L-STF | L-LTF | L-SIG | RL-SIG | U-SIG | EHT-STF | EHT-LTF | SVC | MPDU | TAIL |

(c) EHT/UHR MU PPDU

| L-STF | L-LTF | L-SIG | RL-SIG | U-SIG | EHT-SIG-B | EHT-STF | EHT-LTF | SVC | MPDU | TAIL |

(d) EHT/UHR ER SU PPDU

| L-STF | L-LTF | L-SIG | RL-SIG | U-SIG | EHT-SIG-A | EHT-SIG-A | EHT-STF | EHT-LTF | SVC | MPDU | TAIL |

FIG. 9

FIG. 10

AP    MU-RTS    DL MU PPDU (to STA1 & STA2)

STA1    CTS    ACK

STA2    CTS    ACK

AP_Neighbor    NAV (MU-RTS)

STA1_Neighbor    NAV (CTS from STA1)

STA2_Neighbor    NAV (CTS from STA2)

EP 4 750 212 A1

60

FIG. 11

Table 10-1—UP-to-AC mappings

| Priority | UP (Same as IEEE 802.1D user priority) | IEEE 802.1D designation | AC | Transmit queue (dot11Alternate-EDCAActivated false or not present) | Transmit queue (dot11Alternate EDCAActivated true) | Designation(M138) |
|---|---|---|---|---|---|---|
| Lowest | 1 | BK | AC_BK | BK | BK | Background |
| | 2 | — | AC_BK | BK | BK | Background |
| | 0 | BE | AC_BE | BE | BE | Best Effort |
| | 3 | EE | AC_BE | BE | BE | Best Effort |
| | 4 | CL | AC_VI | VI | A_VI | Video (alternate) |
| | 5 | VI | AC_VI | VI | VI | Video (primary) |
| | 6 | VO | AC_VO | VO | VO | Voice (primary) |
| Highest | 7 | NC | AC_VO | VO | A_VO | Voice (alternate) |

FIG. 12

(b) common backoff CW

(a) separate backoff CW (each channel)

FIG. 13

restriction on length of
PPDU transmitting S20
channel access

80 MHz

S20_3

S20_2

S20_1

P20

PIFS

PIFS

DIFS

2 1 0

PPDU to STA(s)

Pre-amble

5 4 3

OBSS PPDU

Length info
Or TXOP info

OBSS PPDU
ending time

FIG. 14

TXOP is initiated through non-primary channel access
(length is restricted depending on OBSS TXOP)

Secondary 80 MHz subblock

S20

PIFS | PIFS | PIFS

Tx RTS/ MU- RTS/ BSRP

Rx CTS/ BSR

Tx Frame exchanges on the secondary channels(subblocks)

MediumSync time (IDLE)  2/1/0

Tx RTS/ MU- RTS/ BSRP

MediumSync time (IDLE)  4/3/2/1/0

Primary 80 MHz subblock

P20

OBSS TXOP

5/4/3

Rx RTS/CTS frame(s)

Length info Or TXOP info

OBSS TXOP end time

MU-RTS : Multi-User RTS
BSRP : Buffer Status Report Poll
BSR : Buffer Status Report

FIG. 15

FIG. 16

**AP MLD (multi-link device)**

| AP1 | AP2 | AP3 |
|---|---|---|

Primary AP(Link)     Auxiliary AP(Link)

**(a) AP MLD configuration**

| P20 | P 80 | S 80 | S160 |
|---|---|---|---|

Primary AP

| | S 80 | P 80 | |
|---|---|---|---|
| | S160 | | P20 |

Auxiliary AP

**(b-1) Fully overlapped operating channel**

| S160 | S 80 | P 80 | P20 |
|---|---|---|---|

Primary AP

| P 80 | S 80 | P20 |
|---|---|---|

Auxiliary AP

**(b-2) Partially overlapped operating channel Type1**

| S160 | S 80 | P 80 | P20 |
|---|---|---|---|

Primary AP

| S160 | P 80 | S 80 | P20 |
|---|---|---|---|

Auxiliary AP

**(b-3) Partially overlapped operating channel Type2**

FIG. 17

FIG. 18

| - TBTT information field Type != 0 |
| - TBTT Information Length = 3 |

| Includes MLD Parameters subfield |

| Element ID | Length | Neighbor AP Information Fields |

| TBTT Information Header | Operating Class | Channel Number | TBTT Information Set |

**(a) Reduced Neighbor Report element format**

**(b) Neighbor AP Information field form at corresponding to the Auxiliary AP**

| AP MLD ID | Link ID (recommend ed to use highest available value) | Link ID of Primary Link | Reserved | All Updates Includes | Disabled Link Indication | Auxiliary Link Indication | Separated Radio |
|---|---|---|---|---|---|---|---|
| Bits: 8 | 4 | 4 | 4 | 1 | 1 | 1 | 1 |

**(c) MLD Parameters subfield**

FIG. 19

EP 4 750 212 A1

| Element ID | Length | Neighbor AP Information Fields |
|---|---|---|

**(a) Reduced Neighbor Report element format**

```
- TBTT information field Type != 0
- TBTT Information Length = 3
```

```
Includes MLD Parameters subfield
```

| TBTT Information Header | Operating Class | Channel Number | TBTT Information Set |
|---|---|---|---|

**(b) Neighbor AP Information field form at corresponding to the Auxiliary AP**

| AP MLD ID | Link ID (recommend ed to use highest available value) | Link ID of Primary Link | Reserved | All Updates Includes | Disabled Link Indication | Auxiliary Link Indication | Separated Radio |
|---|---|---|---|---|---|---|---|
| Bits:  8 | 4 | 4 | 4 | 1 | 1 | 1 | 1 |

**(c) MLD Parameters subfield**

FIG. 20

**AP MLD
(multi-link device)**

| AP1 | AP2 | AP3 |

Primary
AP(Link)

Auxiliary
AP(Link)

## (a) AP MLD configuration

## (b) Continuous operating channel

FIG. 21

EP 4 750 212 A1

Auxiliary Link
(nonprimary link)

Primary Link

A20  /1/0/0/   160 (80+80) MHz TXOP
(TXOP1)   /2/1/0/   80 MHz TXOP
(TXOP2)   /5/4/3/2/1/0

P20  /2/1/0/   OBSS TXOP   /2/1/0/   80 MHz TXOP
(TXOP3)

P20 : Primary 20 MHz of Primary AP

A20 : Primary 20 MHz of Auxiliary AP
(Auxiliary 20 MHz)

Tx on both Primary and Auxiliary
links

Tx on Auxiliary link

Tx on Primary link

FIG. 22

(a) RU Allocation status

(b) RU Allocation subfields & User specific fields

(c) Content channel location

FIG. 23

CCA result on the primary channel

AP: IDLE
STA: BUSY

Case 1

CCA result on the primary channel

AP: BUSY
STA: BUSY

Case 2

FIG. 24

STA interprets it's RU is on the 20MHz #5

| 20MHz #8 |
| 20MHz #7 |
| 20MHz #6 |
| 20MHz #5 |
| 20MHz #4 |
| 20MHz #3 |
| 20MHz #2 |
| 20MHz #1 |

DL MU PPDU
(160 MHz)

S80 channel
S20

P80 channel
(Indicated as Punctured)
P20

STA's point of view

AP allocates an RU on the 20MHz #1 to the STA

| 20MHz #4 |
| 20MHz #3 |
| 20MHz #2 |
| 20MHz #1 |

DL MU PPDU
(80 MHz)

S80 channel
S20

P80 channel
P20

Actual PPDU transmission of the AP

FIG. 25

FIG. 26

MAC Header

| Frame Control | Duration | RA | TA | Common Info | User Info List | Padding | FCS |
|---|---|---|---|---|---|---|---|

Octets: 2    2    6    6    8 or more    variable    variable    4

**Trigger frame format**

FIG. 27

| B0  B3 | B4  B15 | B16 | B17 | B18 B19 | B20       B21 | B22 | B23         B25 |
|---|---|---|---|---|---|---|---|
| Trigger Type | UL Length | More TF | CS Required | UL BW | GI And HE/EHT-LTF Type/Triggered TXOP Sharing Mode | MU-MIMO HE-LTF Mode | Number Of HE/EHT-LTF Symbols |

Bits:     4        12       1        1        2          2         1        3

| B26 | B27 | B28 33 | B34  B35 | B36 | B37  B52 | B53 | B54 | B55 |
|---|---|---|---|---|---|---|---|---|
| Reserved | LDPC Extra Symbol Segment | AP Tx Power | Pre-FEC Padding Factor | PE Disambiguity | UL Spatial Reuse | Reserved | HE/EHT P160 | Special User Info Field Present |

Bits:     1        1        6        2        1        16        1        1        1

| B56     B62 | B63 | |
|---|---|---|
| EHT Reserved | Reserved | Trigger Dependent Common Info |

Bits:     7        1        variable

## Common Info field format
## (EHT variant)

FIG. 28

| B0  B11 | B12        B19 | B20 | B21  B24 | B25 | B26        B31 | B32  B38 | B39 | |
|---------|---------------|-----|----------|-----|----------------|----------|-----|---|
| AID12 | RU Allocation | UL FEC Coding Type | UL EHT-MCS | Reserved | SS Allocation/RA-RU Infor-mation | UL Target Receive Power | PS160 | Trigger Dependent User Info |

Bits:  12           8              1            4           1                 6                    7              1         variable

**User Info field format
(EHT variant)**

FIG. 29

```
                    ┌──────────────┐
                    │    START     │
                    └──────┬───────┘
                           ↓
    ┌──────────────────────────────────────────┐
    │  receive first physical layer protocol    │
    │  data unit                                 │~S29010
    │  (PPDU) through primary channel            │
    └──────────────────┬─────────────────────────┘
                       ↓
    ┌──────────────────────────────────────────┐
    │  perform clear channel assessment (CCA) on │~S29020
    │  primary channel, based on PPDU            │
    └──────────────────┬─────────────────────────┘
                       ↓
    ┌──────────────────────────────────────────┐
    │  perform channel access procedure on       │
    │  specific non-primary channel among        │~S29030
    │  plurality of non-primary channels,        │
    │  based on result of CCA                    │
    └──────────────────┬─────────────────────────┘
                       ↓
                 ┌───────────┐
                 │    END     │
                 └───────────┘
```

## INTERNATIONAL SEARCH REPORT

| International application No. |
| --- |
| **PCT/KR2024/010400** |

| A. | CLASSIFICATION OF SUBJECT MATTER |
| --- | --- |

**H04W 74/0816**(2024.01)i; **H04W 76/15**(2018.01)i; **H04W 84/12**(2009.01)i; **H04L 5/00**(2006.01)i; **H04W 76/11**(2018.01)i; **H04W 72/52**(2023.01)i; **H04W 74/04**(2009.01)i

According to International Patent Classification (IPC) or to both national classification and IPC

| B. | FIELDS SEARCHED |
| --- | --- |

Minimum documentation searched (classification system followed by classification symbols)

H04W 74/0816(2024.01); H04W 72/04(2009.01); H04W 74/08(2009.01); H04W 76/15(2018.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 주 채널(primary channel), 부 채널(non-primary channel), PPDU, CCA, 채널 접속 (channel access), OBSS

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022-224084 A1 (SONY GROUP CORPORATION) 27 October 2022 (2022-10-27) See paragraphs [0007]-[0009], [0042], [0060]-[0067], [0080], [0092], [0104]-[0105] and [0208]-[0215]. | 1-6,9-14 |
| A | | 7-8,15-16 |
| A | US 2021-0400728 A1 (MEDIATEK INC.) 23 December 2021 (2021-12-23) See paragraphs [0031]-[0060] and figure 7. | 1-16 |
| A | VERMA, Sindhu et al. Non-Primary Channel Utilization Follow-up. doc.: IEEE 802.11-23/1288r0. 13 July 2023. See slides 1-24. | 1-16 |
| A | RYU, Kiseon et al. TXOP Protection of Non-Primary Channel. doc.: IEEE 802.11-23/0285r0. 10 April 2023. See slides 1-10. | 1-16 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 November 2024** | **04 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/010400**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0005864 A (WILUS INSTITUTE OF STANDARDS AND TECHNOLOGY INC.) 10 January 2023 (2023-01-10)<br>See paragraphs [0077] and [0088]-[0089]. | 1-16 |

Form PCT/ISA/210 (second sheet) (July 2022)

### INTERNATIONAL SEARCH REPORT
Information on patent family members

International application No.

**PCT/KR2024/010400**

| Patent document cited in search report | | | Publication date (day/month/year) | Patent family member(s) | | | Publication date (day/month/year) |
|---|---|---|---|---|---|---|---|
| WO | 2022-224084 | A1 | 27 October 2022 | CN | 116368914 | A | 30 June 2023 |
| | | | | EP | 4305918 | A1 | 17 January 2024 |
| | | | | JP | 2024-517426 | A | 22 April 2024 |
| | | | | KR | 10-2023-0152756 | A | 03 November 2023 |
| | | | | US | 2022-0345973 | A1 | 27 October 2022 |
| US | 2021-0400728 | A1 | 23 December 2021 | CN | 113839741 | A | 24 December 2021 |
| | | | | US | 11737141 | B2 | 22 August 2023 |
| KR | 10-2023-0005864 | A | 10 January 2023 | CN | 115516789 | A | 23 December 2022 |
| | | | | EP | 4149030 | A1 | 15 March 2023 |
| | | | | EP | 4149030 | A4 | 01 November 2023 |
| | | | | JP | 2023-524583 | A | 12 June 2023 |
| | | | | US | 2023-0354273 | A1 | 02 November 2023 |
| | | | | WO | 2021-225388 | A1 | 11 November 2021 |

Form PCT/ISA/210 (patent family annex) (July 2022)